(19) Europäisches Patentamt
European Patent Office
Office européen des brevets

(11) **EP 4 704 419 A1**

(12) **EUROPEAN PATENT APPLICATION**

(43) Date of publication:
**04.03.2026 Bulletin 2026/10**

(21) Application number: **24315398.8**

(22) Date of filing: **30.08.2024**

(51) International Patent Classification (IPC):
***H04N 19/597*** *(2014.01)* ***H04N 19/70*** *(2014.01)*
***H04N 19/98*** *(2014.01)*

(52) Cooperative Patent Classification (CPC):
**H04N 19/597; H04N 19/70; H04N 19/98**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Beijing Xiaomi Mobile Software Co., Ltd.**
**Beijing Beijing 100085 (CN)**

(72) Inventors:
- **Alexiou, Evangelos**
  **Beijing, 100085 (CN)**
- **Thomas, Emmanuel**
  **Beijing, 100085 (CN)**
- **Potetsianakis, Emmanouil**
  **Beijing, 100085 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS FOR PROCESSING AN IMAGE**

(57) A method of processing comprising a plurality of samples having sample values associated therewith, wherein the sample values have a first bit depth representing a first range, comprises: obtaining a plurality of sub-ranges of the first range, wherein lengths of the sub-ranges are smaller than a length of the first range; generating association information, which associates each of the sample values with one of the sub-ranges; and determining a transformed representation of the image based on the sample values and based on the sub-range associated with each of the sample values, and wherein the transformed representation comprises a transformed sample value for one of the samples of the image.

100
processing an image comprising a plurality of samples having sample values associated therewith, wherein the sample values have a first bit depth representing a first range
obtaining a plurality of sub-ranges of the first range, wherein lengths of the sub-ranges are smaller than a length of the first range
101
generating association information which associates each of the sample values with one of the sub-ranges
102
determining a transformed representation of the image based on sample values and based on the sub-range associated with each of the sample values, and wherein the transformed representation comprises a transformed sample value for one of the samples of the image
103

Fig. 10

EP 4 704 419 A1

## Description

## Technical Field

The present disclosure generally relates to the field of image processing, e.g., transforming and/or encoding/-decoding an image such as pictures or videos, and in particular depth images and depth videos, and embodiments of the present disclosure concern the encoding/decoding of an image having sample values with a first bit depth by transforming the image to one or more image having a second bit depth. More specific embodiments of the present disclosure relate to depth coding using depth sub-ranges.

## Background

Depth values of depth images have often high bit depth, e.g., compared to common bit depths of texture images. The encoding of such images with high bit depth is therefore challenging because of the lack of support for such high bit depth, especially in hardware chipsets.

Thus, there is a need to provide a concept for processing/encoding/reconstructing an image, which provides an improved trade-off between coding complexity, rate-distortion relation, and ability to process/encode/reconstruct an image of a high bit depth.

## Summary

The present invention provides a method of processing an image, wherein the image comprise a plurality of samples having sample values associated therewith, and wherein the sample values have a first bit depth representing a first range, the method comprising:

obtaining a plurality of sub-ranges of the first range, wherein lengths of the sub-ranges are smaller than a length of the first range;
generating association information, which associates each of the sample values with one of the sub-ranges; and
determining a transformed representation of the image based on the sample values and based on the sub-range associated with each of the sample values, and wherein the transformed representation comprises a transformed sample value for one of the samples of the image.

Optionally, the transformed representation may be determined by assigning, to one of the sample values, a transformed sample value out of a set of transformed sample values of the sub-range associated with the sample value.

Optionally, the method further comprises:

encoding the transformed representation to obtain encoded image data, and
providing the encoded image data in a data stream or a data file.

Optionally, the method further comprises:

selecting one or more of the plurality of sub-ranges as out-of-bound sub-ranges, and

assigning, to each of the sample values, which sample values are associated with one of the out-of-bound sub-ranges, a predetermined transformed sample value.

The present invention provides a method of reconstructing an image, wherein the image comprises a plurality of samples having sample values associated therewith, and wherein the sample values have a first bit depth representing a first range, the method comprising:

obtaining association information, which associates each of the sample values with one of a plurality of sub-ranges, wherein lengths of the sub-ranges are smaller than a length of the first range;
obtaining a transformed representation of the image, the transformed representation comprising a transformed sample value for one of the samples of the image,
reconstructing the image by deriving the sample value for the one sample based on the transformed sample value for the one sample and based on the sub-range associated with the sample value.

Optionally, the method further comprises:

deriving an indication of the sub-ranges from a data stream or data file.

Optionally, the indication of the sub-ranges comprises, for each of the sub-ranges, a type indicator, which indicates whether the sub-range is in-bound or out-of-bound.

Optionally, the method further comprises:

deriving the transformed representation and the association information from a data stream, wherein the association information is signalled in a payload packet of the data stream, which payload packet is interspersed between payload packets signalling encoded image data, or
deriving the transformed representation and the association information from a data file, wherein the association information is signalled in a track of the data file.

Optionally, the method further comprises deriving the transformed representation and the association information from a data stream or data file, wherein the data stream or data file comprises a multi-layered video representation, and wherein

the transformed representation is signalled in a first layer of the multi-layered video representation and wherein the association information is signalled in a second layer of the multi-layered video representation, or
the transformed representation and the association information are obtained from the data stream or data file using a decoding scheme for composite pictures by decoding the transformed representation as a first component of the composite picture and the association information as a second component of the composite picture.

Optionally, the sub-ranges are non-overlapping and/or wherein the sub-ranges have equal lengths.

Optionally, a concatenation of the sub-ranges equals the first range.

The present invention provides an apparatus for processing an image, wherein the image comprises a plurality of samples having sample values associated therewith, and wherein the sample values have a first bit depth representing a first range, the apparatus being configured for:

obtaining a plurality of sub-ranges of the first range, wherein lengths of the sub-ranges are smaller than a length of the first range,
generating association information, which associates each of the sample values with one of the sub-ranges,
determining a transformed representation of the image based on the sample values and based on the sub-range associated with each of the sample values, and wherein the transformed representation comprises a transformed sample value for one of the samples of the image.

The present invention provides an apparatus for reconstructing an image, wherein the image comprises a plurality of samples having sample values associated therewith, and wherein the sample values have a first bit depth representing a first range, the apparatus being configured for:

obtaining association information, which associates each of the sample values with one of a plurality of sub-ranges, wherein lengths of the sub-ranges are smaller than a length of the first range;
obtaining a transformed representation of the image, the transformed representation comprising a transformed sample value for one of the samples of the image,
reconstructing the image by deriving the sample value for the one sample based on the transformed sample value for the one sample and based on the sub-range associated with the sample value.

The present invention provides a non-transitory computer-readable storage medium comprising instructions which, when executed by a computer, cause the computer to carry out the inventive.

The present invention provides a data stream having encoded thereinto an image, wherein the image comprises a plurality of samples having sample values associated therewith, wherein the sample values have a first bit depth representing a first range, the image being encoded into the data stream by:

obtaining a plurality of sub-ranges of the first range, wherein lengths of the sub-ranges are smaller than a length of the first range;
generating association information, which associates each of the sample values with one of the sub-ranges,
determining a transformed representation of the image based on the sample values and based on the sub-range associated with each of the sample values, and wherein the transformed representation comprises a transformed sample value for one of the samples of the image, and
encoding the transformed representation and association information, which indicates the association between the sample values and the sub-ranges, into the data stream.

The present invention provides a digital storage medium having stored thereon a data file, the data file having encoded thereinto an image, wherein the image comprises a plurality of samples having sample values associated therewith, and wherein the sample values have a first bit depth representing a first range, the image being encoded into a data stream by:

obtaining a plurality of sub-ranges of the first range, wherein lengths of the sub-ranges are smaller than a length of the first range;
generating association information, which associates each of the sample values with one of the sub-ranges,
determining a transformed representation of the image based on the sample values and based on the sub-range associated with each of the sample values, and wherein the transformed representation comprises a transformed sample value for one of the samples of the image, and
encoding the transformed representation into the data stream and association information, which indicates the association between the sample values and the sub-ranges, into the data file.

It is to be understood that the content described in this section is not intended to identify key or critical features of the embodiment of the present disclosure, nor is it intended to limit the scope of the present disclosure. Other features of the present disclosure become readily apparent from the following description.

**Brief Description of the Drawings**

The drawings are explanatory and serve to explain the present disclosure, and are not to be construed to limit the present disclosure to the illustrated embodiments.

Fig. 1 illustrates an example of depth value representation;
Fig. 2 shows examples of a depth image and a colour image;
Fig. 3 illustrates an example of depth and colour camera positions and coordinate systems;
Fig. 4 illustrates an example of depth and colour cameras field of views;
Fig. 5 illustrates an example of an image transformation;
Fig. 6 illustrates an example of a RGBD image;
Fig. 7 illustrates extensions of MPEG video codecs;
Fig. 8 illustrates a conventional colourized depth image;
Fig. 9 illustrates a flowchart of a conventional depth map encoding;
Fig. 10 illustrates a flowchart of a method of processing an image according to an embodiment,
Fig. 11 illustrates a flowchart of a method of reconstructing an image according to an embodiment,
Fig. 12 illustrates a convectional application scenario;
Fig. 13 illustrates a system for an application scenario according to an embodiment;
Fig. 14 illustrates a flowchart of an encoding pipeline according to an embodiment;
Fig. 15 illustrates a decomposition of a schematic depth image according to an embodiment;
Fig. 16 illustrates a decomposition of a real-life depth image according to an embodiment;
Fig. 17 illustrates an exemplary code for the encoder side according to an embodiment;
Fig. 18 illustrates an exemplary code for the decoding side according to an embodiment;
Fig. 19 illustrates examples of conventional chroma subsampling formats;
Fig. 20 illustrates an embodiment of YUV 4:4:4 chroma format, with U component carrying the source depth sub-ranges integer mask sample values;
Fig. 21 illustrates an embodiment of YUV 4:4:4 chroma format, with V component carrying the source depth sub-ranges integer mask sample values;
.Fig. 22 illustrates an embodiment of YUV 4:4:4 chroma format, with U and V components carrying the source depth sub-ranges integer mask sample values, after splitting them based on bit significance;
Fig. 23 illustrates an embodiment of YUV 4:4:4 chroma format, with U component carrying the source depth sub-ranges integer mask sample values, after mapping to destination values.;
Fig. 24 illustrates an embodiment of YUV 4:2:2 chroma format, with U and V components carrying the even and odd columns of the source depth sub-ranges integer mask, respectively.;
Fig. 25 illustrates an embodiment of YUV 4:2:2 chroma format, with U and V components carrying the odd and even columns of the source depth sub-ranges integer mask, respectively;
Fig. 26 illustrates an embodiment of YUV 4:2:2 chroma format, with U component carrying symbols that correspond to combinations of two successive source depth sub-ranges integer mask sample values in horizontal order.;

Fig. 27 illustrates an embodiment of YUV 4:2:2 chroma format, with U component carrying symbols that correspond to combinations of two successive source depth sub-ranges integer mask sample values in horizontal order, after mapping to destination values;

Fig. 28 illustrates an embodiment of YUV 4:2:0 chroma format, with U and V components carrying symbols that correspond to combinations of two successive source depth sub-ranges integer mask sample values in vertical order from odd and even columns, respectively;

Fig. 29 illustrates an embodiment of YUV 4:2:0 chroma format, with U and V components carrying symbols that correspond to combinations of two successive source depth sub-ranges integer mask sample values in horizontal order from odd and even rows, respectively;

Fig. 30 illustrates an embodiment of YUV 4:2:0 chroma format, with U and V components carrying symbols that correspond to combinations of two successive source depth sub-ranges integer mask sample values in vertical order from the first and the second half of the M plane, respectively, after vertical split in the middle;

Fig. 31 illustrates an embodiment of YUV 4:2:0 chroma format, with U and V components carrying symbols that correspond to combinations of two successive source depth sub-ranges integer mask sample values in vertical order from odd and even columns, respectively, after mapping to destination values;

Fig. 32 illustrates a schematic representation of Y, U, and V components;

Fig. 33 illustrates an exemplary association between Y, U, and V components;

Fig. 34 illustrates an ISOBMFF file with a metadata track according to an embodiment;

Fig. 35 illustrates an ISOBMFF file with a video auxiliary track according to an embodiment;

Fig.36 illustrates an ISOBMFF file with a video auxiliary track and untimed metadata according to an embodiment;

Fig. 37 illustrates a comparison between prior art and an embodiment;

Fig. 38 illustrates a block diagram of an apparatus for processing an image according to an embodiment;

Fig. 39 illustrates a block diagram of an apparatus for reconstructing an image according to an embodiment;

Fig. 40 illustrates a data stream in accordance with embodiments of the present disclosure; and

Fig. 41 illustrates a block diagram illustrating an electronic device according to embodiments of the present disclosure.

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the term "image" or "image representation" may refer to a 2D array of samples, with each sample corresponding to a discrete point in the 3D space, and the sample value representing an intensity value.

In the present disclosure, the term "depth value" may refer to a distance of a given point in 3D space relative to an origin, as measured along a certain direction.

In the present disclosure, the term "depth data" may refer to a collection of depth values.

In the present disclosure, the term "depth image" may refer to an image representation of depth data; each sample is associated with a depth value with each sample corresponding to a discrete point in the 3D space, and the sample value representing the depth value of that point.

In the present disclosure, the term "RGB image" may refer to an image representation of RGB colour data; each sample is associated with a colour (RGB) value.

In the present disclosure, the term "RGBD image" may refer to an image representation of spatio-temporally aligned RGBD data; each sample is associated with a colour (RGB) and a depth (D) value.

Depth information is becoming increasingly relevant in modern imaging systems, facilitating the analysis of 3D scenes in extended Reality (XR) applications, computer vision tasks, and robotic systems.

Depth data consist of a collection of depth values, each indicating the distance of a point in the scene from a reference point or plane (e.g., camera centre, or camera plane defined by the camera's position). Depth data are commonly represented by image representations, namely, depth images, although entirely different formats could be used, such as series/arrays of XYZ coordinates. Colour information is often carried alongside depth data. In this case, the term RGBD is common, with RGB indicating colour components (Red Green Blue) and D depth data.

There is a wide variety of technologies to obtain depth data, including depth sensing and depth estimation methods implemented by physical cameras, virtual cameras or Artificial Intelligence (AI) models, in real or simulated environments. The most mature methods for commercial, physical devices nowadays are stereo vision, motion stereo, structured light, time-of-flight, and Light Detection And Ranging (LiDAR). Each method has its working principle, with some retrieving directly depth data (e.g., time-of-flight and LiDAR), while others estimating them based on texture images (e.g., stereo vision, motion stereo and structured light). Data-driven solutions using AI models have become a notable alternative for depth estimation in recent years, gaining momentum. These models are designed to perform tasks related to the inference, completion or generation of depth data, often relying on some input texture or depth information.

Compression of the depth data is required to decrease data size requirements for storage and transmission. Existing encoding methods for depth data exploit their specific characteristics, such as the presence of smooth areas (e.g., foreground objects) and sharp discontinuities (e.g., occlusions), which are determined by some type of scene decomposition (e.g., object boundaries detection) followed by encoding of corresponding regions. There are other methods employing generic compression principles, thus, without making any assumptions about the nature/distribution of the depth data. Alternative methods propose colour space transformations to exploit existing image/video infrastructure, while others introduce new modules to extend existing image/video coding architectures.

In the following, definitions of terms that are used in the context of this invention are provided.

Depth data comprise depth values, with each depth value denoting a distance of a given point in 3D space relative to an origin, as measured along a certain direction.

The direction is often defined either as a line between a point and a plane, or as a line between two points. Depending on the direction, different distances are computed. Among other ways, the direction could be determined by the selection of the origin, which could be set either as the camera plane or the camera centre. In the former case, the depth data represent perpendicular distances ("The perpendicular distance between two objects is the distance from one to the other, measured along a line that is perpendicular to one or both", from [1].), while in the latter case, the depth data represent Euclidean distances.

Depth data convey the topological information of a scene as captured from a specific viewpoint, enabling to infer obstructions and occlusions of the scene. Depth values can be obtained only for points of the scene that can be connected with the camera centre through unobstructed lines (i.e., scene points that are in the line-of-sight of the camera and are not occluded).

NOTE: We use the term "camera", considering that depth data could be obtained through sensing using a "depth camera", or through estimation using a "colour camera".

A depth image is defined as an image representation of depth data. A depth image comprises a 2D array of samples, with each sample corresponding to a discrete point in the 3D space, and the sample value representing the depth value of that point.

Depth data are commonly represented by floating point numbers and are often quantized to limit storage requirements and to adapt to binary format constraints. Depth images are most commonly encoded as grayscale (monocomponent) images at a specific bit depth. In this case, different intensities of grey are used to indicate different (quantized) depth values (e.g., white colour could indicate that a point is nearby and black that is far away). Depth images could also be encoded as colour (three-component) images at a specific bit depth. In this case, different colours could be used to indicate different (quantized) depth values. Alternatively, different colours could be used to indicate semantically different objects and different brightness levels could be used to indicate different (quantized) depth values.

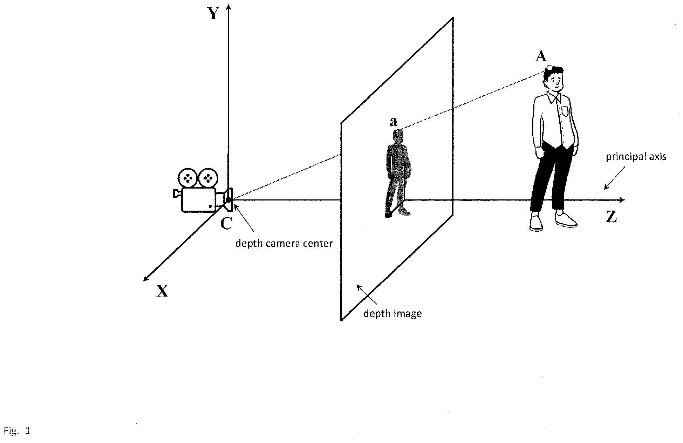

Fig. 1 presents an example of capturing a depth image of a physical environment using a depth camera, assuming an ideal pinhole camera model. In this example, given a point **A** on the observed real-world geometry and a corresponding sample **a** in the depth image, the value at **a** is set equal to their perpendicular distance. This is obtained as the length of **CA** projected onto the principal axis **Z**, or equivalently the z-coordinate of **A** relative to the depth camera centre **C.** There are other distances that can be used to set the value of **a**, such as the Euclidean distance of **CA.** However, the perpendicular distance is more commonly used. In other words, Fig. 1 illustrates depth values in a depth image (modified from [2]).

A depth image typically corresponds to depth data obtained at a specific time instance. If consecutive depth images are obtained over time, they are typically arranged in the form of a depth video. The spatial resolution (i.e., the number of samples) and the bit depth (i.e., the number of bits per sample value) of a depth image depend on the camera's specifications, in corresponding trade-offs between data size and data precision. For spatial resolution, the dimensions range between 160x120 and 640x480 in ARCore [3], 424x240 and 1280x720 in Intel RealSense D400 series [4], and 640x576 and 1024x1024 in Microsoft Azure Kinect [5]. For bit depth, the 16-bit unsigned integer representation is the most popular choice among all devices (e.g., ARCore [3], Intel RealSense D400 series [4], and Microsoft Azure Kinect [5]).

NOTE: In the following sections, the terms "depth map" and "depthmap" are used interchangeably to refer to a "depth image", as defined in the current section.

NOTE: In the following sections the term "depth image" is used, but the terms shall include "range image", "disparity image" or "disparity map", which may be used in literature for alternative definitions of depth maps.

NOTE: In the following sections, the term "source depth image" refers to a depth image that contains raw depth values as captured or estimated by the source (e.g., floating point numbers), without introducing any processing that would alter the spatial resolution (e.g., downsampling, downscaling) or bit depth granularity (e.g., quantization). It is considered that even if the raw depth data are originally represented in a different format (e.g., series/arrays of XYZ coordinates), a "source depth image" can be obtained by mapping all raw depth values in a suitable 2D array of samples, with each sample value representing the corresponding raw depth value at the original bit depth.

An RGBD image is defined as an image representation of spatio-temporally aligned colour and depth data. An RGBD image comprises a 2D array of samples, with each sample corresponding to a discrete point in the 3D space, and the sample value representing the colour (RGB) and the depth (D) value of that point.

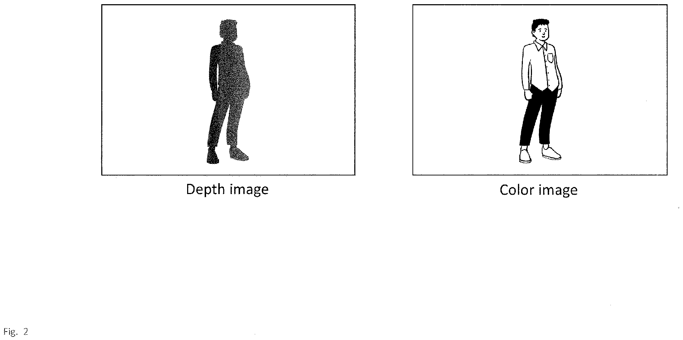

An RGBD image is typically expressed as a combination of a depth image and a colour image captured at the same time and depict the same model, as illustrated in Fig. 2, which illustrates a depth image, with each depth value represented as a different shade of grey (left) and a colour image (right) showing the same model.

By definition, a depth image of a scene can be obtained and used regardless of whether a corresponding colour image of the same scene is obtained or not. In other terms, depth and colour images are in principle decoupled (Excluding depth estimation methods that rely on colour images, e.g., stereo vision methods.). Depth and colour images can be of different spatial resolution (image resolution), bit depth (number of bits per sample), temporal sampling (frame rate), spatial coherence (taken at different point in space), temporal coherence (taken at different point in time), or projection (lens system).

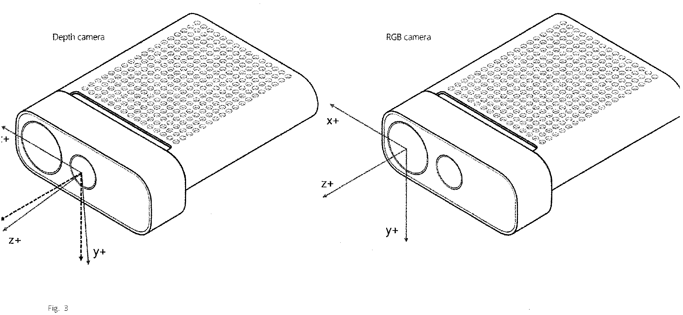

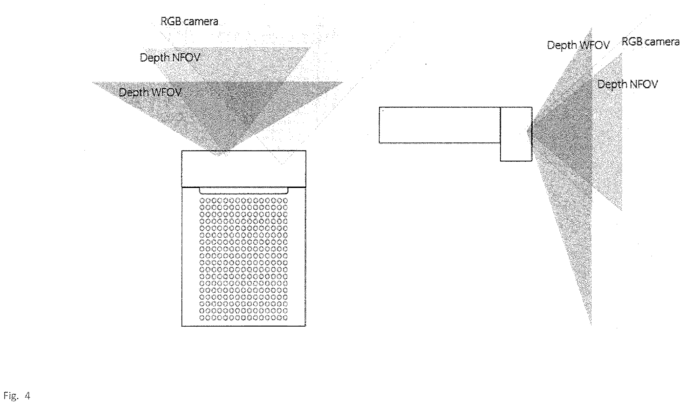

In practice, devices equipped with a depth camera are often also supplied with colour cameras. Moreover, colour cameras may be used to estimate depth data (e.g., AI models, stereo vision methods). Therefore, depth images usually accompany (or are accompanied by) colour images. An example is given by the Microsoft Azure Kinect. It is equipped with both a depth camera and a colour camera of different features (i.e., different lenses, different sensor resolution, different field-of-view, spatially distant), as seen on Fig. 3 and Fig. 4.

Fig. 3 illustrates Azure Kinect depth and colour cameras position and coordinate system (from [6]).

Fig. 4 illustrates Azure Kinect depth and colour cameras field-of-view (from [7]).

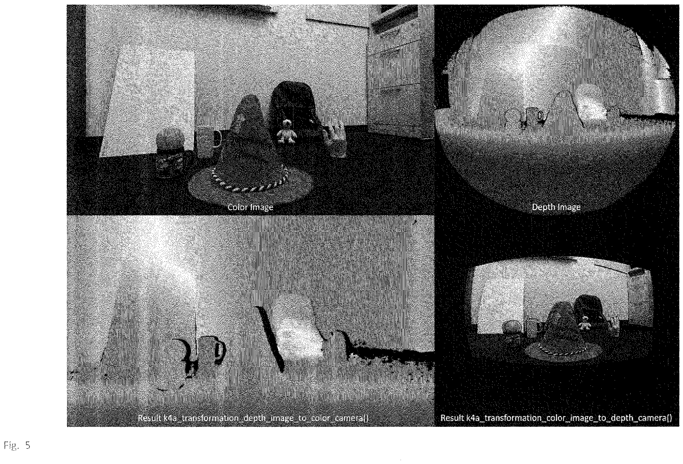

As a result, the images captured by the depth and the colour cameras do not represent exactly the same part of the scene. For common applications, however, it is desirable to be able to relate one sample of the depth image to one sample of the colour image. Therefore, there is need for a known spatio-temporal relationship between them. For example, the Azure Kinect SDK provides a transformation function [8] to convert either the colour or the depth image to the other's coordinate system. Fig. 5 represents the two available image transformations. On the left side, the depth image at the bottom has been aligned with the colour image at the top. Conversely, on the right side, the colour image has been aligned with the depth image.

Fig. 5 illustrates Azure Kinect Sensor SDK image transformations (from [8]).

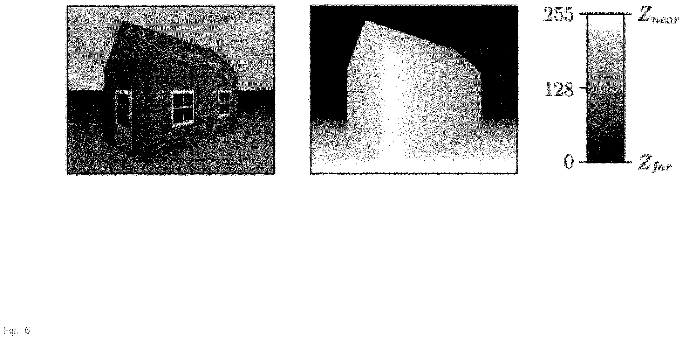

Fig. 6 presents the concept of an RGBD image from a computer generated image (from [9]), with the depth image encoded as an 8-bit grayscale image taking values between 0 and 255.

The same concept can be extended to RGBD video sequences, wherein each image of the colour video sequence is associated with a corresponding depth image from a depth video sequence.

RGBD images are often called 2.5D images. Specifically, a colour image provides the appearance of a 3D scene, as perceived from the capturing viewpoint and as projected onto a 2D image plane. In this process there is necessarily loss of information about one dimension. A depth image captures this lost dimension by carrying the topology of the 3D scene, as perceived from the capturing viewpoint. Combined, they provide all necessary information to fully reproduce a 3D view of this scene from the capturing viewpoint. However, by changing the viewpoint, occluded objects will be perceived as missing regions, thus, not enabling a complete 3D viewing experience, which justifies the usage of the term 2.5D.

### Depth image compression

There can be different ways to devise a taxonomy of depth image codecs. Below, for the shake of this disclosure, existing techniques are split to the following classes: (a) MPEG-based codecs; these are proposed and implemented by the MPEG standardization body, (b) video-based codecs; these are making use of existing image/video solutions, (c) extending video-based codecs; these rely upon existing image/video solutions, but extend them in certain aspects, (d) decomposition-based codecs; these are making use of depth image characteristics spitting them to smooth regions abrupted by sharp edges, and (e) generic-based codecs; these make use of data-agnostic compression methods.

*MPEG-based codecs*

In this class are considered codecs developed by MPEG to handle depth data.

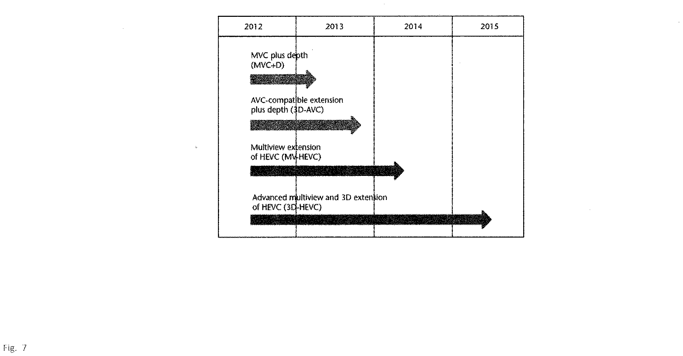

Fig. 7 illustrates extensions of MPEG video codecs handling depth data (from [10]).

MVC

As described in [10], the multiview extension of AVC, which is referred to as MVC, has been developed for the coding of two or more views. A key feature of this standard is that it maintains AVC compatibility, meaning that one view of the compressed multiview bitstream can be decoded by a legacy AVC decoder. Relative to independent coding of all views, compression gain is achieved by allowing the other views to be predicted using pictures from different views at the same time instances. In this process, known as inter-view prediction, a block-based disparity shift between the reference view and the current views is determined and is used to perform a disparity-compensated prediction. This is similar to the motion-compensated prediction used in conventional video coding, but it is based on pictures with different viewpoints rather than pictures at different time instances. The MVC approach is simply defined by two features: extending the high-level syntax so that the appropriate signalling of view identifiers and their references is supported and defining a process by which decoded pictures of other views can be used to predict a current picture in another view.

*MVC+D*

As disclosed in *[10],* in the case of AVC, it was decided to specify an independent second stream for the representation of depth as well as high-level syntax signalling of the necessary information to express the interpretation of the depth data and its association with the video data. This approach does not involve macroblock-level changes to the AVC or MVC syntax, semantics, and decoding processes. The corresponding 3D video codec is referred to as MVC+D.

*MV-HEVC*

As disclosed in *[10]*, in the MV-HEVC framework, support for depth maps will be realized with auxiliary picture syntax. The auxiliary picture decoding process would the same for video or Multiview video, but it may not necessarily have normative decoding requirements as part of a profile. This would enable applications to optionally decode depth maps. If the industry desires an additional level of interoperability, a profile that requires the capability to decode depth would be added at a later stage. This approach differs from that taken in the MVC+D extension, which adds support for depth using specially designated network abstraction layer (NAL) units for depth and defines a dedicated profile for the decoding of multiview plus depth video.

*3D-AVC and 3D-HEVC*

As disclosed in *[10]*, in depth views in 3D-AVC are coded similar to MVC+D, and no block-level changes for depth coding have been introduced. In 3D-AVC, the texture information of a single view is coded in a manner that is compatible with AVC.
In the HEVC family, the 3D-HEVC extension is in the process of being finalized. As with 3D-AVC, block-level coding tools for texture views have been introduced into the draft specification of 3D-HEVC. In addition, novel techniques for improved coding of depth have been accepted into the draft specifications.

*Video-based codecs*

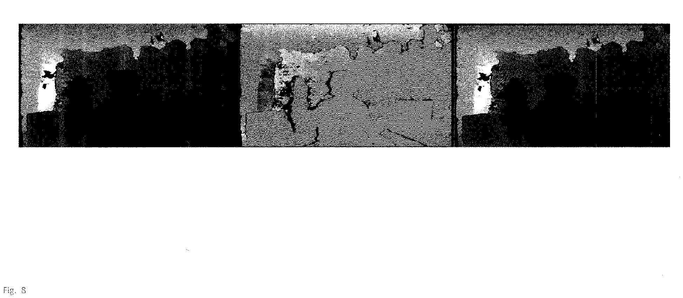

In this class are considered depth codecs that make use of existing image-based or video-based codecs. Often, these methods rely on colourizing depth data (i.e., transforming them from depth to colour space). On one hand, they make use of widely used infrastructure for image and video coding; however, since such methods are not optimized for depth information, their usage often leads to unnatural artifacts.
One example is the compression approach implemented by Intel RealSense depth cameras, by colourizing depth information [11].
Quote from [11]: "The Intel RealSense Depth Camera, D400 series can output high-resolution depth image up to $1280 \times 720$ with 16-bit depth resolution [1]. In order to efficiently store such high-resolution images in a limited disk space or to minimize the transmission bandwidth, an appropriate compression technique is required.... In this paper, we propose a simple colourization method for depth images. By appropriately colourizing the depth image, the depth image can subsequently be treated as a normal RGB image which can easily be compressed, stored, and transmitted using widely available HW and software tools.... The proposed colourization process imposes the limitation of needing to fit a 16-bit depth map into a 10.5-bit colour image. We recommend performing the colourization only after first limiting the depth range to a subset of the full depth 0 ~ 65535 range, and renormalizing it. The depth range can, for example, be determined by windowing it to between a minimum depth value dmin and a maximum depth value dmax. The greater the depth range, the coarser the quantization of the depth value becomes. There are two methods for this colourization: uniform colourization which directly converts the depth value, and inverse colourization which converts the disparity value (which is the reciprocal of the depth value). Uniform colourization quantizes the entire depth range uniformly. In inverse colour colourization, quantization is finer at closer depths and coarser at longer depths. Inverse colourization is particularly well suited to depth cameras, like the D400 series, which derive depth from triangulation, which inherently has an inverse relationship between resolution and distance away." The concept of [11] is illustrated in Fig. 8.

In [12], another transformation from depth to colour domain is proposed. Quote from [12]: "We present a novel encoding scheme that efficiently converts the single-channel depth images to standard 8-bit three-channel images, which can then be streamed using standard codecs. Our encoding scheme ensures that the compression affects the depth values as little as possible.... Our goal is to reconstruct the original depth values as accurately as possible after compression/decompression. Compression schemes for videos are highly tuned for colour video, taking into account human perception, e.g., by spending fewer bits on colour than luminance information, and so forth. Of course, these insights do not apply to depth compression. On the plus side, video codecs compress 24 bits of data per pixel (3×8 bits), whereas we only have 16 bits per pixel as input. As we will demonstrate in Section 4, naively multiplexing the 16-bit depth values into two 8-bit values and passing those into a video codec (leaving the third channel empty) creates severe artefacts; duplicating some of the bits in order to fill the available 3×8 bits does not improve quality much. We propose a robust encoding of 16-bit depth values into 3×8 bits, such that the decoded depth maps suffer from very few compression artefacts, see Figure 1 for an overview. The scheme is designed to be resilient to quantisation, and comparatively robust against down-sampling (convolution) and altered intensities due to lossy compression.... Our solution requires negligible computational overhead, and works well with several compression algorithms such as JPEG, VP8 and H.264."

*Extending video-based codecs*

In this class are considered depth codecs that enhance image-/video-based codecs by applying some pre-/post-processing modules suitable for depth data. Their advantage is that these methods rely upon widely used infrastructure, while adapting the content for better efficiency; however, they cannot be straightforwardly used without integration of the proposed modules.

One example is given in [13], which proposes a pre-processing step that considers the noise characteristics of the depth sensor in use. Quote from [13]: "In this paper, we propose a lossy Kinect-like depth compression framework based on the existing codecs, aiming to enhance the coding efficiency while preserving the depth features for further applications. In the proposed framework, the Kinect-like depth is reformed first by divisive normalized bilateral filter (DNBL) to suppress the depth noises caused by disparity normalization, and then block-level depth padding is implemented for invalid depth region compensation in collaboration with mask coding to eliminate the sharp variation caused by depth measurement failures. Before the traditional video coding, the inter-frame correlation of reformed depth is explored by proposed 2D+T prediction, in which depth volume is developed to simulate 3D volume to generate pseudo 3D prediction reference for depth uniqueness detection. The unique depth region, called active region is fed into the video encoder for traditional intra and inter prediction with residual coding, while the inactive region is skipped during depth coding."

Another example is given in [14] that depends on a post-processing, boundary reconstruction filter that is implemented in-loop. Quote from [14]: "An in-loop reconstruction filter that improves the depth-coding performance as well as the rendering quality of virtual views based upon the coded depth is proposed.... The proposed depth reconstruction filter consists of the following two filters: 1) a frequent-close filter to recover object boundaries; 2) a bilateral filter to eliminate the remaining errors.... The depth reconstruction filter was implemented in the H.264/AVC reference software and was located after the deblocking filter."

*Decomposition-based codecs*

In this class are considered depth codecs that rely on some form of decomposition (e.g., object segmentation, edge detection, plane detection, tree decomposition, mesh generation) to distinguish between smooth surfaces and abrupt depth discontinuities. Different techniques can then be employed to encode the decomposition, as well as the decomposed regions (e.g., image-based codecs, modelling functions, geometric wavelets, mesh coding). This is the most popular class in the academic literature and is considered most suitable in terms of efficiency since it exploits specific characteristics of depth data; however, these methods are typically associated with higher computational costs and cannot be straightforwardly used by deployed video coding infrastructure.

An example that falls in this class of codecs is given in [15]. Quote from [15]: "Firstly, we consider region-of-interest (ROI) coding, where we identify those regions of the image where accurate depth is most crucial. Secondly, we reshape the dynamic range of the depth map."

By reshaping the dynamic range, the authors are able to reflect the different importance of different depths, enabling dynamic range allocation. For ROI coding, the JPEG2000 is used driven by an edge detector to avoid artifacts on the edges.

In [16], edge detection followed by image-based compression is proposed. Quote from [16]: "The proposed compression scheme rests on the common assumption that depth maps are usually made by a set of quite smooth surfaces separated by sharp edges between them.... The first task is the segmentation of the depth map using edge detection (rectangular box 1). Segmented data are then compressed *"using a predictor-corrector scheme using samples"* (box 2 and 3). In the second task both the original depth map and its segmented version are subsampled and the difference is compressed as a JPEG2000 lossless image (box 4,5 and 6). The next task of the algorithm is the construction of a prediction of the original depth map from its subsampled version and the segmented data exploiting 3D clues (box 7). Finally the residuals between the prediction and the actual depth map are computed and lossy compressed in JPEG2000 (box 8)."

The results exhibit noticeable improvement over JPEG 2000 and demonstrate suitability of the proposed compression to image warping applications. The proposed method manages to preserve the depth discontinuities and outperforms state of the art codecs at all rates.

Depth images are typically piece-wise smooth, meaning that they are characterized by large smooth or smoothy changing areas associated to the object's surfaces, and sharp edges associated to the transitional areas between objects at different depth levels.

The proposed algorithm in [17] encodes smooth regions using piecewise-linear functions and the boundaries by line segments, considering characteristics of depth images. A top-down quad-tree decomposition of the image is performed to determine the regions. Quote from [17]: "This has brought us to the concept of modelling the signal using piecewise linear functions. The image is subdivided with a quadtree decomposition and an independent linear function model is used for each leaf of the tree. Additionally, we provide a mode that describes object contours, i.e. depth discontinuities, with a straight line separating two linear models. This last mode enables to code depth discontinuities, without introducing many small leafs along edges.... In this section, we describe a novel approach for depth coding using the above-mentioned platelet functions. With a single linear function, we can represent one planar surface of the scene, like the ground plane, walls, or small objects. Hence, a single function can cover areas of variable size in the image. To identify the location of these planar surfaces in the image, we employ a quadtree decomposition which recursively divides the image into squares of different size. In some cases, the depth image within one square can be approximated with a single linear approximation. If no suitable approximation can be determined for the square, it is subdivided into four smaller squares. Additionally to this standard quadtree subdivision, we apply a special coding mode if there are discontinuities in the depth image. To prevent that many small squares are required along a discontinuity, we separate the square along a straight edge into two regions. Each of these two regions is coded with a separate linear function. Consequently, the coding algorithm chooses between three possible modes for each node in the quadtree:

Mode 1: Approximate the square content with a single linear function: a square platelet;
Mode 2: Subdivide the square along a straight line into two regions and approximate each region with an independent linear function: a wedged platelet;
Mode 3: If the previous two modes fail, then subdivide the square into smaller ones and recursively process these squares.

The decision for each coding mode is based on a rate-distortion optimization"

*Generic-based codecs*

In this class are considered depth codecs that rely on algorithms for compression of generic type of data (e.g., variable length coding). They are fast and typically implemented with small scripts, while they do not directly exploit depth data properties.

For the purpose of real-time and low complexity compression, Microsoft developed the RVL codec [18]. The approach is to consider each depth map as generic data that can be compressed, ignoring the fact that the depth map is an image. RVL does not thus for instance consider partitioning blocks (i.e. macro block) to compress the depth image.

Quote from [18]: "The proposed "RVL" compression scheme is a mixture of Run length encoding and Variable Length encoding schemes. Consider a depth image as alternating runs of zero and non-zero values in raster scan order. Without loss of generality, assume that the image begins with a run of zeros (possibly of zero length). Each successive pair of zero and non-zero runs is encoded in order as:

- the number of zeros,

- the number of non-zeros,
- differences (deltas) of successive non-zero pixel values, where the difference for the first pixel in a run of non-zeros is based on the last pixel in the previous run of non-zeros

The number of zeros and non-zeros are positive integers written to the compressed bitstream with a base-8 variable length encoding scheme: starting with the least significant bits, the integer is broken into successive groups of three bits until all set bits are consumed. A fourth continuation bit is added to each group of three indicating whether it is the last group."

This method is extended to accommodate dynamic content in [19]. Quote from [19]: "Temporal RVL (TRVL) first preprocesses the frames of depth streams, then uses RVL to compress the difference between the frame and the previous frame (i.e., delta encoding). In its preprocessing step, TRVL adds change and invalidity tolerance to depth streams based on observations from depth cameras with fixed positions.... Adding change and invalidity tolerance, the preprocessing step temporally stabilizes pixel values by changing a pixel value only when 1) the difference between the fixed value and a measurement is larger than a threshold or 2) when two consecutive measurements failed. The use of the difference between the fixed value and the measurement, instead of the difference between the previous measurement and the current measurement, limits the error from the preprocessing step to the given threshold. Since RVL is designed to efficiently compress running zeros, the temporal redundancy added by the preprocessing step boosts the efficiency of this delta encoding."

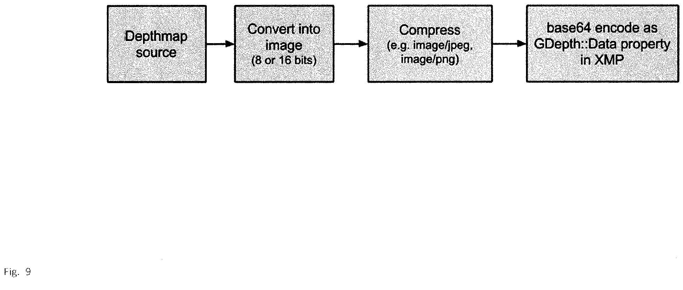

There are several coding methods for depth images, as mentioned above. For example, ARCore [20], exploits existing image/video coding infrastructure to compress source depth images, makes use of one colour component (i.e., grayscale images/videos), and doesn't interfere with the compression. These features may also be implemented by embodiments of the present invention. Concretely, the ARCore's coding approach is as follows: Quote from [20]: "A depthmap is serialized as a set of XMP properties. As part of the serialization process, the depthmap is first converted to a traditional image format. The encoding pipeline contains three steps (see Fig. 9):
Convert from the input format (e.g. float or int32 values) to an integer grayscale image format, e.g. bytes (8 bits) or words (16-bit).

Compress using a standard image codec, e.g. JPEG or PNG.

Serialize as a base64 string XMP property.

The pipeline can be lossless or lossy, depending on the number of bits of the original depthmap and the number of bits used to store it, e.g. 8 bits for an JPEG codec and 8 or 16 bits for a PNG codec.

Two different formats are currently supported: RangeLinear and Rangeinverse. Rangeinverse is the recommended format if the depthmap will lose precision when encoded, e.g. when converting from float to 8-bit. It allocates more bits to the near depth values and fewer bits to the far values, in a similar way to how the z-buffer works in GPU cards....

*RangeLinear*

Let d be the depth of a pixel, and near and far the minimum and maximum depth values considered. The depth value is first normalized to the [0, 1] range as

$$d_n = \frac{d - near}{far - near}$$

then quantize to 8 or 16 bits as

$$d_{8bit} = \lfloor d_n \cdot 255 \rfloor$$

$$d_{16bit} = \lfloor d_n \cdot 65535 \rfloor$$

Conversely, given the quantized depth $d_{8bit}$, one can recover depth d as

$$d_n = d_{8bit}/255$$

$$d = d_n \cdot (far - near) + near$$

*RangeInverse*

Let d be the depth of a pixel, and near and far the minimum and maximum depth values considered. The depth value is first normalized to the [0, 1] range as

$$d_n = \frac{far \cdot (d - near)}{d \cdot (far - near)}$$

then quantize to 8 or 16 bits as

$$d_{8bit} = \lfloor d_n \cdot 255 \rfloor$$

$$d_{16bit} = \lfloor d_n \cdot 65535 \rfloor$$

Conversely, given the normalized depth $d_n$, one can recover depth d as

$$d = \frac{far \cdot near}{far - d_n \cdot (far - near)}$$

End quote [20]

*Disadvantages of Prior art*

The prior art converts a source depth image (or equivalently "depthmap source") into a grayscale image that is subsequently encoded, with this conversion involving quantization to reduce the higher bit depth of the source depth image into a bit depth supported by the encoder. This approach leads to the following issues:
When the encoding bit depth is smaller than the source depth image bit depth, coarser quantization is applied resulting to precision loss and, thus, there is no ability to preserve the original precision of source depth image samples.

During quantization, all source depth image samples are considered (i.e., as if they have equal importance) and, thus, precision loss of important regions might occur due to the presence of outliers (i.e., few source depth image samples that are too close or too far). There is no ability to select source depth sub-ranges of interest to preserve the original precision of corresponding source depth image samples, while respecting the encoding bit depth.

There is no ability to select source depth sub-ranges of interest to preserve the corresponding source depth image samples and discard the remaining depth sub-ranges to reduce the bitrate. Processes that involve depth-based segmentation require decoding of the depth image and scanning of each depth image sample.

Embodiments of the present invention pertain to the domain of depth image representation and coding, providing a solution for storing and encoding source depth images of higher bit-depth using formats and codecs of lower bit depth. Depth images are used in a number of applications, as presented below. In these applications, among others, there is need for compression to reduce bitrate for storage or transmission. The usage of existing image/video coding infrastructure for this purpose is particularly attractive, however, deployed codecs are typically limited by the supported bit depth, which is often lower than the bit depth of source depth images, leading to loss of precision. Our invention proposes a solution that allows to convert a higher bit-depth source depth image to a lower bit-depth target depth image plus associated metadata, which enables precision preservation (i.e., no depth information loss) with lower bit-depth coding.

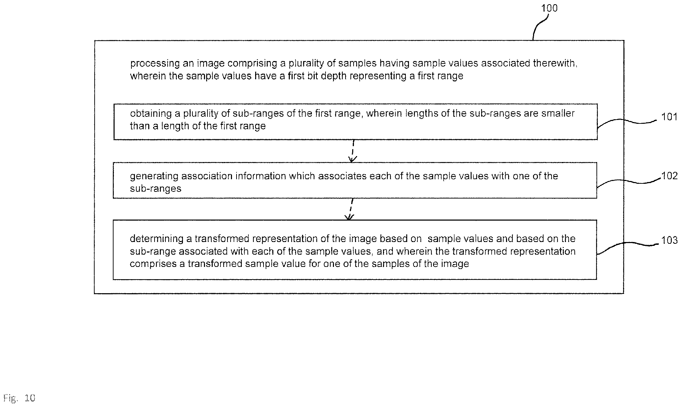

Fig. 10 illustrates a flowchart of a method 100 of processing image comprising a plurality of samples having sample values associated therewith according to an embodiment. According to method 100, the sample values have a first bit depth representing a first range. The method 100 comprises a step 101 of obtaining a plurality of sub-ranges of the first range, wherein lengths of the sub-ranges are smaller than a length of the first range. The method 100 further comprises a step 102 of generating association information which associates each of the sample values with one of the sub-ranges. The method 100 further comprises a step 103 of determining a transformed representation of the image based on the sample values and based on the sub-range associated with each of the sample values, and wherein the transformed representation comprises a transformed sample value for one of the samples of the image. In accordance with embodiments, the transformed representation is determined by assigning, to one of the sample values, a transformed sample value out of a set of transformed sample values of the sub-range associated with the sample value.

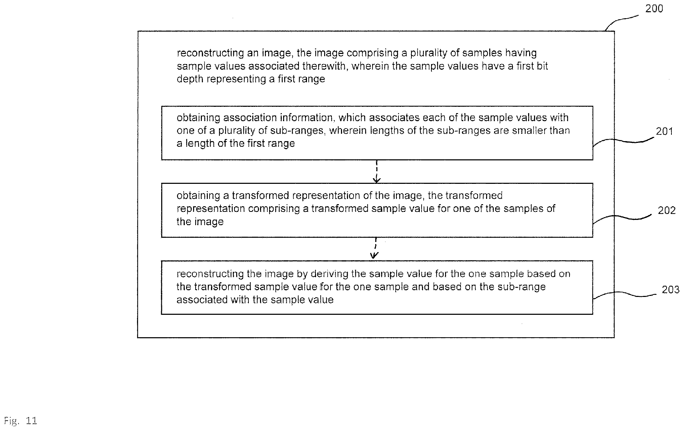

Fig. 11 illustrates a flowchart of a method 200 of reconstructing an image according to an embodiment. According to method 200, the image comprises a plurality of samples having sample values associated therewith, wherein the sample values have a first bit depth representing a first range. Method 200 comprises a step 201 of obtaining association information, which associates each of the sample values with one of a plurality of sub-ranges, wherein lengths of the sub-ranges are smaller than a length of the first range. Method 200 further comprises a step 202 of obtaining a transformed representation of the image, the transformed representation comprising a transformed sample value for one of the samples of the image. Method 200 further comprises a step 203 of reconstructing the image by deriving the sample value for the one sample based on the transformed sample value for the one sample and based on the sub-range associated with the sample value.

*Application scenario*

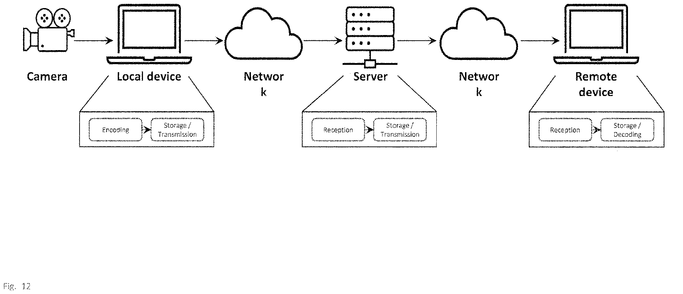

A representative application scenario for our invention is live streaming of depth video. Fig. 12 illustrates a conventional system diagram of a representative application scenario for real-time transmission of a depth video from a local to a remote user, which involves capturing, encoding, storing, transmitting, receiving, and decoding steps. In this example, presented in Fig. 12, a depth camera is attached to the local device at the transmitter side to capture a live depth video. The depth video is encoded in real-time to save bitrate, potentially stored locally, and transmitted over network to a server. The server potentially stores the encoded depth video for future access on demand and transmits it over network to a remote device at the receiver side, where the depth video is received, potentially stored, and decoded before passed over to an application. Other variants of this example may include:
Conventional RGB videos could be additionally captured, stored, and streamed together with the depth video. Note that the term RGB video is commonly used for any colour video, e.g., represented in RGB space or any other colour scheme, such as of the YUV family.

The depth and/or RGB videos could be processed and/or transcoded at the server.

The depth and/or RGB videos could be already captured (i.e., video on demand instead of live streaming).

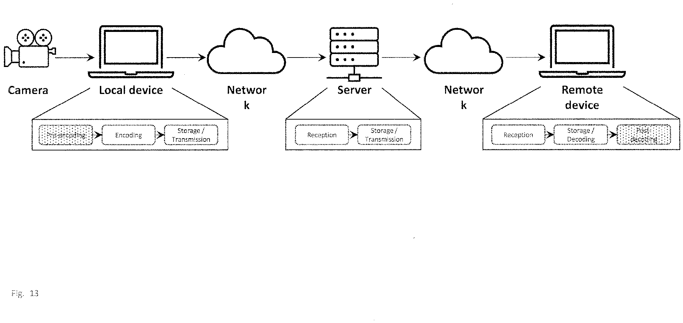

Fig. 13 illustrates a system diagram according to an embodiment of the invention, introducing two new steps that are annotated with red colour, and complement the existing pipeline shown in Fig. 13.

Embodiments of the invention provide a solution that can be implemented by introducing a pre-encoding and a post-decoding step in the existing pipeline, highlighted as dotted bock in Fig. 13. At the transmitter side, the pre-encoding step is introduced to transform the higher bit depth source depth image, to a target depth image of lower bit depth that is supported by the encoding engine. In this step, the entirety (or part) of the source depth image is transformed in a lossless (or lossy) manner. Associated metadata are also generated to allow the reverse operation. The encoded lower bit-depth target depth image with the associated metadata are encapsulated and transmitted. At the receiver side, the encapsulated data are received, the lower bit-depth target depth image is decoded, and the associated metadata are parsed. The post-decoding step is introduced to reconstruct the entirety (or part) of the higher bit-depth source depth image from the decoded lower bit-depth target depth image and the parsed associated metadata. Note that the pre-encoding step doesn't interfere with the encoding process, and the post-decoding step doesn't interfere with the decoding process.

*Use cases and applications*

NOTE: This section is not meant to be exhaustive and simply shows examples of use cases and applications where depth data are stored and transmitted. Specifically, as part of these applications, depth data may be locally or remotely stored, may be delivered to the edge or a server for processing purposes, or may be streamed to a remote user.

Depth data may be used by an object detection method to detect object. Object detection is a computer technology for the automatic identification of objects that belong to a certain class (e.g., humans, animals, cars, buildings). Object detection is important in a number of applications, such as pedestrian detection, facial detection, and object localization.

Depth data may be used by an object tracking method to track objects. Object tracking is a computer technology for the automatic detection and tracking of objects typically in space (i.e., positions within video frames) and time (i.e., movements across video frames). Object tracking is important in a number of applications, such as autonomous driving, surveillance, retail applications, and XR applications, among others.

Depth data may be used to perform human pose estimation. Pose estimation is a computer technology for detecting the position and orientation of a person or an object in texture or depth images. Pose estimation is important in a number of applications, such as surveillance, interactive gaming, and fitness.

Depth data may also be used in scene (or 3D) reconstruction. Scene reconstruction is important in a number of applications, such as XR experiences, robotic mapping, and spatial computing. Depth images may be used for scene reconstruction.

Depth data may also be used for automatic navigation. Depth data provide the topology of the surrounding scene, enabling enhanced detection capabilities and more comprehensive understanding. Depth data can be used for obstacle detection, collision prevention, and accurate environment mapping, to allow improved navigation and safety.

Depth data may also be used to enable visual effects and interactivity with colour images or videos. Having access to the topology of a captured scene, visual effects such as slicing, refocusing, varying depth of field, lighting adjustment, and weather manipulation can be easily performed with high realism. Moreover, interactivity functionalities that enhance the engagement of the user with the content, such as object placement, distance measurement, and collision detection can be implemented in a straightforward manner [21].

Depth data may also be used for immersive visualization. In these scenarios, volumetric content can be employed and consumed in various ways. There are different manners to represent volumetric content or creating the effect of perceiving volumetric content (i.e., sense of depth), which depends on the type of screen. One way to represent volumetric content is by RGBD images. An example of a display in this category is the Looking Glass Portrait [22] for which the RGBD format is one of the recommended options as described in the documentation [23]. One way to perceive volumetric content is to display a stereo view i.e., a pair of separate views, one for the left eye and one for the right eye. In this category falls 3D TV video, which enables the perception of volumetric content (i.e., sense of depth) from one perspective. In 3D TV video, input data correspond to a single viewpoint and often comprise a depth image and a colour image that are used to synthesize a stereo view [9]. In the same category falls the free viewpoint video, where the user is able to choose the perspective to view the scene. In free viewpoint video, the number of perspectives is virtually infinite (i.e., the user can choose any viewpoint within a continuous range) and, hence, input data often correspond to more than one viewpoint. Nevertheless, the synthesis of a new viewpoint from available ones often relies to depth images and colour images, similarly to the 3D TV [24].

Depth data may also be used for remote rendering. Rendering complex 3D objects can be computationally intensive. One approach to display such content on lightweight devices is to connect them to a rendering node over network that contains a heavy workstation and performs the actual rendering in real-time. In such a scenario, the result of the rendering for the current perspective of a user may be streamed back in an RGBD format. From an RGBD video, it is possible to create a stereo view. Note that some services may decide to stream back to the user the left and right views explicitly. However, in this case, the inter-view distance would be baked in and targeted to this user and device. Providing an RGBD video allows flexibility, and a device-agnostic solution, since the stereo view would be generated on the user side based on the device characteristics and user profile (e.g., interpupillary distance).

Embodiments of the invention rely on the idea to losslessly transform a higher bit-depth source depth image to a lower bit-depth target depth image using source depth sub-ranges, which combined with generated metadata enables the reconstruction of the higher bit-depth source depth image. The lossless transformation enables no loss of precision for source depth image sample values, while the lower bit-depth of the target depth image facilitates usage of conventional encoders. Current techniques use coarser quantization to fit the higher bit-depth source depth image to the lower bit-depth of encoding engines. However, such an approach comes with certain disadvantages, as presented in section above.

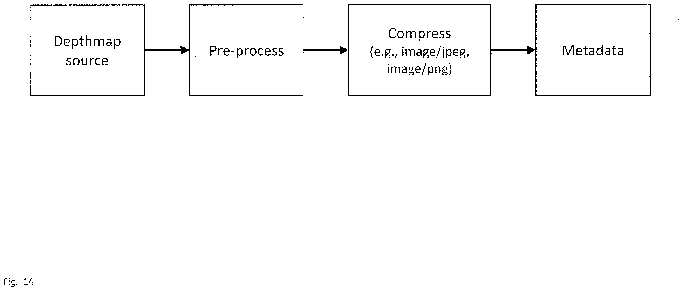

Fig. 14 illustrates an encoding pipeline according to an embodiment, updated started from prior art, originally depicted in Fig. 9, after integrating the proposed steps. In view of the processing steps followed by the prior art at the transmission side, shown in Fig. 9, embodiments of the invention replace the "Conversion into an image" step that relies solely on quantization to satisfy the lower target bit-depth with the "Pre-process" step. Moreover, the last step is renamed to "Metadata" to indicate a more generalized process that involves generation of necessary information to reconstruct the encoded source depth image and its encapsulation.

In the proposed "Pre-process" step, the following tasks are performed: (a) the source depth range of the higher bit-depth source depth image is split into source depth sub-ranges, (b) the source depth image samples are associated with the source depth sub-ranges, and (c) the source depth image sample values are transformed accordingly to lower bit-depth target depth image sample values that respect the target depth range. The lower bit-depth target depth image can then be coded with a lower bit-depth codec. In the proposed "Metadata" step, the source depth sub-ranges and the association information between source depth image samples and source depth sub-ranges are signalled, to enable reconstruction of the higher bit-depth source depth image. The technical effects of the invention are presented below.

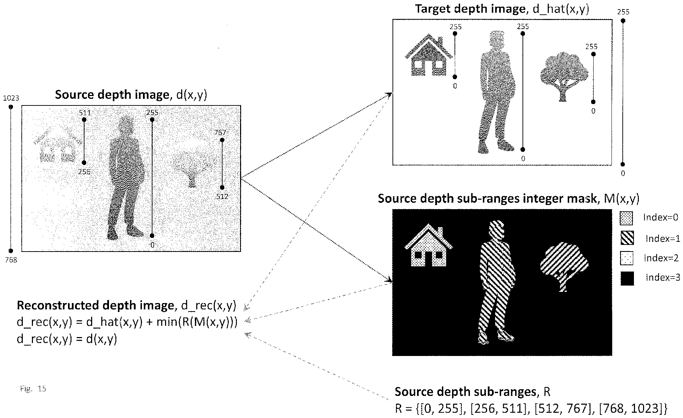

Fig. 15 illustrates the idea of an embodiment of the invention. A source depth image of 10 bits d(x,y) is decomposed into a target depth image of 8 bits d_hat(x,y) and a 2-bit source depth sub-ranges integer mask M(x,y) that carries the association information between source depth image samples and source depth sub-ranges R. The reconstructed depth image d_rec(x,y) is obtained using the target depth image, the source depth sub-ranges integer mask, and the source depth sub-ranges.

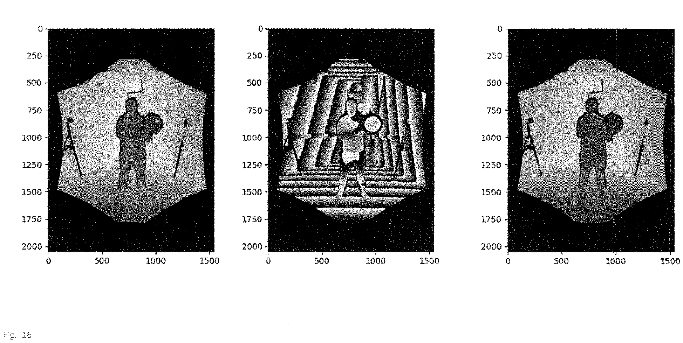

Fig. 16 depicts a 12-bits source depth image (left), an 8-bits target depth image (middle), and a 4-bits source depth sub-ranges integer mask (right). The latter two can be used to reconstruct the former. The example of Fig. 16 is a real-life example of a source depth image, together with the corresponding target depth image and the source depth sub-ranges integer mask that carries the association information between source depth image samples and source depth sub-ranges. In this example, the source depth image has a precision of 12 bits (i.e., depth values between 0 and 4095). The target depth image has a precision of 8 bits, while the source depth sub-ranges integer mask is represented by 4 bits to represent 16 source depth sub-ranges that are defined to be non-overlapping, sequential, and with equal length. In this example, no encoding is performed. It can be seen, that the same number of bits is required for the original source depth image (i.e., 12-bit source depth image) and the proposed representation (8-bit target depth image + 4-bit source depth sub-ranges integer mask).

Embodiments of the invention provide a capturing device configured for performing the following steps:

Step 1: Obtaining a source depth image with samples taking values from a source depth range.
Step 2: Determining non-overlapping, sequential source depth sub-ranges, with each source depth sub-range having a length equal to a target depth range (e.g., determined by a selected encoding bit depth) and the concatenation of all source depth sub-ranges being equal to the source depth range.
Step 3: Associating the source depth image samples with the source depth sub-ranges.
Step 4: Transforming the source depth image to a target depth image based on the source depth sub-ranges, with the target depth image samples taking values from the target depth range.
Step 5: Generating metadata comprising (a) the source depth sub-ranges and (b) the association information between source depth image samples and source depth sub-ranges.
Step 6: Encoding the target depth image (e.g., under the selected encoding bit depth).
Step 7: Encapsulating the encoded target depth image and the generated metadata.

Steps 2 to 5 may be part of the pre-encoding step of Fig. 13. Steps 2 to 4 may be part of the pre-processing step of Fig. 14. Step 5 may be part of the metadata step of Fig. 14. Note that step 5 could be swapped with step 6, to follow the same order shown in Fig. 14.

NOTE: In step 1, the basic embodiment assumes that a source depth image is obtained from physical sensors, virtual depth cameras or AI models, in real or simulated environments. In other embodiments, a source depth image might be obtained from different depth representations (e.g., raw depth data measurements). In such cases, conversion from the original depth representation format to a source depth image may be needed. Such embodiments may require extra technical step(s).

NOTE: In step 1, the basic embodiment assumes that a source depth image contains raw depth values at the original precision and spatial resolution that were captured or estimated by the source. In other embodiments, a source depth image might be obtained after uniform/non-uniform quantization of the raw depth values, or after applying a reciprocal function on the raw depth values (e.g., 1/depth_value to maintain higher precision for near depth values and lower precision for far depth values), or after some processing/function that might be used (e.g., downsampling, cropping, etc.). In such cases, the source depth image may be subject to precision loss or spatial resolution adjustment with respect to the raw depth image. Such embodiments may extra technical step(s).

NOTE: In step 2, the basic embodiment assumes that the source depth sub-ranges are non-overlapping. In other embodiments, the capturing device/application might determine overlapping source depth sub-ranges. In such cases, additional logic may be included to decide in which source depth sub-range a source depth image sample should be assigned to, when its value falls into more than one source depth sub-ranges. Such embodiments may require extra technical step(s).

NOTE: In step 2, the basic embodiment assumes that the source depth sub-ranges have the same length, equal to the target depth range (e.g., [i, i+255] for 8-bit encoding). In other embodiments, the capturing device/application might determine source depth sub-ranges of different length than the target depth range, with the source depth sub-ranges having the same, or different length between them. In such cases, the results are sub-optimal in some aspect. Note that, with rational choice of source depth sub-ranges (i.e., non-overlapping, sequential, and same length equal to the target depth range with their concatenation equal to the source depth range), the total number of bits per sample of a source depth image is equal to the total number of bits per sample of the proposed representation (i.e., target depth image plus association information between source depth image samples and source depth sub-ranges). Specifically,

- Assuming that the lengths of source depth sub-ranges are smaller than the target depth range, it leads to a sub-optimal result in terms of bitrate. For example, assuming the source depth sub-ranges with different length between them R = { [0, 55], [56, 128], [128, 256]}), an 8-bit target depth range, and a conventional transformation function applied to the source depth image (e.g., f: x - min(R_i), for i = 1, 2, 3), the transformed target depth image sample values would belong to the ranges [0, 55], [0, 71] and [0, 127], respectively, while 2 bits would be additionally needed per sample to signal the association information between source depth image samples and source depth sub-ranges (e.g., a source depth sub-ranges integer mask, with each sample using 2 bits to indicate the source depth sub-range of the co-located target depth image sample). In this example, a total of 10 bits are used per sample for the proposed representation instead of 8 bits per sample for the source depth image. Note that all transformed target depth image sample values respect the [0, 255] range used for 8-bit encoding.
- Assuming that the lengths of source depth sub-ranges are larger than the target depth range, it would lead to precision loss. For example, assuming the source depth sub-ranges with equal length between them R = {[0, 511], [512, 1023]}, an 8-bit target depth range, and a suitable transformation function applied to the source depth image including quantization (e.g., f: (x - min(R_i))/2, for i = 1, 2), the transformed target depth image sample values would belong to the ranges [0, 255] and [0, 255], respectively, while 1 bit would be additionally needed per sample to signal the association information between source depth image samples and source depth sub-ranges (e.g., a source depth sub-ranges integer mask, with each sample using 1 bit to indicate the source depth sub-range of the co-located target depth image sample). However, such transformation function leads to precision loss. In this example, a total of 9 bits are used per sample for the proposed representation instead of 10 bits per sample for the source depth image. In such cases, additional metadata may be provided to be able to recover the source depth image samples values from the target depth image sample values (e.g., the transformation function). Such embodiments may require extra technical step(s).

- Combinations of the above two examples could be considered, with analogous results.

NOTE: In step 2, the basic embodiment assumes that the concatenation of all source depth sub-ranges is equal to the source depth range, which implies that all source depth image samples are preserved. In other embodiments, the capturing device/application might determine source depth sub-ranges that do not cover the entire source depth range, which implies that source depth image samples with values outside of the determined source depth sub-ranges are omitted. Source depth sub-ranges and source depth image samples that are preserved, are termed in-bound. Source depth sub-ranges and source depth image samples that are omitted, are termed out-of-bound. In some cases, the capturing device/application might explicitly determine out-of-bound source depth sub-ranges to purposely omit corresponding source depth image samples (e.g., as out-of-interest for bitrate reduction). In such cases, additional metadata may be provided to specify in-bound and/or out-of-bound depth sub-ranges. Such embodiments may require extra technical step(s).

NOTE: In step 2, the basic embodiment assumes that the source depth sub-ranges are determined by the capturing device/application, without mentioning how they are specified. There are various ways for the capturing device/application to specify the source depth sub-ranges. For example, by using the source depth range and a number of source depth sub-ranges to indicate non-overlapping, sequential source depth sub-ranges that cover the entire source depth range and are all in-bound. Or, an array of start and end boundaries for source depth sub-ranges that cover the entire source depth range and are all in-bound. Or, including an additional array that indicates whether the corresponding source depth sub-range is in-bound or out-of-bound. Or, using the source depth range and an array of start and end boundaries for in-bound source depth sub-ranges that do not cover the entire source depth range, with the out-of-bound source depth sub-ranges obtained as their difference. Various other alternatives could also be used. In such cases, additional metadata may be provided to determine in-bound and/or out-of-bound source depth sub-ranges and/or source depth range. Such embodiments may require extra technical step(s).

NOTE: In step 2, the basic embodiment assumes that the source depth sub-ranges are determined by the capturing device/application, without mentioning how they are defined. There are various ways for the capturing device/application to define the source depth sub-ranges. For example, by using pre-defined source depth sub-ranges, or using the distribution of source depth image sample values.

NOTE: In step 2, the basic embodiment assumes that the source depth sub-ranges are determined per source depth image. In other embodiments, the capturing device/application might determine source depth sub-ranges that are static or dynamic over time across a depth video. For example, the depth sub-ranges could be defined for a single depth frame, an entire depth sequence, or anything in-between. In such cases, common metadata could be stored at a higher metadata level (e.g., segment, group-of-pictures, or video header level). Such embodiments may require extra technical step(s).

NOTE: In step 3, the basic embodiment assumes that all source depth image samples are in-bound. In other embodiments, the capturing device/application might determine out-of-bound source depth sub-ranges. The association information between source depth image samples and source depth sub-ranges indicates in which source depth sub-range each source depth image sample falls into. In some cases, out-of-bound source depth sub-ranges could be annotated uniquely, or they could be annotated differently to indicate different semantics (e.g., closer, in-between, or further than one or a series of in-bound source depth sub-ranges). In such cases, additional metadata may be provided to indicate the semantics of the annotations. Such embodiments may require extra technical step(s).

NOTE: In step 3, the basic embodiment assumes that the source depth sub-ranges integer mask has the same resolution and 1-1 spatial association with the source depth image, where a source depth sub-ranges integer mask sample indicates the source depth sub-range of the co-located source depth image sample. In other embodiments, the capturing device/application might determine a different spatial association. For example, by splitting the source depth image into N regions and associating each source depth image region with a source depth sub-ranges integer mask sample (i.e., in this case, the source depth sub-ranges integer mask contains N samples). In such cases, additional metadata may be provided to indicate the spatial association of the source depth sub-ranges integer mask with the source depth image and potentially its spatial association with the target depth image. Such embodiments may require extra technical step(s).

NOTE: In step 3, the basic embodiment assumes that no further image processing operations are applied to the source depth sub-ranges integer mask. In other embodiments, the capturing device/application might determine the application of an image processing operation. For example, downscaling or cropping could be applied on the source depth sub-ranges integer mask to reduce bitrate. In such cases, additional metadata may be provided to indicate how the downscaling is conducted, or which rows/columns are cropped, and potentially the spatial association of the processed source depth sub-ranges integer mask with the target depth image. Such embodiments may require extra technical step(s).

NOTE: In step 3, the basic embodiment assumes that a source depth sub-ranges integer mask is used to associate the source depth image with the source depth sub-ranges. In other embodiments, the capturing device/application might determine different manners to convey the association information between source depth image samples and source depth sub-ranges. For example, by using shape masks to specify spatial regions that correspond to a source depth sub-range in the source depth image via shape, centre, and other characteristics. Or, in case the target depth image is represented by a grayscale image, employing unused colour components to carry the corresponding source depth sub-ranges information. In such cases, additional metadata may be provided (e.g., relationship between shape masks and source depth sub-ranges). Such embodiments may require extra technical step(s).

NOTE: In step 3, the basic embodiment assumes that a source depth sub-ranges integer mask is determined per source depth image. In other embodiments, the capturing device/application might determine a source depth sub-ranges integer mask that can be used for more than one source depth images. For example, the same source depth sub-ranges integer mask could be used for a single depth frame, an entire depth sequence, or anything in-between. In such cases, additional metadata may be provided (e.g., to advise the receiving device to store and use the latest available source depth sub-ranges integer mask). Such embodiments may require extra technical step(s).

NOTE: In step 4, the basic embodiment assumes that a transformation function is applied to the source depth image to obtain the target depth image based on the source depth sub-ranges, with all source depth image samples being in-bound. In other embodiments, the capturing device/application might determine out-of-bound source depth sub-ranges. In such cases, the transformation functions used for in-bound and out-of-bound source depth sub-ranges may be different. For example, in-bound source depth image samples may use a conventional transformation function (e.g., f: x - min(R_i), for i = 1, ..., N, with N the number of source depth sub-ranges), or another transformation function, to shift corresponding values to the target depth range. For out-of-bound source depth image samples, the corresponding values are irrelevant and can be determined by the capturing device/application. For example, a dedicated dummy value that belongs to the target depth range could be used for all out-of-bound target depth image samples, or neighbouring values that would enable better compression efficiency for the target depth image (e.g., via higher redundancy). In such cases, additional metadata may be provided to indicate the transformation functions. Such embodiments may require extra technical step(s).

NOTE: In step 4, the basic embodiment assumes that the target depth image has the same resolution and 1-1 spatial association with the source depth image, where a target depth image sample indicates the transformed value of the co-located source depth image sample. In other embodiments, the capturing device/application might determine a different spatial association. For example, by splitting the source depth image into N regions and associating each source depth image region with a target depth image sample (i.e., in this case, the target depth image contains N samples). In such cases, additional metadata may be provided to indicate the spatial association of the target depth image with the source depth image and potentially its spatial association with the source depth sub-ranges integer mask. Such embodiments may require extra technical step(s).

NOTE: In step 4, the basic embodiment assumes that no further image processing operations are applied to the target depth image. In other embodiments, the capturing device/application might determine the application of an image processing operation. For example, downscaling or cropping could be applied on the target depth image to reduce bitrate. In such cases, additional metadata may be provided to indicate how the downscaling was conducted, or which rows/columns were cropped. Such embodiments may require extra technical step(s).

NOTE: In step 5, the basic embodiment assumes that the generated metadata related to the association information between source depth image samples and source depth sub-ranges are losslessly preserved and carried in metadata-related fields of a file. In other embodiments, the capturing device/application might use video tracks and lossy encoding to convey this type of information. In such cases, additional metadata may be provided to indicate the type of information carried by the video track. Such embodiments may require extra technical step(s).

NOTE: After step 7, the encapsulated data may be transmitted over the network either as a stream (after establishing a session) or as a file (potentially in parts), or may be stored in the device as a file.

NOTE: In the basic embodiment, the source depth image, the target depth image, and the source depth sub-ranges integer mask have the same resolution, while there is 1-1 spatial association between source depth image and target depth image, as well as between source depth image and source depth sub-ranges integer mask. This leads to spatial alignment (i.e., same resolution and 1-1 spatial association) between target depth image and source depth sub-ranges integer mask. Therefore, there is no need for explicit description of the spatial association between them in the metadata, which is typically needed to reconstruct the source depth image at the receiving device. In other embodiments, there might be no spatial alignment between source depth image and target depth image, or source depth image and source depth sub-ranges integer mask, which leads to no spatial alignment between target depth image and source depth sub-ranges integer mask. In such cases, there are at least two alternatives to obtain spatial alignment between these two: (a) metadata that describe the spatial association of the target depth image with the source depth image, and the spatial association of the source depth sub-ranges integer mask with the source depth image, as well as description of potential processing steps for target depth image and the source depth sub-ranges integer mask, which allow to recover corresponding versions of the target depth image and the source depth sub-ranges integer mask that have spatial alignment with the source depth image, and in turn between them; (b) dedicated metadata that describe the spatial association between target depth image and source depth sub-ranges integer mask. Some of the NOTES above partially cover the (a) case. Such embodiments may require extra technical step(s).

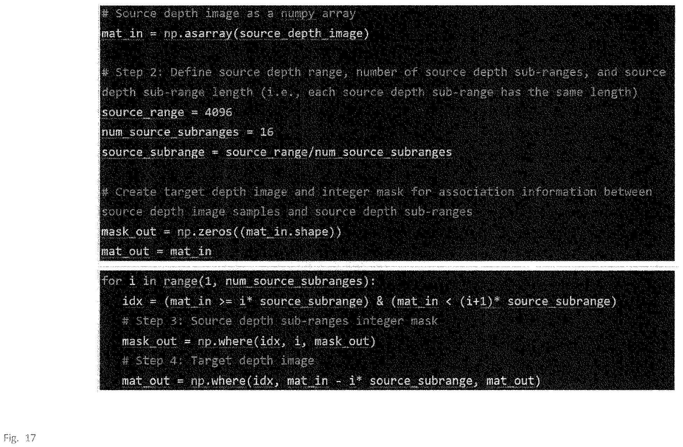

Fig. 17 illustrates an exemplary code making reference to the above-mentioned steps.

A further embodiment provides a receiving device configured for performing the following steps:

Step 1: Obtaining the encapsulated depth image and metadata.
Step 2: Decoding the depth image.
Step 3: Parsing the metadata comprising the source depth sub-ranges and the association information between source depth image samples and source depth sub-ranges.
Step 4: Reconstructing the source depth image from the decoded depth image and the metadata, with the reconstructed source depth image samples taking values from the source depth range.
Step 3 may be part of the post-decoding step of Fig. 14.

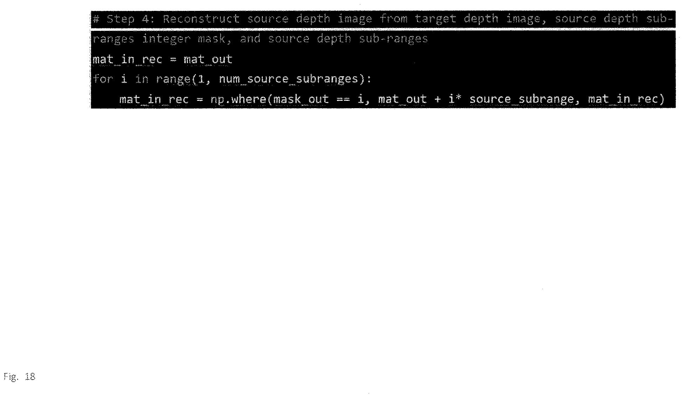

Fig. 18 illustrates an exemplary code for the receiver side.

The steps for both capturing and receiving devices were drafted considering a single depth image that corresponds to a specific time instance. The same steps can be applied on depth videos instead of depth images, by treating each frame of the video as an image.

In the following, embodiments for signalling the depth-data are presented.

The disclosure provisions several signalling methods:

- As metadata in video bitstream which can be up to -frame granularity.
- As dynamic metadata in a file format which can change up to frame granularity but not inside the video bitstream.

For video bitstream signalling, the use of new Supplemental Enhancement Information (SEI) messages, the use of auxiliary picture, and the embedding of metadata in unused chromatic components of an image plane will be illustrated. For file format, the use of new structure in the ISO Base Media File Format (ISOBMFF) [25] will be illustrated. These are examples of in-video bitstream and file format signalling that rely on referenced standards; however, other standards could be used as basis for implementing this invention.

The following assumptions are made for the embodiments below:

- We consider a depth video with corresponding metadata.
- We consider only the source depth sub-ranges and the association information between source depth image samples and source depth sub-ranges, which are required to be able to reconstruct the source depth image. We consider that the actual (transformed depth) values are obtained by the target depth image, which is encoded as a conventional video frame.
- The association information between source depth image samples and source depth sub-ranges could be implemented in different ways. In the embodiments below, an integer mask is used (i.e., termed as source depth sub-ranges integer mask in the entire manuscript).
- The source depth sub-ranges integer mask can have different spatial associations with the source depth image. In the embodiments below, 1-1 spatial association is used.
- The target depth image can have either the same or different resolution with respect to the source depth image. Although not explicitly referring to the target depth image, in the embodiments below, the same resolution is used.
- The target depth image can have different spatial associations with the source depth image. Although not explicitly referring to the target depth image, in the embodiments below, 1-1 spatial association is used.

*Signalling in video stream*

For the purpose of the invention, the source depth sub-ranges and the association information between source depth image samples and source depth sub-ranges (i.e., the source depth sub-ranges integer mask) may need to be transmitted along with the video signal from the encoding step (e.g. in a studio, on a server) up to the receiver (e.g. the TV receiver, a smartphone, a tablet, a HMD glasses, etc...). Therefore, the source depth sub-ranges and the source depth sub-ranges integer mask may be signalled as part of the video bitstream's metadata.

For illustrating the transport of the information, the following is an example based on the NAL-based video codec standards which are currently H.264/AVC [26], H.265/HEVC [27], MPEG-5 EVC [28] and H.266/VVC [29]. But similar signalling could be achieved for other coding standards such as AV1 [30] or the upcoming AV2 standard.

A Network Abstraction Layer (NAL) unit is the encapsulation method for a video bitstream. A NAL unit is composed of a header and a payload. The concept of NAL unit is identical for those 4 standards although the definition of the NAL header may vary slightly between H.264/AVC [26], H.265/HEVC [27], MPEG-5 EVC [28] and H.266/VVC [29].

For the remaining of this section, the signalling will take the H.266/VVC [29] standard as a basis for illustration purposes. Similar embodiments can be drawn up for H.264/AVC [26], H.265/HEVC [27], or MPEG-5 EVC [28].

Table 1 is the general syntax of a NAL unit as defined in H.266/VVC [29]. The formatting of those tables follows the conventions defined in H.266/VVC [29]. Please refer to clause 7.1 (Method of specifying syntax in tabular form) and clause 7.2 (Specification of syntax functions and descriptors) in H.266/VVC [29].

Table 1 - General NAL unit syntax as defined in H.266/VVC [29].

| *Nal_unit( NumBytesInNalUnit ){* | ***Descriptor*** |
|---|---|
| *nal_unit_header( )* | |
| *NumBytesInRbsp* = 0 | |
| *for( i = 2; i < NumBytesInNalUnit; i++ )* | |
| *if(* i + 2 *< NumBytesInNalUnit && next_bits( 24 ) = = 0x000003 )* *{* | |
| ***rbsp_byte**[ NumBytesInRbsp++ ]* | *b(8)* |
| ***rbsp_byte**[ NumBytesInRbsp++ ]* | *b(8)* |
| *i+= 2* | |
| ***emulation_prevention_three_byte** /* equal to 0x03 */* | *f(8)* |
| *} else* | |
| ***rbsp_byte**[ NumBytesInRbsp++ ]* | *b(8)* |
| *}* | |

The signalling consists in defining a new type of Supplemental Enhancement Information (SEI) message. SEI are metadata carried in a video bitstream of H.264/AVC [26], H.265/HEVC [27] or H.266/VVC [29] that can support the decoding of the video (e.g., buffering period SEI) or that can be useful for some processing after decoding (e.g., colour remapping SEI). Each SEI type defines the syntax of the payload as well as the semantic of the data so that the implementor can make use of the signalled SEI if they want to support it. A SEI message is carried in the video bitstream as a NAL unit and the type of SEI is expressed by a payload type. In H.266/VVC [29], the payload types are defined in clause D.2.1 (General SEI payload syntax). For signalling the source depth sub-ranges and the source depth sub-ranges integer mask, one may thus define a new payload type, e.g. payload type '134' as part of the current reserved range of values as in Table 2.

Table 2 - Modification of general SEI payload syntax in H.266/VVC [29].

| *Sei_payload( payloadType, payloadSize ) {* | ***Descriptor*** |
|---|---|
| *if( nal_unit_type = = PREFIX_SEI_NUT )* | |
| *if( payloadType = = 0* ) | |
| *buffering_period( payloadSize* ) | |
| *else if( payloadType = = 1 )* | |
| *pic_timing( payloadSize )* | |
| ... | |

(continued)

| | |
|---|---|
| *else if( payloadType = = 133 )* | |
| *scalable_nesting( payloadSize )* | |
| else if( payloadType = = 134 ) | |
| source_depth_subranges_info( payloadSize ) | |
| *else /* Specified in Rec. ITU-T H.274 / ISO/IEC 23002-7 */* | |
| *reserved_message (payloadSize)* | |
| ... | |
| *}* | |

<u>*Using SEI messages*</u>

*Embodiment 1*

In this case, a SEI message carries information about the source depth sub-ranges and the source depth sub-ranges integer mask.

There are different manners to determine and specify the source depth sub-ranges. In this example, the source depth sub-ranges are in-bound, non-overlapping, sequential, and have the same length (equal to a target depth range). Moreover, in this example the source depth sub-ranges are implicitly defined by the source depth range and the number of source depth sub-ranges.

The source depth sub-ranges integer mask can have either the same or different resolution with respect to the source depth image. In this example, their resolutions are the same, hence, the Sequence Parameter Set (SPS) signalling is used to retrieve the width and height parameters (i.e., no need to specify them in the source_depth_subranges_info SEI message).

*Syntax of embodiment 1*

A new payload type may be defined as in Table 3. 16-bit source depth images (i.e., 0-65535 source depth range), and 8-bit encoding are assumed as an example, which leads to 256 (2^8) source depth sub-ranges.

Table 3 - Signalling of the source depth sub-ranges and the source depth sub-ranges integer mask in a SEI message.

| Source_depth_subranges_info( *payloadSize* ) { | **Descriptor** |
|---|---|
| **sdsi_cancel_flag** | u(1) |
| if( ! sdsi_cancel_flag) { | |
| **sdsi_depth_range** | u(16) |
| **sdsi_num_depth_subranges** | u(8) |
| for(i=0; i < **pps_pic height in luma samples;** i++) | |
| for(j=0; j < **pps_pic width in_luma samples;** j++) | |
| **sdsi_mask_value**[ i ][ j ] | u(8) |
| } | |
| } | |

*Semantics of embodiment 1*

The source_depth_subranges_info SEI message provides information that describes the source depth sub-ranges and the source depth sub-range integer mask in the video, and is defined up to a frame.

**sdsi_cancel_flag** equal to 1 indicates that the SEI message cancels the persistence of any previous source_depth_subranges_info SEI message. When equal to 0, the information that should be considered follows.

**sdsi_depth_range** specifies the source depth range.

**sdsi_num_depth_subranges** specifies the number of the source depth sub-ranges. When the sdsi_depth_range and the sdsi_num_depth_subranges are present, the source depth sub-ranges are non-overlapping, sequential, and have the same length equal to sdsi_depth_range/sdsi_num_depth_subranges.

**sdsi_mask_value**[ i ][ j ] specifies the source depth sub-range index of the collocated source depth image sample. When sdsi_mask_value [ i ][ j ] is equal to k, the start, and the end of the source depth sub-range are obtained as k*sdsi_depth_range/sdsi_mask_depth_subranges, and (k+1)*sdsi_depth_range/sdsi_num_depth_subranges-1, respectively.

*Embodiment 2*

In this case, a SEI message carries information about the source depth sub-ranges and the source depth sub-ranges integer mask.

There are different manners to determine and specify the source depth sub-ranges. In this example, the source depth sub-ranges are sequential, they could be non-overlapping or overlapping, they could have the same or different length, and they could be either in-bound or out-of-bound. In this example the source depth sub-ranges are explicitly defined by arrays that determine the start, the end, and the type (i.e., in-bound or out-of-bound) of each source depth sub-range.

The source depth sub-ranges integer mask can have either the same or different resolution with respect to the source depth image. In this example, their resolutions are different and, hence, the width and height parameters should be specified. A rescaling operation is then needed, and possibly corresponding signalling to indicate how this rescaling operation is performed, such that the rescaled source depth sub-ranges integer mask resolution matches the one of the source depth images.

*Syntax of embodiment 2*

A new payload type may be defined as in Table 4. 16-bit source depth images (i.e., 0-65535 source depth range), and 8-bit encoding are assumed as an example, which leads to 256 (2^8) source depth sub-ranges.

Table 4 - Signalling of the source depth sub-ranges and the source depth sub-ranges integer mask in a SEI message.

| Source_depth_subranges_info( *payloadSize* ) { | **Descriptor** |
|---|---|
| **sdsi_cancel_flag** | u (1) |
| if( ! sdsi_cancel_flag) { | |
| **sdsi_num_depth_subranges** | u(8) |
| for(k=0; k < **sdsi_num_depth_subranges**; k++) | |
| **sdsi_depth_subrange_start**[ k ] | u(8) |
| **sdsi_depth_subrange_end**[ k ] | u(8) |
| **sdsi_depth_subrange_type** [ k ] | u (1) |
| **sdsi_mask_height** | ue(v) |
| **sdsi_mask_width** | ue(v) |
| for(i=0; i < **sdsi_mask_height;** i++) | |
| for(j=0; j < **sdsi_mask_width;** j++) | |
| **sdsi_mask_value**[ i ][ j ] | u(8) |
| } | |
| } | |

*Semantics of embodiment 2*

The source_depth_subranges_info SEI message provides information that describes the source depth sub-ranges and the source depth sub-range integer mask in the video, and is defined up to a frame.

**sdsi_cancel_flag** equal to 1 indicates that the SEI message cancels the persistence of any previous source_depth_subranges_info SEI message. When equal to 0, the information that should be considered follows.

**sdsi_num_depth_subranges** specifies the number of the source depth sub-ranges.

**sdsi_depth_subrange_start** [ k ] specifies the start of the k-th source depth sub-range.

**sdsi_depth_subrange_end** [ k ] specifies the end of the k-th source depth sub-range.

**sdsi_depth_subrange_type** [ k ] specifies the type of the k-th source depth sub-range. When sdsi_depth_subrange_type [ k ] is equal to 0, the k-th source depth sub-range is in-bound. When sdsi_depth_subrange_type [ k ] is equal to 1, the k-th source depth sub-range is out-of-bound.

**sdsi_mask_height** specifies the height of the integer mask used to associate the source depth image samples with the source depth sub-ranges.

**sdsi_mask_width** specifies the width of the integer mask used to associate the source depth image samples with the source depth sub-ranges.

**sdsi_mask_value**[ i ][ j ] specifies the source depth sub-range index of the collocated source depth image sample. When sdsi_mask_value [ i ][ j ] is equal to k, the start, the end, and the type of the source depth sub-range are obtained as sdsi_depth_subrange_start [ k ], sdsi_depth_subrange_end [ k ], and sdsi_depth_subrange_type [ k ], respectively.

NOTE: There could be more sdsi_depth_subrange_type [ k ] values defined, to indicate that an out-of-bound source depth sub-range is closer, in-between, or further than a/some in-bound source depth range(s).

*Embodiment 3*

In this case, a first SEI message carries information about the source depth sub-ranges and the resolution of the source depth sub-ranges integer mask, and a second SEI message carries the source depth sub-ranges integer mask.

There are different manners to determine and specify the source depth sub-ranges. In this example, the source depth sub-ranges are sequential, they could be non-overlapping or overlapping, they could have the same or different length, and they could be either in-bound or out-of-bound. In this example the source depth sub-ranges are explicitly defined by arrays that determine the start, the end, and the type (i.e., in-bound or out-of-bound) of each source depth sub-range.

The source depth sub-ranges integer mask can have either the same or different resolution with respect to the source depth image. In this example, their resolutions are different and, hence, the width and height parameters should be specified. A rescaling operation is then needed, and possibly corresponding signalling to indicate how this rescaling operation is performed, such that the rescaled source depth sub-ranges integer mask resolution matches the one of the source depth images.

*Syntax of embodiment 3*

A new payload type may be defined as in Table 5 and Table 6. 16-bit source depth images (i.e., 0-65535 source depth range), and 8-bit encoding are assumed as an example, which leads to 256 (2^8) source depth sub-ranges.

Table 5 - Signalling of the source depth sub-ranges and the resolution of the source depth sub-ranges integer mask in a SEI message.

| Source_depth_subranges_info( *payloadSize* ){ | **Descriptor** |
|---|---|
| **sdsi_cancel_flag** | u(1) |
| if( ! sdsi_cancel_flag) { | |
| **sdsi_num_depth_subranges** | u(8) |
| for(k=0; k < **sdsi_num_depth_subranges**; k++) | |
| **sdsi_depth_subrange_start**[ k ] | u(8) |
| **sdsi_depth_subrange_end**[ k ] | u(8) |
| **sdsi_depth_subrange_type** [ k ] | u(1) |
| **sdsi_mask_height** | ue(v) |
| **sdsi_mask_width** | ue(v) |
| } | |
| } | |

Table 6 - Signalling of the source depth sub-ranges integer mask in a SEI message.

| Source_depth_subranges_integer_mask( payloadSize) { | **Descriptor** |
|---|---|
| **sdsim_cancel_flag** | u(1) |
| if( ! sdsim_cancel_flag){ | |
| for(i=0; i < **sdsi_mask_height;** i++) | |
| for(j=0; j < **sdsi_mask_width;** j++) | |
| **sdsim_mask_value**[ i ][ j ] | u(8) |
| } | |
| } | |

*Semantics of embodiment 3*

The source_depth_subranges_info SEI message provides information that describes the source depth sub-ranges and the resolution of the source depth sub-range integer mask in the video, and can be used across several frames. The source_depth_subranges_integer_mask SEI message carries the source depth sub-range integer mask in the video, and is defined up to a frame.

**sdsi_cancel_flag** equal to 1 indicates that the SEI message cancels the persistence of any previous source_depth_subranges_info SEI message. When equal to 0, the information that should be considered follows.

**sdsi_num_depth_subranges** specifies the number of source depth sub-ranges.

**sdsi_depth_subrange_start** [ k ] specifies the start of the k-th source depth sub-range.

**sdsi_depth_subrange_end** [ k ] specifies the end of the k-th source depth sub-range.

**sdsi_depth_subrange_type** [ k ] specifies the type of the k-th source depth sub-range. When sdsi_depth_subrange_type [ k ] is equal to 0, the k-th source depth sub-range is in-bound. When sdsi_depth_subrange_type [ k ] is equal to 1, the k-th source depth sub-range is out-of-bound.

**sdsi_mask_height** specifies the height of the integer mask used to associate the source depth image samples with the source depth sub-ranges.

**sdsi_mask_width** specifies the width of the integer mask used to associate the source depth image samples with the source depth sub-ranges.

**sdsim_cancel_flag** equal to 1 indicates that the SEI message cancels the persistence of any previous source_depth_subranges_integer_mask SEI message. When equal to 0, the information that should be considered follows.

**sdsim_mask_value**[ i ][ j ] specifies the source depth sub-range index of the collocated source depth image sample. When sdsim_mask_value [ i ][ j ] is equal to k, the start, the end, and the type of the source depth sub-range are obtained as sdsi_depth_subrange_start [ k ], sdsi_depth_subrange_end [ k ], and sdsi_depth_subrange_type [ k ], respectively.

NOTE: There could be more sdsi_depth_subrange_type [ k ] values defined, to indicate that an out-of-bound source depth sub-range is closer, in-between, or further than a/some in-bound source depth range(s).

*Using auxiliary pictures*

In this case, the sequence of source depth sub-ranges integer masks is encoded as a sequence of auxiliary pictures and constitute a source depth sub-ranges integer mask auxiliary layer next to the primary layer containing the target depth image sequence.

This means that each source depth sub-ranges integer mask auxiliary picture layer is associated with one primary picture layer and one primary picture layer may be associated with one or more source depth sub-ranges integer mask auxiliary picture layers.

Additional metadata in the form of a SEI message are needed to signal the interpretation of the source depth sub-ranges integer mask sample values (e.g., source depth sub-ranges) and the definition of the source depth sub-ranges integer mask resolution, among others.

To this end, this embodiment presents the modifications of the scalability dimension information SEI defined in the Versatile Supplemental Enhancement Information (VSEI) [31] standard and referenced by the H.266/VVC [29] standard to enable this variant. Note that a similar extension in the scalable H.265/HEVC [27] can be achieved. Moreover, an exemplary source depth sub-ranges information SEI message is described, following embodiment 3 described above, which provides information about the source depth sub-ranges and the source depth sub-ranges integer mask resolution.

Analogously, the SEI message could be modified accordingly to follow embodiment 1. Other implementations could also be crafted.

The modifications of the scalability dimension information SEI defined in the VSEI [31] standard refer to clause 8.19 (Scalability dimension information SEI message), and are presented below in section *"Scalability dimension information SEI message*, while the source depth sub-ranges information SEI message is presented below in section *"Source depth sub-ranges information SEI message"*.

*Scalability dimension information SEI message*

*Syntax*

| *scalability_dimension_info( payloadSize ) {* | ***Descriptor*** |
|---|---|
| ***sdi_max_layers_minus1*** | *u (6)* |
| ***sdi_multiview_info_flag*** | *u(1)* |
| ***sdi_auxiliary_info_flag*** | *u(1)* |
| *if( sdi_multiview_info_flag / / sdi_auxiliary_info_flag) {* | |
| *if( sdi_multiview_info_flag)* | |
| ***sdi_view_id_len_minus1*** | *u (4)* |
| *for( i = 0; i <= sdi_max_layers_minus1; i++) {* | |
| ***sdi_layer_id**[ i ]* | *u(6)* |
| *if( sdi_multiview_info_flag )* | |
| ***sdi_view_id_val**[ i ]* | *u(v)* |
| *if( sdi_auxiliary_info_flag )* | |
| ***sdi_aux_id**[ i ]* | u(8) |
| *if( sdi_aux_i[ i ] > 0) {* | |
| ***sdi_num_associated_primary_layers_minus1**[ i ]* | *u(6)* |
| *for( j = 0; j <= sdi_num_associated_primary_layers_minus1[ i];j++)* | |
| ***sdi_associated_primary_layer_idx**[ i ][ j ]* | *u(6)* |
| *}* | |
| *}* | |
| *}* | |
| *}* | |
| *}* | |

*Semantics*

*The scalability_dimension_info SEI message provides the Scalability Dimension Information (SDI) for each layer in the current Coded Video Sequence (CVS), i.e., the CVS containing the SDI SEI message, such as 1) when there may be multiple views, the view ID of each layer; and 2) when there may be auxiliary information (such as depth or alpha) carried by one or more layers, the auxiliary ID of each layer.*

*When an SDI SEI message is present in any Access Unit (AU) of a CVS, an SDI SEI message shall be present for the first AU of the CVS. All SDI SEI messages in a CVS shall have the same content.*

***sdi_aux_id**[ i ] equal to 0 indicates that the i-th layer in the current CVS does not contain auxiliary pictures. Sdi_aux_id[ i ] greater than 0 indicates the type of auxiliary pictures in the i-th layer in the current CVS as specified in Table 15. When sdi_auxiliary_info_flag is equal to 0, the value of sdi_aux_id[ i ] is inferred to be equal to* 0.

***Table 15 - Mapping of sdi_aux_id[ i ] to the type of auxiliary pictures***

| ***sdi_aux_id[ i ]*** | ***Name*** | ***Type of auxiliary pictures*** |
|---|---|---|
| 1 | *AUX_ALPHA* | *Alpha plane* |
| 2 | *AUX_DEPTH* | *Depth picture* |
| 3 | *AUX_SOURCE_DEPTH_SUBRANGES_INTEGER_MASK* | *Integer mask that describes the association information between source depth image samples and source depth sub-ranges* |
| *4..127* | | *Reserved* |
| *128..159* | | *Unspecified* |
| *160..255* | | *Reserved* |
| *NOTE 1 The interpretation of auxiliary pictures associated with sdi_aux_id[ i ] in the range of 128 to 159, inclusive, is specified through means other than the sdi_aux_id[ i ] value.* | | |

In Table 15, entry 3 is added and entry 4 is adapted accordingly, with respect to existing methods.

*sdi_aux_id[ i ] shall be in the range of 0 to* 3 (previously 0 to 2), *inclusive, or 128 to 159, inclusive, for bitstreams conforming to this version of this document. Although the value of sdi_aux_id[ i ] shall be in the range of 0 to* 3 (previously 0 to 2), *inclusive, or 128 to 159, inclusive, in this version of this document, decoders shall also allow other values of sdi_aux_id[ i ] in the range of 0 to 255, inclusive.*

*If sdi_aux_id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer.* START INSERTION When sdi_aux_id [ i ] is equal to 3, the i-th layer is also referred to as a source depth sub-ranges integer mask auxiliary layer. END INSERTION

*Source depth sub-ranges information SEI message*

This SEI message carries information about the source depth sub-ranges and the resolution of the source depth sub-ranges integer mask, with the source depth sub-ranges integer mask sample values coded in auxiliary pictures of type AUX_SOURCE_DEPTH_SUBRANGES_INTEGER_MASK and the corresponding target depth images denoting the associated primary pictures.

There are different manners to determine and specify the source depth sub-ranges. In this example, the source depth sub-ranges are sequential, they could be non-overlapping or overlapping, they could have the same or different length, and they could be either in-bound or out-of-bound. In this example the source depth sub-ranges are explicitly defined by arrays that determine the start, the end, and the type (i.e., in-bound or out-of-bound) of each source depth sub-range.

The source depth sub-ranges integer mask can have either the same or different resolution with respect to the source depth image. In this example, their resolutions are different and, hence, the width and height parameters should be specified. A rescaling operation is then needed, and possibly corresponding signalling to indicate how this rescaling operation is performed, such that the rescaled source depth sub-ranges integer mask resolution matches the one of the source depth images.

*Syntax*

Table 7 - Signalling of the source depth sub-ranges and the resolution of the source depth sub-ranges integer mask in a SEI message.

| Source_depth_subranges_info( payloadSize ) { | **Descriptor** |
|---|---|
|     **sdsi_cancel_flag** | u(1) |
|     if( ! sdsi_cancel_flag) { | |
|         **sdsi_num_depth_subranges** | ue(v) |

(continued)

| | |
|---|---|
| for(k=0; k < **sdsi_num_depth_subranges;** k++) | |
| **sdsi_depth_subrange_start**[ k ] | ue(v) |
| **sdsi_depth_subrange_end**[ k ] | ue(v) |
| **sdsi_depth_subrange_type** [ k ] | u(1) |
| **sdsi_mask_height** | ue(v) |
| **sdsi_mask_width** | ue(v) |
| } | |
| } | |

*Semantics*

The source_depth_subranges_info SEI message provides information that describes the source depth sub-ranges and the resolution of the source depth sub-ranges integer mask in the video, and is defined up to a frame.

When a CVS does not contain an SDI SEI message with sdi_aux_id[ i ] equal to 3 for at least one value of i, no picture in the CVS shall be associated with a source_depth_subranges_info SEI message.

When an AU contains both an SDI SEI message with sdi_aux_id[ i ] equal to 3 for at least one value of i and a source_depth_subranges_info SEI message, the SDI SEI message shall precede the source_depth_subranges_info SEI message in decoding order.

When an access unit contains an auxiliary picture picA in a layer, with nuh_layer_id equal to nuhLayerIdA, that is indicated as a source depth sub-ranges integer mask auxiliary layer by an SDI SEI message, the source depth sub-ranges integer mask sample values of picA persist in output order until one or more of the following conditions are true:

- The next picture, in output order, with nuh_layer_id equal to nuhLayerIdA is output.
- A Coded Layer Video Sequence (CLVS) containing the auxiliary picture picA ends.
- The bitstream ends.
- A CLVS of any associated primary layer of the auxiliary picture layer with nuh_layer_id equal to nuhLayerIdA ends.

The following semantics apply separately to each nuh_layer_id targetLayerId among the nuh_layer_id values to which the source_depth_subranges_info SEI message applies.

**sdsi_cancel_flag** equal to 1 indicates that the SEI message cancels the persistence of any previous source_depth_subranges_info SEI message in output order that applies to the current layer. When equal to 0, the information that should be considered follows.

Let currPic be the picture that the source_depth_subranges_info SEI message is associated with. The semantics of source_depth_subranges_info SEI message persist for the current layer in output order until one or more of the following conditions are true:

- A new CLVS of the current layer begins.
- The bitstream ends.
- A picture in the current layer in an AU associated with a source_depth_subranges_info SEI message is output that follows the current picture in output order.

**sdsi_num_depth_subranges** specifies the number of source depth sub-ranges.

**sdsi_depth_subrange_start** [ k ] specifies the start of the k-th source depth sub-range.

**sdsi_depth_subrange_end** [ k ] specifies the end of the k-th source depth sub-range.

**sdsi_depth_subrange_type** [ k ] specifies the type of the k-th source depth sub-range. When sdsi_depth_subrange_type [ k ] is equal to 0, the k-th source depth sub-range is in-bound. When sdsi_depth_subrange_type [ k ] is equal to 1, the k-th source depth sub-range is out-of-bound.

**sdsi_mask_height** specifies the height of the decoded source depth sub-ranges integer mask auxiliary picture.

**sdsi_mask_width** specifies the width of the decoded source depth sub-ranges integer mask auxiliary picture.

NOTE: There could be more sdsi_depth_subrange_type [ k ] values defined, to indicate that an out-of-bound source depth sub-range is closer, in-between, or further than some in-bound source depth range(s)

*Embedding in chromatic components*

In this case, the source depth sub-ranges integer mask sample values are embedded in U and/or V components, considering that encoding of mono-component images that are typically used to represent depth images is not very popular.

Specifically, the target depth image sample values are assigned to the Y component of a YUV image, and the source depth sub-ranges integer mask sample values are embedded in the U and/or V components. The composite picture can then be encoded using a conventional codec for coloured video.

Additional metadata are needed to signal the decomposition of source depth sub-ranges integer mask sample values into the U and/or V components, the correspondence between Y and U and/or V components, and the interpretation of U and/or V sample values (e.g., source depth sub-ranges), among others.

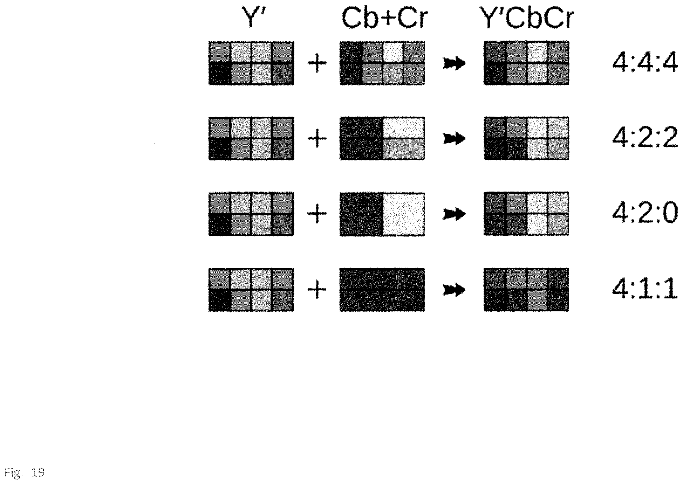

Fig. 19 illustrates a schematic representation of widely-used chroma subsampling formats (from [33]).

Below, we provide provisions of embodiments for different chroma formats, whose schematic representation is given in Fig. 19. *YUV 4:4:4*

Considering a YUV 4:4:4 chroma format, for each Y sample, there is one U and one V samples, which are co-located (Fig. 19, first row).

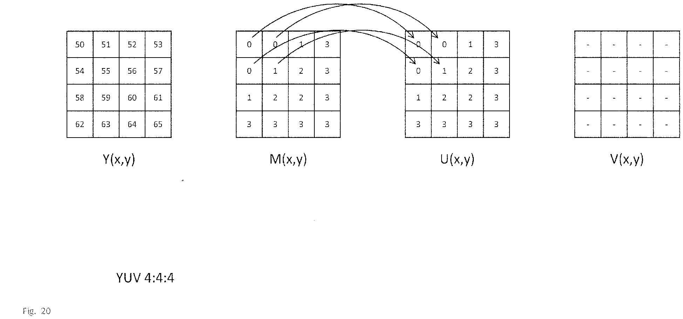

In a primary embodiment, the Y component carries the target depth image sample values, while either the U or the V components carry the source depth sub-ranges integer mask sample values. The unused remaining component may carry dummy values that could potentially assist in bitrate reduction. An illustration of this embodiment is given in Fig. 20, where the Y component carries the target depth image samples, the (conceptual) (The embodiments of this section do not rely on the creation or storage of the source depth sub-ranges integer mask. It is included in the illustrations to assist in clarifying and conceptualizing the embodiments.) source depth sub-ranges integer mask M is spatially aligned with Y and its sample values are carried by the U component. The V component carries dummy values in this example.

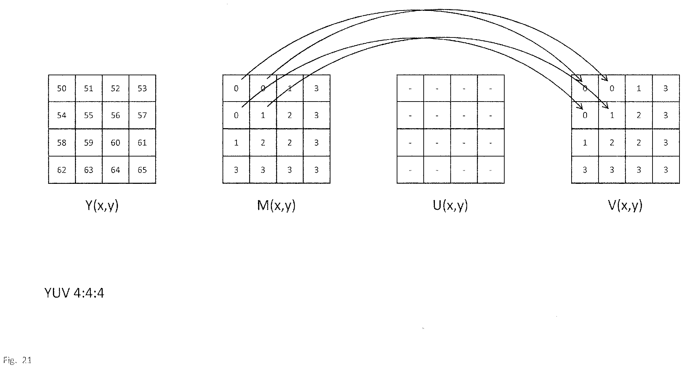

In Fig. 21, the V component carries the source depth sub-ranges integer mask sample values instead. The U component carries dummy values in this example.

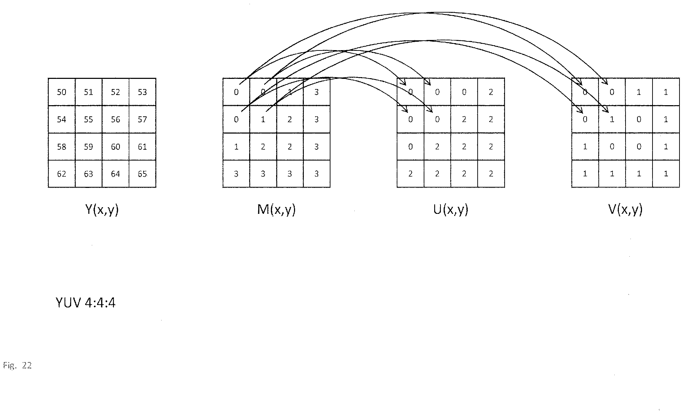

In alternative embodiments, the source depth sub-ranges integer mask sample values could be split into the U and V components. For example, assuming source depth sub-ranges integer mask sample values that require N bits, the K most significant bits (i.e., first bits) could be assigned to the U component and the N-K least significant bits (i.e., last bits) could be assigned to the V component. In Fig. 22, such an embodiment is illustrated. Other ways to suitably split the source depth sub-ranges integer mask sample values to U and V components could also be used.

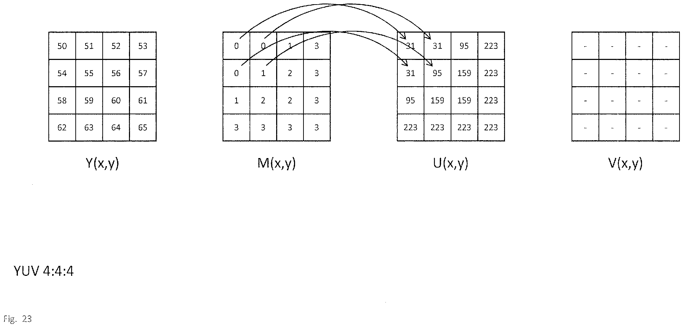

The source depth sub-ranges integer mask sample values assigned to U and/or V components could be used as is, or they could be mapped to larger destination values that cover the entire colour range (i.e., 0-255 for 8-bit encoding) for improved resistance against encoding artifacts (e.g., in lossy compression, decoding may lead to precision lost; however, given sufficiently distant encoded values, this loss may be recovered). For example, considering the primary embodiment, if there are 4 source depth sub-ranges integer mask sample values, the destination values could be 31 + 0:64:255 (i.e., offset + start:step:end) for U and/or V components, and the recovery could be performed by assigning each decoded value to its closest destination value. In Fig. 23, an illustration of this embodiment is presented. Other mappings could alternatively be used. The V component carries dummy values in this example.

In all embodiments, metadata are required to signal the correspondence between Y sample and U and/or V samples, and if a component carries no meaningful information. In alternative embodiments, metadata are also required to signal the type of splitting of source depth sub-ranges integer mask sample values. Metadata are also required to signal a potential mapping between source depth sub-ranges integer mask sample values and destination values. Metadata are also required to signal the interpretation of the source depth sub-ranges integer mask sample values (i.e., source depth sub-ranges).

*YUV 4:2:2*

Considering a YUV 4:2:2 chroma format, for each pair of successive Y samples in horizontal order, there is one U and one V samples, while for each Y sample in vertical order, there is one U and one V samples (Fig. 19, second row).

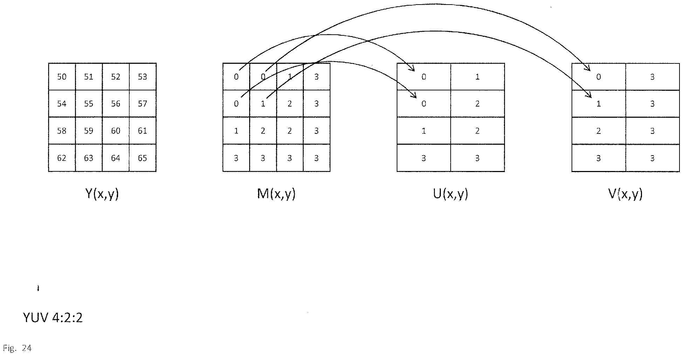

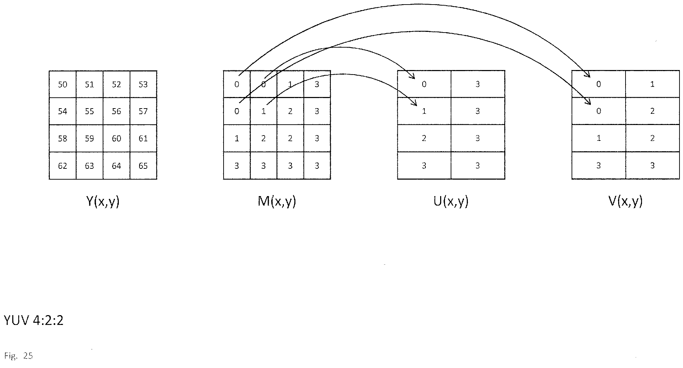

In a primary embodiment, the Y component carries the target depth image sample values, while the U component carries the source depth sub-ranges integer mask sample values of one out of two successive M samples in horizontal order, and V component carries the source depth sub-ranges integer mask sample values of the remaining of the two successive M samples in horizontal order. For instance, the U and V components may carry the source depth sub-ranges integer mask sample values that correspond to the even and odd columns of M, respectively, as shown in Fig. 24, or odd and even columns of M respectively, as shown in Fig 25.

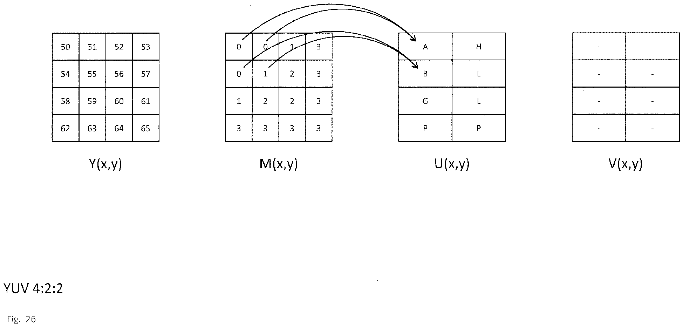

In alternative embodiments, either the U or the V component carry a combination of two successive source depth sub-ranges integer mask sample values in horizontal order. This can be implemented by obtaining all pair combinations of source depth sub-ranges integer mask sample values, and assigning them to corresponding symbols, which are carried by the U or V component. The unused remaining component may carry dummy values that could potentially assist in bitrate reduction. For example, if there are 4 source depth sub-ranges integer mask sample values, there would be 16 pair combinations, which requires 16 symbols. An illustration of this embodiment is presented in Fig. 26. The V component carries dummy values in this example . Other types of groupings for the source depth sub-ranges integer mask samples could be devised.

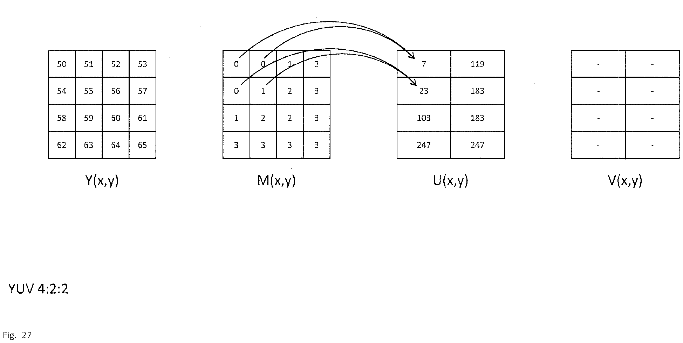

The source depth sub-ranges integer mask sample values or the symbols assigned to U and/or V components could be used as is, or they could be mapped to larger destination values that cover the entire colour range (i.e., 0-255 for 8-bit encoding) for improved resistance against encoding artifacts (e.g., in lossy compression, decoding may lead to precision lost; however, given sufficiently distant encoded values, this loss may be recovered). For example, considering an alternative embodiment, if there are 4 source depth sub-ranges integer mask sample values, there would be 16 symbols. In this case, the destination values could be 7 + 0:16:255 for U and/or V components, and the recovery could be performed by assigning each decoded value to its closest destination value. In Fig. 27, an illustration of this embodiment is presented. The V component carries dummy values in this example. Other mappings could alternatively be used. Similarly, for other embodiments.

In all embodiments, metadata are required to signal the correspondence between Y sample(s) and U and/or V samples, and if a component carries no meaningful information. In alternative embodiments, metadata are also required to signal the type of grouping of source depth sub-ranges integer mask samples, and their symbol representation. In all embodiments, metadata are also required to signal a potential mapping between source depth sub-ranges integer mask sample values or symbols and destination values. Metadata are also required to signal the interpretation of the source depth sub-ranges integer mask sample values (i.e., source depth sub-ranges).

*YUV 4:2:0*

Considering a YUV 4:2:0 chroma format, for each pair of successive Y samples in horizontal order, there is one U and one V samples, while for each pair of successive Y samples in vertical order, there is one U and one V samples (Fig. 19, third row).

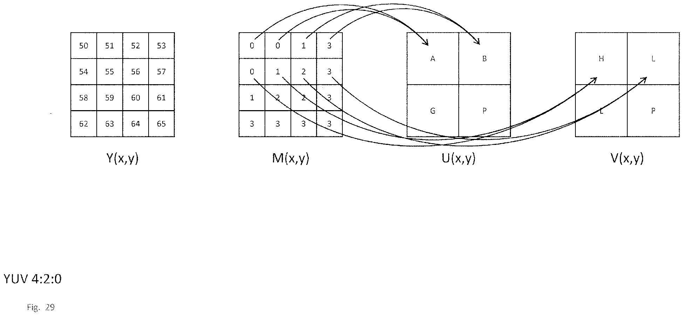

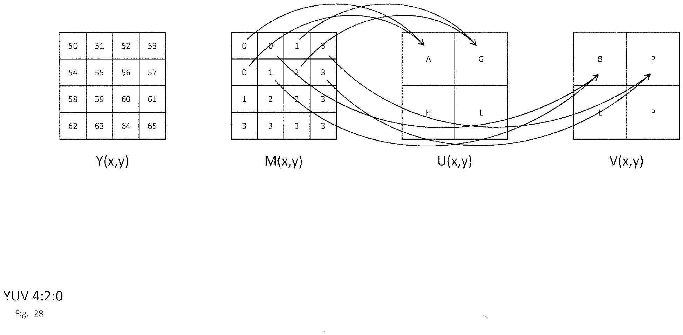

In a primary embodiment, the U and V components may carry a combination of two successive source depth sub-ranges integer mask sample values in vertical (horizontal) order of even and odd columns (rows), respectively. This can be implemented by obtaining all pair combinations of source depth sub-ranges integer mask sample values, and assigning them to corresponding symbols, which are carried by the U and V components. For example, if there are 4 source depth sub-ranges integer mask sample values, there would be 16 pair combinations, which requires 16 symbols. An illustration of this embodiment is presented in Fig. 28 and Fig. 29, with the former using two successive samples in vertical order (columns), and the latter using two successive samples in horizontal order (rows).

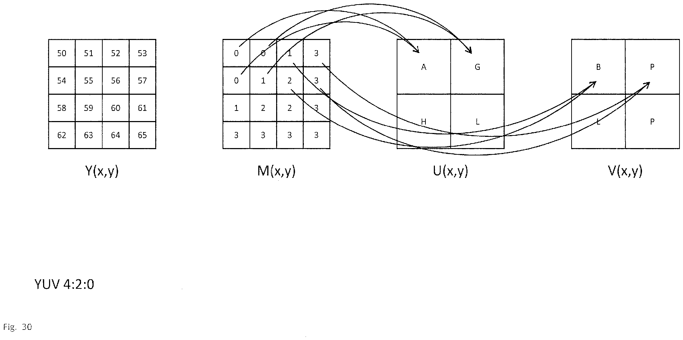

In alternative embodiments, other types of groupings for source depth sub-range integer mask samples could be devised. For instance, two groups of two samples could be formed by splitting the width of the source depth sub-range integer mask in half, and considering two successive samples in vertical order, as shown in Fig. 30.

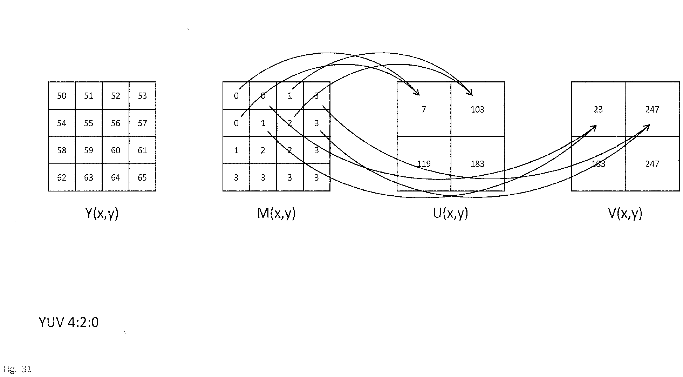

The symbols assigned to U and V components could be mapped to larger destination values that cover the entire colour range (i.e., 0-255 for 8-bit encoding) for improved resistance against encoding artifacts (e.g., in lossy compression, decoding may lead to precision lost; however, given sufficiently distant encoded values, this loss may be recovered). For example, considering the primary embodiment, if there are 4 source depth sub-ranges integer mask sample values, there would be 16 symbols. In this case, the destination values could be 7 + 0:16:255 for U and V components, and the recovery could be performed by assigning each decoded value to its closest destination value. In Fig. 31, an illustration of this embodiment is presented. Other mappings could alternatively be used. Similarly, for other embodiments.

In all embodiments, metadata are required to signal the correspondence between Y samples and U and V samples. Metadata are also required to signal the type of grouping of source depth sub-ranges integer mask samples, and their symbol representation. Metadata are also required to signal a potential mapping between symbols and destination values. Metadata are also required to signal the interpretation of the source depth sub-ranges integer mask sample values (i.e., source depth sub-ranges).

NOTE: In other embodiments, different colour spaces than YUV may be used (e.g., RGB) without affecting the rationale of the aforementioned solutions.

*Composite picture using colour primaries*

One method to specify such a composite picture that contains the target depth image in the Y component and the source depth sub-ranges integer mask sample values in U and/or V components, is through the Video Usability Information (VUI) parameters, as specified in the VSEI [31] standard, clause 7 (Video usability information parameters).

The following changes are proposed in VSEI [31] standard, clause 7.3 (VUI parameters semantics):

*VUI parameters apply to one or more CLVSs.*

*Use of the VUIparameters requires the definition of the following variables:*

- *A chroma format indicator, denoted herein by ChromaFormatIdc, such that the value 0 indicates that the picture has only a luma component and other values indicate that the picture has three colour components that consist of a luma component and two associated chroma components, such that the width and height of each chroma component are the width and height of the luma component divided by SubWidthC and SubHeightC, respectively, where SubWidthC and SubHeightC are determined from ChromaFormatIdc as specified by Table 2.*
- *A bit depth for the samples of the luma component, denoted herein by $BitDepth_Y$, and when ChromaFormatIdc is not equal to 0, a bit depth for the samples of the two associated chroma components, denoted herein by $BitDepth_C$. by $BitDepth_C$.*

***Table** 2 - **SubWidthC and SubHeightC values derived from ChromaFormatIdc***

| ***ChromaFormatIdc*** | ***Chroma format*** | ***SubWidthC*** | ***SubHeightC*** |
|---|---|---|---|
| *0* | *Monochrome* | *1* | *1* |
| *1* | *4:2:0* | *2* | *2* |
| *2* | *4:2:2* | *2* | *1* |
| *3* | *4:4:4* | *1* | *1* |

...

***vui_colour_primaries*** *indicates* START INSERTION either, when the image is a texture image END INSERTION *the chromaticity coordinates of the source colour primaries,* START INSERTION or, when the image is not a texture image the type of the image END INSERTION. *Its semantics are as specified for the ColourPrimaries parameter in Rec. ITU-T H.273 | ISO/IEC 23091-2. When the vui_colour_primaries syntax element is not present, the value of vui_colour_primaries is inferred to be equal to 2 (the chromaticity is unknown or unspecified or determined by other means not specified in this document). Values of vui_colour primaries that are identified as reserved for future use in Rec. ITU-T H.273 | ISO/IEC 23091-2 shall not be present in bitstreams conforming to this edition of this document. Decoders shall interpret reserved values of vui_colour_primaries as equivalent to the value 2.*

Accordingly, the following changes are proposed in Coding-independent code points (CICP) [32] standard, clause 8.1 (Colour primaries):

***ColourPrimaries*** *indicates* START INSERTION either, when the image is a texture image END INSERTION, *the chromaticity coordinates of the source colour primaries as specified in Table 3 in terms of the CIE 1931 definition of x and y, which shall be interpreted as specified by ISO/CIE 11664* 1, START INSERTION or, when the image is not a texture image the type of the image END INSERTION:

*Table 3 -* ***Interpretation of colour primaries (ColourPrimaries) value***

| ***Value*** | ***Primaries*** | | | ***Informative remark*** |
|---|---|---|---|---|
| *0* | *Reserved* | | | *For future use by ITU-T / ISO/IEC* |
| *1* | *primary* | *x* | *y* | *Rec. ITU-R BT.709-6* |
| | *green* | *0.300* | *0.600* | *Rec. ITU-R BT.1361-0 conventional colour gamut system and extended colour gamut system (historical)* |
| | *blue* | *0.150* | *0.060* | *IEC 61966-2-1 sRGB or sYCC* |
| | *red* | *0.640* | *0.330* | *IEC 61966-2-4* |
| | *white D65* | *0.312 7* | *0.329 0* | *SMPTE RP 177 (1993) Annex B* |
| ... | | | | |

(continued)

| *Value* | *Primaries* | | | *Informative remark* |
|---|---|---|---|---|
| 22 | *primary* | *x* | *y* | *EBU Tech. 3213-E (1975)* |
| | *green* | *0.295* | *0.605* | |
| | *blue* | *0.155* | *0.077* | |
| | *red* | *0.630* | *0.340* | |
| | *white D65* | *0.312 7* | *0.329 0* | |
| 23..127 | Reserved | | | *For future use by ITU-T / ISO/IEC* |
| 128 | Depth and source depth sub-ranges information | | | This signal is a composite picture containing depth and source depth sub-ranges information |
| 129..255 | *Reserved* | | | *For future use by ITU-T / ISO/IEC* |

In Table 3, the second to last entry is inserted and the third to last entry and the last entry are adapted accordingly, with respect to existing methods.

*Composite picture using a SEI message*

Another method to specify various parameters of such a composite picture that contains the target depth image in the Y component and the source depth sub-ranges integer mask sample values in U and/or V components, is through a SEI message.

In this case, a SEI message carries the source depth sub-ranges following "embodiment 2" of section *"Using SEI messages"* described above (i.e., regarding their definition), and the associated parameters of the composite picture assuming a 4:2:0 chroma format. Analogously, the SEI message could be modified accordingly to follow "embodiment 1" of section *"Using SEI messages"* described above and/or different chroma formats. Other implementations could also be crafted.

*Syntax*

Table 8 - Signalling of composite picture in a SEI message.

| Depth_and_source_depth_subranges_info ( payloadSize ) { | **Descriptor** |
|---|---|
| **dasdsi_cancel_flag** | u(1) |
| if( ! dasdsi_cancel_flag) { | |
| **dasdsi_num_depth_subranges** | u(8) |
| for(k=0; k < **dasdsi_num_depth_subranges;** k++) | |
| . **dasdsi_depth_subrange_start**[ k ] | u(8) |
| **dasdsi_depth_subrange_end**[ k ] | u(8) |
| **dasdsi_depth_subrange_type** [ k ] | u(1) |
| **dasdsi_spatial_association** | u(1)u(1)u(1)u(1): u(1):u(1) |
| **dasdsi_split_value** | u(1) |
| **dasdsi_code_symbols** | u(1) |
| **dasdsi_mapping** | u(1) |
| } | |
| } | |

In Table 8, 16-bit source depth images (i.e., 0-65535 source depth range), and 8-bit encoding are assumed, which leads to 256 (2^8) source depth sub-ranges.

*Semantics*

The depth_and_source_depth_subranges_info SEI message provides information that describes the source depth sub-ranges, the correspondence between Y and U and/or V samples, the grouping of Y samples that correspond to U and/or V samples, the potential splitting of source depth sub-ranges integer mask sample values, and the mapping between source depth sub-ranges integer mask sample values or symbols and destination values in the video, and is defined up to a frame.

**Dasdsi_cancel_flag** equal to 1 indicates that the SEI message cancels the persistence of any previous depth_and_source_depth_subranges_info SEI message. When equal to 0, the information that should be considered follows.

**Dasdsi_num_depth_subranges** specifies the number of the source depth sub-ranges.

**Dasdsi_depth_subrange_start** [ k ] specifies the start of the k-th source depth sub-range.

**Dasdsi_depth_subrange_end** [ k ] specifies the end of the k-th source depth sub-range.

**Dasdsi_depth_subrange_type** [ k ] specifies the type of the k-th source depth sub-range. When dasdsi_depth_subrange_type [ k ] is equal to 0, the k-th source depth sub-range is in-bound. When dasdsi_depth_subrange_type [ k ] is equal to 1, the k-th source depth sub-range is out-of-bound.

**Dasdsi_spatial_association** specifies the correspondence and potential groupings of Y samples and a U and/or a V sample, using the expression "[Y(0,0), Y(0,1), Y(1,0), Y(1,1)]:[U(0,0)]:[V(0, 0)]". The variables Y(0,0), Y(0,1), Y(1,0), Y(0,0), U(0,0), and V(0,0) are getting values from 0 and 1. The set of variables [Y(0,0), Y(0,1), Y(1,0), Y(1,1)] indicates a zig-zag traverse of the first 2x2 samples of the Y component, while the [U(0,0)] and [V(0,0)] variables indicate the first sample of the U and V components, respectively. A variable is set equal to 1 to indicate the selection of a corresponding sample; otherwise, it is set equal to 0. To combine more than one expression, the symbol "&" is used.

NOTE: Different expressions could be used to indicate correspondence and/or groupings. More complex groupings could be devised; however, this is out of scope.

**Dasdsi_split_value** specifies the manner a source depth sub-range value is split in two values. When dasdsi_split_value is equal to 0, there is no splitting applied. When dasdsi_split_value is equal to 1, the binary representation of the source depth sub-range values is split in the middle, with the half most significant bits assigned to the U component, and the other half least significant bits assigned to the V component. When dasdsi_split_value is equal to 1, the dasdsi_spatial_association should contain one of the variables [Y(0,0), Y(0,1), Y(1,0), Y(1,1)] equal to 1, and the [U(0,0)] and [V(0,0)] variables equal to 1, concurrently.

NOTE: There could be more options to split a source depth sub-range value.

**Dasdsi_code_symbols** specifies the usage of code symbols for groupings of Y samples that correspond to a U and/or a V sample. When dasdsi_code_symbols is equal to 0, there is no grouping of Y samples. When dasdsi_code_symbols is equal to 1, there is a grouping of Y samples, with all combinations of source depth sub-ranges values of that group obtained in a pre-determined manner. When dasdsi_code_symbols is equal to 1, the dasdsi_spatial_association should contain at least two variables [Y(0,0), Y(0,1), Y(1,0), Y(1,1)] equal to 1.

NOTE: It is considered out of scope to provide the manner all combinations are obtained.

**Dasdsi_mapping** specifies if source depth sub-ranges sample values or symbols are mapped to larger destination values that cover the entire colour range. When dasdsi_mapping is equal to 0, no mapping is applied. When dasdsi_mapping is equal to 1, assuming K source depth sub-ranges sample values or symbols and N values of the colour range, the destination values are obtained as 0.5*N/K + 0:N/K:K (i.e., offset + start: step: end).

NOTE: There could be more mapping functions included.

*Explanation for usage of the dasdsi_spatial_association entry*

When the chroma format is 4:4:4:

- [1,0,0,0]:[1]:[0] indicates that each Y sample corresponds to a co-located U sample.
- [1,0,0,0]:[0]:[1] indicates that each Y sample corresponds to a co-located V sample.
- [1,0,0,0]:[1]:[1] indicates that each Y sample corresponds to co-located U and V samples (e.g., after splitting of the binary representation).

When the chroma format is 4:2:2:

- [1,0,0,0]:[1]:[0] & [0,1,0,0]:[0]:[1] indicates that the even columns of Y component correspond to the U component, and the odd columns of Y component correspond to the V component.
- [1,0,0,0]:[0]:[1] & [0,1,0,0]:[1]:[0] indicates that the even columns of Y component correspond to the V component, and the odd columns of Y component correspond to the U component.

- [1,1,0,0]:[1]:[0] indicates that two successive. Y samples in horizontal order correspond to a U sample.

When the chroma format is 4:2:0:

- [1,1,0,0]:[1]:[0] & [0,0,1,1]:[0]:[1] indicates that two successive Y samples in horizontal order from even rows correspond to a U sample and two successive Y samples in horizontal order from odd rows correspond to a V sample.
- [1,0,1,0]:[1]:[0] & [0,1,0,1]:[0]:[1] indicates that two successive Y samples in vertical order from even columns correspond to a U sample and two successive Y samples in vertical order from odd columns correspond to a V sample.

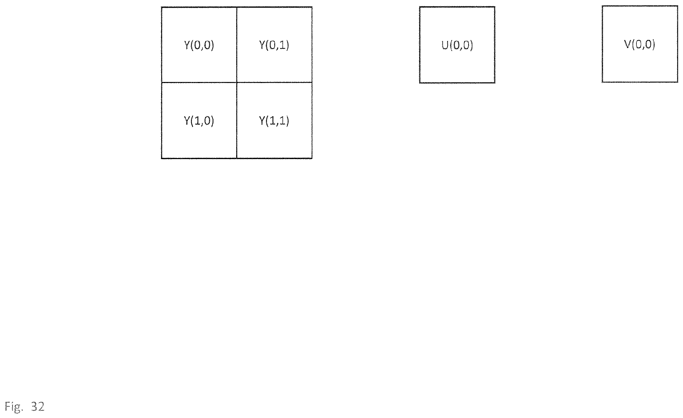

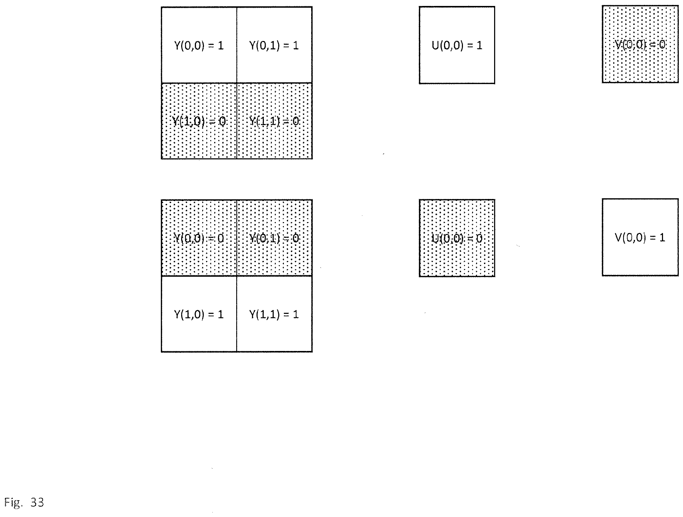

A visual example is given below. In Fig. 32, we present the Y, U and V component samples that are considered by the employed expression. In Fig. 33, a visual representation of the expression "[1,1,0,0]:[1]:[0] & [0,0,1,1]:[0]:[1]" is provided, which is equivalent to Fig. 29.

<u>*Signalling in media container (ISOBMFF)*</u>

For the purpose of the invention, the source depth sub-ranges and the association information between source depth image samples and source depth sub-ranges (i.e., source depth sub-ranges integer mask) may need to be signalled on a higher level, to be obtained before accessing the video bitstream. Therefore, the source depth sub-ranges and the source depth sub-ranges integer mask may be signalled in the file container's metadata.

The proposed signalling is based on ISOBMFF [25] standard, which defines a binary structure for storing media and metadata data. However, similar metadata may be also transmitted in any other file-based (e.g., WebM) or packet-based (e.g., RTP) containers.

To store the source depth sub-ranges and the source depth sub-ranges integer mask in a file container, it is important to consider whether the information is static or dynamic, that is whether it varies over time. Below, we provide signalling examples for dynamic metadata, which is the most relevant case.

NOTE: The schematic representations of the ISOBMFF files presented in the following sections contain simplifications of the actual box hierarchy.

*Dynamic metadata using the metadata track*

One method for carrying source depth sub-ranges information (i.e., source depth sub-ranges and source depth sub-ranges integer masks) is to use a timed metadata track. In such case, the track contains a sequence of data, with each data point being a sample of the track. Tracks can contain only a few samples of the entire duration of the video, or one sample per video frame, or even several samples per video frame.

For this purpose, a timed metadata track is added to the file. In the following example, we assume two tracks, namely, a video track with id=0, and a metadata track with id = 1. The former is identified by the 'vide' handler type, while the latter by the 'meta' handler in the HandlerBox of the MediaBox. In this example, the video track is encoded using the H.265/HEVC [27] codec, with the encoding and the track following the constraints defined by the 'hev1' sample entry, as specified in the ISO/IEC 14496-15 [34] standard. The metadata track (id=1) contains a track reference (with character code 'tref') to the video track (id=0), which is of type 'cdsc', as defined in ISOBMFF [25]. According to ISOBMFF [25], metadata tracks refer to the main track using the 'cdsc' reference type, and the meaning is as follows:

*'cdsc' links a descriptive or metadata track to the content which it describes*

According to ISOBMFF [25], clause 12.3.1 (Media handler):

> *Timed metadata media uses the 'meta' handler type in the HandlerBox of the MediaBox, as defined in 8.4.3. NOTE 2 metadata tracks are linked to the track they describe using a track-reference of type 'cdsc'.*

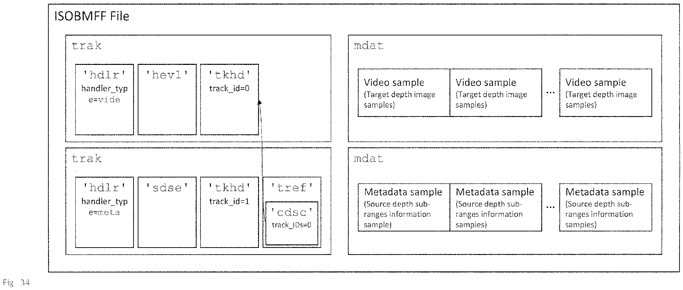

Fig. 34 illustrates an ISOBMFF file with a timed metadata track for source depth sub-ranges information.

Sample entries can be defined in the 'trak' box to specify how to parse track samples carried in the corresponding 'mdat' box. Since no source depth sub-ranges information sample entry type exists yet, we define the sample entry 'sdse' (stands for Source Depth sub-ranges information Sample Entry) for the purpose of this method.

NOTE: In the following embodiments, we consider that source depth sub-ranges information samples and video samples (i.e., containing the target depth image) are contained in two 'mdat', as shown in Fig. 34. In other embodiments, the samples could be contained in one 'mdat', and in that case, the samples would be interleaved.

NOTE: In the following embodiments we consider that video and metadata tracks are contained in the same file, as shown in Fig. 34. In other embodiments, the two tracks could be contained in two separate files.

*Embodiment 1*

In this case, the ‘trak’ box carries the source depth sub-ranges, and the associated samples of that ‘trak’ box contained in a ’mdat’ box carry the source depth sub-ranges integer masks.

There are different manners to determine and specify the source depth sub-ranges. In this example, the source depth sub-ranges are in-bound, non-overlapping, sequential, and have the same length (equal to a target depth range). Moreover, in this example the source depth sub-ranges are implicitly defined by the source depth range and the number of source depth sub-ranges.

The source depth sub-ranges integer mask can have either the same or different resolution with respect to the source depth image. In this example, their resolutions are the same, hence, the metadata in the track header of the video track can be used to retrieve the width and height parameters (i.e., no need to specify them).

*Syntax*

As defined by ISOBMFF [25], the metadata sample entry is:

```
class MetaDataSampleEntry(codingname) extends SampleEntry (codingname)
 { }.
```

For this method, we extend this generic type as follows:

```
class SourceDepthSubrangesSampleEntry() extends MetaDataSampleEntry (’sdse’){
          unsigned int(16) depth_range;
          unsigned int(8) num_depth_subranges;
}
```

And the corresponding sample for such sample entry would be defined as follows:

```
class SourceDepthSubrangesSample(){
          for (i=0; i < pps_pic_height_in_luma_samples; i++) {
            for (j=0; j < pps_pic_width_in_luma_samples; j++) {
                   unsigned int(8) mask_value[i][j];
            }
          }
}
```

*Semantics*

The semantics are the same as "embodiment 1" of section *"Using SEI messages"* described above.

*Embodiment 2*

In this case, the ’trak’ box carries the number of source depth sub-ranges and the resolution of the source depth sub-ranges integer mask, and the associated samples of that ‘trak’ box contained in a ’mdat’ box carry the source depth sub-ranges and the source depth sub-ranges integer masks.

There are different manners to determine and specify the source depth sub-ranges. In this example, the source depth sub-ranges are sequential, they could be non-overlapping or overlapping, they could have the same or different length, and they could be either in-bound or out-of-bound. In this example the source depth sub-ranges are explicitly defined by arrays that determine the start, the end, and the type (i.e., in-bound or out-of-bound) of each source depth sub-range.

The source depth sub-ranges integer mask can have either the same or different resolution with respect to the source depth image. In this example, their resolutions are different and, hence, the width and height parameters should be specified. A rescaling operation is then needed, and possibly corresponding signalling to indicate how this rescaling operation is performed, such that the rescaled source depth sub-ranges integer mask resolution matches the one of the source depth images.

*Syntax*

As defined by ISOBMFF [25], the metadata sample entry is:

```
class MetaDataSampleEntry(codingname) extends SampleEntry (codingname) { }
```

For this method, we extend this generic type as follows:

```
class SourceDepthSubrangesSampleEntry() extends MetaDataSampleEntry (' sdse') {
          unsigned int(8) num_depth_subranges;
          unsigned int(32) mask_height;
          unsigned int(32) mask_width;
}
```

And the corresponding sample for such sample entry would be defined as follows:

```
class SourceDepthSubrangesSample(){
          for (k=0; k < num_depth_subranges; k++) {
            unsigned int(8) depth_subrange_start[k];
            unsigned int(8) depth_subrange_end[k];
            unsigned int(1) depth_subrange_type[k];
            unsigned int(7) reserved;
          }
          for (i=0; i < mask_height; i++) {
            for (j=0; j < mask_width; j++) {
                    unsigned int(8) mask_value[i][j];
            }
          }
}
```

*Semantics*

The semantics are the same as "embodiment 2" of section " *Using SEI messages"* described above.

*Embodiment 3*

In this case, the 'trak' box carries the source depth sub-ranges and the resolution of the source depth sub-ranges integer mask, and the associated samples of that 'trak' box contained in a 'mdat' box carry the source depth sub-ranges integer masks.

There are different manners to determine and specify the source depth sub-ranges. In this example, the source depth sub-ranges are sequential, they could be non-overlapping or overlapping, they could have the same or different length, and they could be either in-bound or out-of-bound. In this example the source depth sub-ranges are explicitly defined by arrays that determine the start, the end, and the type (i.e., in-bound or out-of-bound) of each source depth sub-range.

The source depth sub-ranges integer mask can have either the same or different resolution with respect to the source depth image. In this example, their resolutions are different and, hence, the width and height parameters should be specified. A rescaling operation is then needed, and possibly corresponding signalling to indicate how this rescaling operation is performed, such that the rescaled source depth sub-ranges integer mask resolution matches the one of the source depth images.

*Syntax*

As defined by ISOBMFF [25], the metadata sample entry is:

```
class MetaDataSampleEntry(codingname) extends SampleEntry (codingname) { }
```

For this method, we extend this generic type as follows:

```
class SourceDepthSubrangesSampleEntry() extends MetaDataSampleEntry ('sdse'){
          unsigned int(8) num_depth_subranges;
          for (k=0; k < num_depth_subranges; k++) {
            unsigned int(8) depth_subrange_start[k];
            unsigned int(8) depth_subrange_end[k];
            unsigned int(1) depth_subrange_type[k];
            unsigned int(7) reserved;
          }
          unsigned int(32) mask_height;
          unsigned int(32) mask_width;
```

```
}
```

And the corresponding sample for such sample entry would be defined as follows:

```
class SourceDepthSubrangesSample(){
        for (i=0; i < mask_height; i++) {
          for (j=0; j < mask_width; j++) {
                unsigned int(8) mask_value[i][j];
          }
        }
}
```

*Semantics*

The semantics are the same as "embodiment 3" of section *"Using SEI messages"* described above.

*Dynamic metadata using the video auxiliary track* /

Another method for carrying source depth sub-ranges information (i.e., source depth sub-ranges and source depth sub-ranges integer masks) is to use an auxiliary video track.

For this purpose, an auxiliary video track is added to the file. In the following example, we assume two tracks, namely, a video track with id=0, and an auxiliary video track with id = 1. The former is identified by the 'vide' handler type, while the latter by the 'auxv' handler in the HandlerBox of the MediaBox. In this example, both tracks are encoded using the H.265/HEVC [27] codec, with the encoding and the tracks following the constraints defined by the 'hev1' sample entry, as specified in the ISO/IEC 14496-15 [34] standard. The auxiliary video track (id=1) contains a track reference (with character code 'tref') to the video track (id=0), which is of a new reference type, namely 'sdrt' (stands for Source Depth sub-range information Reference Type), that indicates the purpose of the track and how to use it. The meaning is as follows:

'sdrt' this track contains source depth sub-ranges information for the referenced video track that contains the target depth image.

According to ISOBMFF [25], clause 12.1.1 (Media handler):

> *Video media uses the 'vide' handler type in the HandlerBox of the MediaBox, as defined in 8.4.3.*
> *Auxiliary video media uses the 'auxv' handler type in the HandlerBox of the MediaBox, as defined in 8.4.3.*
> *An auxiliary video track is coded the same as a video track, but uses this different handler type, and is not intended to be visually displayed (e.g., it contains depth information, or other monochrome or color two-dimensional information).*
> *Auxiliary video tracks are usually linked to a video track by an appropriate track reference.*

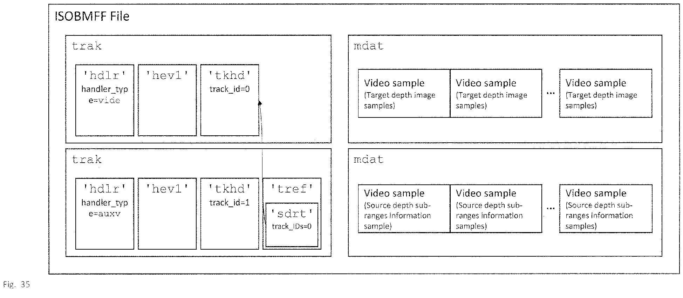

Fig. 35 illustrates an ISOBMFF file with a video auxiliary track for source depth sub-ranges information.

NOTE: In the following embodiment, we consider that source depth sub-ranges information and target depth image samples are contained in two 'mdat', as shown in Fig. 35. In other embodiments, the samples could be contained in one 'mdat', and in that case, the samples would be interleaved.

NOTE: In the following embodiment we consider that video and auxiliary tracks are contained in the same file, as shown in Fig. 35. In other embodiments, the two tracks could be contained in two separate files.

*Embodiment 1*

In this case, the sequence of source depth sub-ranges integer masks is represented and encoded as an auxiliary video, with the source depth sub-ranges signalled in the metadata.

In many cases, the source depth sub-ranges do not change for the duration of the track. One method for carrying static information is to define a new box to contain this information.

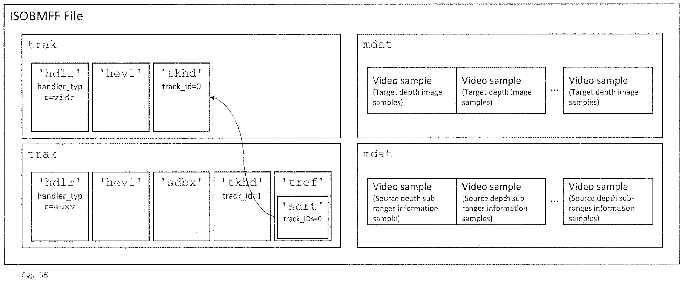

For this purpose, a new box called SourceDepthSubrangesInformationBox (with character code 'sdbx') can be defined as a child of the 'trak' box and used to contain general untimed metadata placed at the track level, as illustrated in Fig. 36.

NOTE: The same effect can be reached by placing the metadata in another box (e.g., MetaBox) or by combining metadata using entity grouping, or associating the metadata with samples of the track using sample groups.

There are different manners to determine and specify the source depth sub-ranges. In this example, the source depth sub-ranges are sequential, they could be non-overlapping or overlapping, they could have the same or different length, and they could be either in-bound or out-of-bound. In this example the source depth sub-ranges are explicitly defined by arrays that determine the start, the end, and the type (i.e., in-bound or out-of-bound) of each source depth sub-range.

The source depth sub-ranges integer mask can have either the same or different resolution with respect to the source depth image. In this example, their resolutions are different and, hence, the width and height parameters should be specified. A rescaling operation is then needed, and possibly corresponding signalling to indicate how this rescaling operation is performed, such that the rescaled source depth sub-ranges integer mask resolution matches the one of the source depth images.

*Syntax*

```
aligned(8) class SourceDepthSubrangesInformationBox extends FullBox('sdbx', 0, 0) {
        unsigned int(8) num_depth_subranges;
        for (k=0; k < num_depth_subranges; k++) {
          unsigned int(8) depth_subrange_start[k];
          unsigned int(8) depth_subrange_end[k];
          unsigned int(1) depth_subrange_type[k];
          unsigned int(7) reserved;
        }
        unsigned int(32) mask_height;
        unsigned int(32) mask_width;
}
```

*Semantics*

The semantics are the same as "embodiment 3" of section *"Using SEI messages"* described above.

In the following, beneficial effects of embodiments are described.

Embodiments enable lossless depth encoding, using the bit depth that is supported by the codec and/or the coding infrastructure, independently of the bit depth of the source depth image.

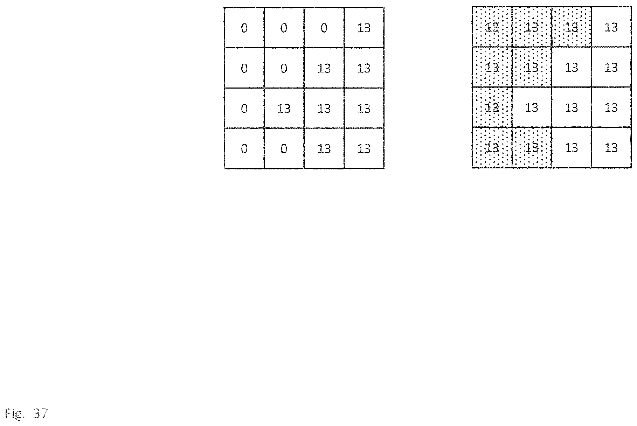

Embodiments allow bitrate savings, by excluding source depth sub-ranges that are out-of-bound, while optionally maintaining the precision of the remaining in-bound source depth image samples. The out-of-bound source depth image samples could be assigned a value that assists in bitrate reduction (e.g., a dummy value or a value of neighbouring samples), as shown in Fig. 37. In this example, on the left side, a 4x4 block of a source depth image is presented that contains out-of-bound samples of value "0" and in-bound samples of value "13". Based on prior art methods, this block values would be encoded as is. On the right side, a modified version of this block is presented, after assigning to the out-of-bound samples, neighbouring in-bound sample values. The current invention allows to encode the modified block values, which is clearly more efficient, and specify the out-of-bound samples, which are highlighted with red colour, in metadata.

Embodiments enable to reduce complexity of the decoding of the target depth image/video, by allowing to selectively discard areas in the image/video containing irrelevant/non-important samples and to only decode relevant/important samples, determined by the source depth sub-range values (i.e., start and end) or type (i.e., in-bound or out-of-bound). This is possible when suitable encoding tools (e.g., use of tiles) that allow partial image decoding are used to encode the image/video.

Embodiments allow to provide more semantical information, by enabling classification of source depth image samples as relevant/important (e.g., in-bound) or irrelevant/non-important (e.g., out-of-bound), with the latter being optionally omitted.

Embodiments enable to reduce complexity, by enabling depth-based segmentation and depth-based partition of the target depth image without requiring decoding of the target depth image (i.e., this information can be obtained by the metadata). The segmented regions can then be selectively discarded or preserved and decoded, based on the application. This is possible when suitable encoding tools (e.g., use of tiles) that allow partial image decoding are used to encode the image/video.

Embodiments allow the receiver/application to spend no computational resources to decode the depth image to identify the depth range of an encoded source depth image/video, as they can be obtained from the metadata.

The majority of embodiments implement a codec-agnostic depth coding solution.

**Possible modification of the above-described solution**

The same steps could be followed for different types of imaging (e.g., colour, texture, etc.), with appropriate adjustments.

For RGB images, for instance, we would need an integer mask with 3 components.

The proposed solution could work without encoding/decoding the target depth image. Specifically, by excluding the encoding process of step 6 and the decoding process of step 2 in the technical steps of the capturing and receiving device, respectively, provided in section *"Application scenario"*. In this case, the solution would act as a type of depth image representation, where instead of using higher bit-depth for the binary representation of a source depth image, a lower bit-depth binary representation for the target depth image could be used in combination with the metadata carrying the source depth sub-ranges information.

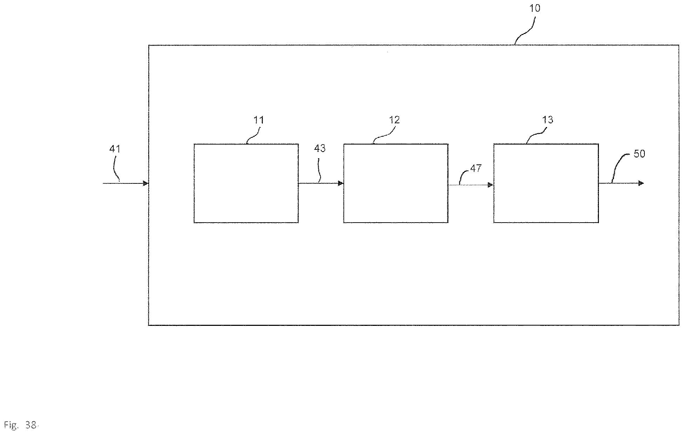

Fig. 38 illustrates an apparatus 10 for processing an image 41 according to an embodiment. The image comprises a plurality of samples having sample values associated therewith, wherein the sample values have a first bit depth representing a first range. The apparatus 10 comprises a sub-range module 11, configured for obtaining a plurality of sub-ranges 43 of the first range, wherein lengths of the sub-ranges are smaller than a length of the first range. Apparatus 10 further comprises an associator 12, configured for generating association information which associates each of the sample values with one of the sub-ranges to obtain respective associations 47, and a transformer 13, configured for determining a transformed representation 50 of the image based on the sample values and based on the sub-range associated with each of the sample values, and wherein the transformed representation comprises a transformed sample value for one of the samples of the image. In accordance with embodiments, the transformer 13 determines the transformed representation by assigning, to one of the sample values, a transformed sample value out of a set of transformed sample values of the sub-range associated with the sample value.

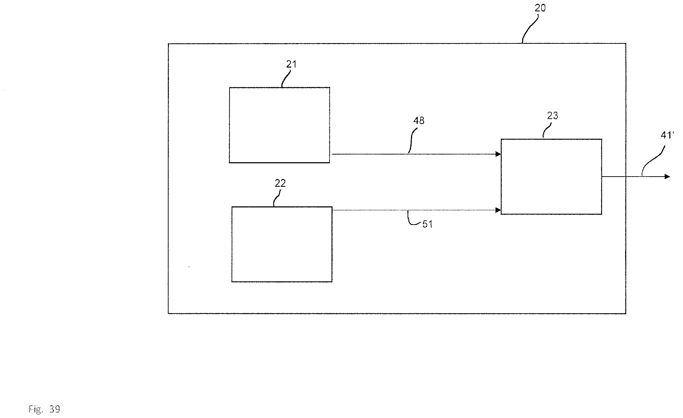

Fig. 39 illustrates an apparatus 20 for reconstructing an image 41' according to an embodiment. The image comprises a plurality of samples having sample values associated therewith, wherein the sample values have a first bit depth representing a first range. Apparatus 10 comprises an associator 21, configured for obtaining association information 48, which associates each of the sample values with one of a plurality of sub-ranges, wherein lengths of the sub-ranges are smaller than a length of the first range. E.g., associator 21 may derive the association information from a data stream. Association information 48 may correspond to the associations 47 of Fig. 38. Apparatus 10 further comprises a transform module 22 configured for obtaining a transformed representation 51 of the image, the transformed representation comprising a transformed sample value for one of the samples of the image. Transformed representation 51 may corresponded to the transformed representation of Fig. 38. Apparatus 20 further comprises a reconstructor 23 configured for reconstructing the image 41' by deriving the sample value for the one sample based on the transformed sample value for the one sample and based on the sub-range associated with the sample value. For example, image 41' may correspond to image 41 of Fig. 39 or deviate from same in terms of coding loss.

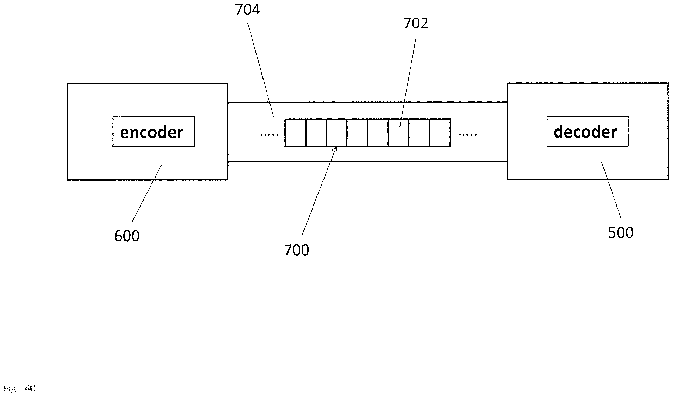

Fig. 40 illustrates a data stream 700 in accordance with embodiments of the present disclosure, which has encoded thereinto a picture and information data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 704, like cable or a radio link, and the decoder 500 decodes from the data stream 700 the picture. The data stream includes a flag 702, which is encoded into the data stream by the encoder 600. The flag indicates for one or more blocks of the picture the choice of the template side HoGs to be combined with the prediction block HoG.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

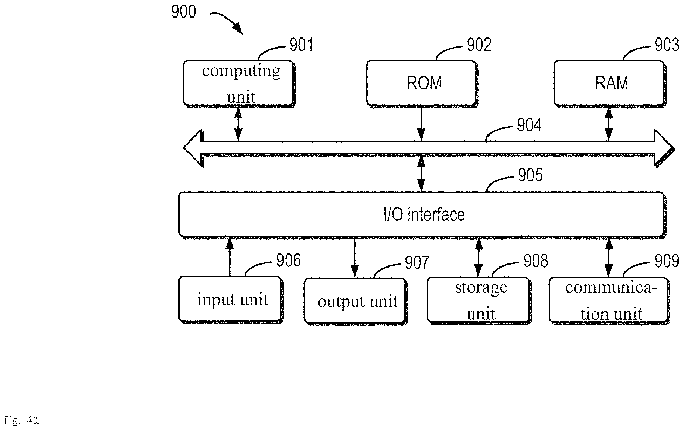

Fig. 41 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

An embodiment 1 provides a method of processing an image (e.g., a picture or an image representation, e.g., a depth image) comprising a plurality of samples having sample values (e.g., depth values) associated therewith (e.g., each sample having a sample value associated therewith), wherein the sample values have a first bit depth representing a first range (e.g., the source depth range), the method comprising:

obtaining a plurality of sub-ranges of the first range, wherein lengths of the sub-ranges (e.g., length in terms of a number of values of the first range represented by the first bit depth, which fall into the respective sub-range) are smaller than a length of the first range (e.g., such that the sub-ranges are representable by respective second bit depths);

generating association information, which associates each of the sample values with one (e.g., exactly one) of the sub-ranges; and

determining a transformed representation of the image based on the sample values and based on the sub-range associated with each of the sample values, and wherein the transformed representation comprises a transformed sample value for one of the samples of the image, e.g., by assigning, to one of the sample values, a transformed sample value out of a set of transformed sample values of the sub-range associated with the sample value (e.g., assigning, to each of the sample values, a respective transformed sample value out of the respective sub-range associated with the respective sample value; e.g., the set of transformed sample values is a set of values associated with the sub-range and is represented by a second bit depth which is smaller than the first bit depth. E.g., each sample value of the sub-range has an associated transformed sample value of the set of transformed sample value, wherein a mapping of the sample values to the transformed sample values may optionally be bijective.).

An embodiment 2 provides a method according to embodiment 1, further comprising:

encoding the transformed representation to obtain encoded image data (e.g., encoding the transformed representation using an encoding scheme for encoding images of a second bit depth, wherein the lengths of the sub-ranges are representable by the second bit depth), and

providing the encoded image data in a data stream (e.g., a video bitstream) or a data file (e.g., a media file, e.g., an ISOBMFF file).

An embodiment 3 provides a method according to any of the preceding embodiments, further comprising:
providing an indication of the sub-ranges in a data stream or data file.

An embodiment 4 provides a method according to embodiment 3, wherein the indication of the sub-ranges comprises an indication of a number (e.g., a count) of sub-ranges into which the first range is to be divided to obtain the sub-ranges.

An embodiment 5 provides a method according to embodiment 3, wherein the indication of the sub-ranges comprises an indication of respective boundaries of the sub-ranges.

An embodiment 6 provides a method according to any of embodiments 3 to 5, wherein the indication of the sub-ranges is signalled in the data stream or data file per picture of a video or per video sequence.

An embodiment 7 provides a method according to any of embodiments 3 to 6, wherein the indication of the sub-ranges is signalled in a payload packet (e.g., an SEI message, e.g. in a SEI NAL unit) of the data stream, which payload packet is interspersed between payload packets signalling encoded image data (e.g., VCL NAL units), or
wherein the indication of the sub-ranges is signalled in the metadata or the data samples of a track of the data file.

An embodiment 8 provides a method according to any of embodiments 3 to 7, wherein the indication of the sub-ranges comprises an indication of the first range.

An embodiment 9 provides a method according to any of embodiments 3 to 8, wherein the indication of the sub-ranges comprises, for each of the sub-ranges, a type indicator, which indicates whether the sub-range is in-bound or out-of-bound.

An embodiment 10 provides a method according to embodiment 9, wherein the transformed representation is determined by

assigning, to a sample associated with one of the out-of-bound sub-ranges, a predetermined transformed sample value which is assigned to the one out-of-bound sub-ranges (e.g., each of the out-of-bound sub-ranges has exactly one predetermined transformed sample value assigned thereto), and
assigning, to a sample associated with one of the in-bound sub-ranges, a transformed sample value out of a set of transformed sample values of the sub-range associated with the sample value, the set of transformed sample values comprising a plurality of transformed sample values.

An embodiment 11 provides a method according to embodiment 9 or 10, wherein the type indicator differentiates between a plurality of out-of-bound-types, which include two or more of

- a first out-of-bound type being associated with higher sample values relative to the sub-ranges of the in-bound type,
- a second out-of-bound type being associated with lower sample values relative to the sub-ranges of the in-bound type, and
- a third out-of-bound type being associated with sample values in-between two sub-ranges of the in-bound type.

An embodiment 12 provides a method according to any of embodiments 3 to 11, wherein the indication of the sub-ranges comprises an indication of a resolution of a mask, which indicates, for each of the sample values of the image, the sub-range associated with the respective sample value (e.g., by indicating a height and a width of the mask).

An embodiment 13 provides a method according to any of embodiments 3 to 12, wherein the indication of the sub-ranges comprises association information indicating the association between the sample values and the sub-ranges.

An embodiment 14 provides a method according to any of embodiments 3 to 13, wherein the indication of the sub-ranges is signalled in a first payload packet and wherein association information, indicating the association between the sample values and the sub-ranges is signalled in a second payload packet (e.g., an SEI message, e.g. in a SEI NAL unit) of the data stream (the first and second payload packets being interspersed between payload packets signalling encoded image data (e.g., VCL NAL units)).

An embodiment 15 provides a method according to any of the preceding embodiments, further comprising:

inserting the transformed representation into a data stream or data file, and

inserting association information indicating the association between the sample values and the sub-range into the data stream or data file.

An embodiment 16 provides a method according to any of the embodiments 13, 14 and 15, wherein the association information comprises a mask, which indicates, for each of the sample values of the image, the sub-range associated with the respective sample value.

An embodiment 17 provides a method according to embodiment 15 or 16,

wherein the association information is signalled in a payload packet (e.g., an SEI message, e.g. in a SEI NAL unit) of the data stream, which payload packet is interspersed between payload packets signalling encoded image data (e.g., VCL NAL units), or

wherein the association information is signalled in a track of the data file.

An embodiment 18 provides a method according to embodiment 15 or 16, wherein the data stream or data file comprises a multi-layered video representation, and wherein the transformed representation is signalled in a first layer of the multi-layered video representation and wherein the association information is signalled in a second layer of the multi-layered video representation.

An embodiment 19 provides a method according to embodiment 15, wherein the transformed representation and the association information are inserted into the data stream or data file using an encoding scheme for composite pictures (e.g., pictures comprising multiple channels, such as colour pictures) by encoding the transformed representation as a first component (e.g. a luma component) of the composite picture and the association information as a second component (e.g., a colour component) of the composite picture.

An embodiment 20 provides a method according to any of the preceding embodiments, wherein the sub-ranges are non-overlapping and/or wherein the sub-ranges have equal lengths.

An embodiment 21 provides a method according to any of the preceding embodiments, wherein the sub-ranges comprise one or more out-of-band sub-ranges.

An embodiment 22 provides a method according to any of the preceding embodiments, wherein a concatenation of the sub-ranges equals the first range.

An embodiment 23 provides a method according to any of embodiments 1 to 2, wherein the sub-ranges are predefined.

An embodiment 24 provides a method according to any of embodiments 1 to 22, wherein the sub-ranges are obtained based on a distribution of sample values over the first range.

An embodiment 25 provides a method according to any of the preceding embodiments, further comprising:

selecting one or more of the plurality of sub-ranges as out-of-bound sub-ranges, and

assigning, to each of the sample values, which sample values are associated with one of the out-of-bound sub-ranges, a predetermined transformed sample value.

An embodiment 26 provides a method of reconstructing an image, the image comprising a plurality of samples having sample values (e.g., depth values) associated therewith (e.g., each sample having a sample value associated therewith), wherein the sample values have a first bit depth representing a first range (e.g., the source depth range), the method comprising:

obtaining (e.g. reading or parsing from a data stream or data file) association information, which associates each of the sample values with one (e.g., exactly one) of a plurality of sub-ranges, wherein lengths of the sub-ranges (e.g., length in terms of a number of values of the first range represented by the first bit depth, which fall into the respective sub-range) are smaller than a length of the first range (e.g., such that the sub-ranges are representable by respective second bit depths);

obtaining (e.g., deriving or decoding from a data stream or data file) a transformed representation of the image, the transformed representation comprising a transformed sample value for one of the (e.g., for each of the) samples of the image,

reconstructing the image by deriving the sample value for the one sample based on the transformed sample value for the one sample and based on the sub-range associated with the sample value (e.g., deriving the sample values for the samples based on the transformed sample values and based on the sub-range associated with the (respective) sample values).

An embodiment 27 provides a method according to embodiment 26, further comprising:
deriving an indication of the sub-ranges from a data stream or data file.

An embodiment 28 provides a method according to embodiment 27, wherein the indication of the sub-ranges comprises an indication of a number (e.g., a count) of sub-ranges into which the first range is to be divided to obtain the sub-ranges.

An embodiment 29 provides a method according to embodiment 28, wherein the indication of the sub-ranges comprises an indication of respective boundaries of the sub-ranges.

An embodiment 30 provides a method according to any of embodiments 27 to 29, wherein the indication of the sub-ranges is signalled in the data stream or data file per picture of a video or per video sequence.

An embodiment 31 provides a method according to any of embodiments 27 to 30,

wherein the indication of the sub-ranges is signalled in a payload packet (e.g., an SEI message, e.g. in a SEI NAL unit) of the data stream, which payload packet is interspersed between payload packets signalling encoded image data (e.g., VCL NAL units), or

wherein the indication of the sub-ranges is signalled in the metadata or the data samples of a track of the data file.

An embodiment 32 provides a method according to any of embodiments 27 to 31, wherein the indication of the sub-ranges comprises an indication of the first range.

An embodiment 33 provides a method according to any of embodiments 27 to 32, wherein the indication of the sub-ranges comprises, for each of the sub-ranges, a type indicator, which indicates whether the sub-range is in-bound or out-of-bound.

An embodiment 34 provides a method according to embodiment 33, wherein the transformed representation is determined by

assigning, to a sample associated with one of the out-of-bound sub-ranges, a predetermined transformed sample value which is assigned to the one out-of-bound sub-ranges (e.g., each of the out-of-bound sub-ranges has exactly one predetermined transformed sample value assigned thereto), and

assigning, to a sample associated with one of the in-bound sub-ranges, a transformed sample value out of a set of transformed sample values of the sub-range associated with the sample value, the set of transformed sample values comprising a plurality of transformed sample values.

An embodiment 35 provides a method according to embodiment 33 or 34, wherein the type indicator differentiates between a plurality of out-of-bound-types, which include two or more of

- a first out-of-bound type being associated with higher sample values relative to the sub-ranges of the in-bound type,
- a second out-of-bound type being associated with lower sample values relative to the sub-ranges of the in-bound type, and
- a third out-of-bound type being associated with sample values in-between two sub-ranges of the in-bound type.

An embodiment 36 provides a method according to any of embodiments 27 to 35, wherein the indication of the sub-ranges comprises an indication of a resolution of a mask, which indicates, for each of the sample values of the image, the sub-range associated with the respective sample value (e.g., by indicating a height and a width of the mask).

An embodiment 37 provides a method according to any of embodiments 27 to 36, wherein the indication of the sub-ranges comprises association information indicating the association between the sample values and the sub-ranges.

An embodiment 38 provides a method according to any of embodiments 27 to 36, wherein the indication of the sub-ranges is signalled in a first payload packet and wherein association information, indicating the association between the sample values and the sub-ranges, is signalled in a second payload packet (e.g., an SEI message, e.g. in a SEI NAL unit) of the data stream (the first and second payload packets being interspersed between payload packets signalling encoded image data (e.g., VCL NAL units)).

An embodiment 39 provides a method according to any of embodiments 26 to 38, further comprising:
deriving the transformed representation and the association information from a data stream or data file.

An embodiment 40 provides a method according to embodiment 39,

wherein the association information is signalled in a payload packet (e.g., an SEI message, e.g. in a SEI NAL unit) of the data stream, which payload packet is interspersed between payload packets signalling encoded image data (e.g., VCL NAL units), or

wherein the association information is signalled in a track of the data file.

An embodiment 41 provides a method according to embodiment 39, wherein the data stream or data file comprises a multi-layered video representation, and wherein the transformed representation is signalled in a first layer of the multi-layered video representation and wherein the association information is signalled in a second layer of the multi-layered video representation.

An embodiment 42 provides a method according to embodiment 39, wherein the transformed representation and the association information are obtained from the data stream or data file using a decoding scheme for composite pictures (e.g., pictures comprising multiple channels, such as colour pictures) by decoding the transformed representation as a first component (e.g. a luma component) of the composite picture and the association information as a second component (e.g., a colour component) of the composite picture.

An embodiment 43 provides a method according to any of the embodiments 26 to 42, wherein the sub-ranges are non-overlapping and/or wherein the sub-ranges have equal lengths.

An embodiment 44 provides a method according to any of the embodiments 26 to 43, wherein the sub-ranges comprise one or more out-of-band sub-ranges.

An embodiment 45 provides a method according to any of the embodiments 26 to 44, wherein a concatenation of the sub-ranges equals the first range.

An embodiment 46 provides a method according to embodiment 26, wherein the sub-ranges are predefined.

An embodiment 47 provides a method according to any of the embodiments 26 to 44, wherein the sub-ranges are obtained based on a distribution of sample values over the first range.

An embodiment 48 provides an apparatus for processing an image, the image comprising a plurality of samples having sample values associated therewith, wherein the sample values have a first bit depth representing a first range, the apparatus being configured for:

obtaining a plurality of sub-ranges of the first range, wherein lengths of the sub-ranges are smaller than a length of the first range,

generating association information, which associates each of the sample values with one (e.g., exactly one) of the sub-ranges,

determining a transformed representation of the image based on the sample values and based on the sub-range associated with each of the sample values, and wherein the transformed representation comprises a transformed sample value for one of the samples of the image, e.g., by assigning, to one of the sample values, a transformed sample value out of a set of transformed sample values of the sub-range associated with the sample value.

An embodiment 49 provides an apparatus for reconstructing an image, the image comprising a plurality of samples having sample values (e.g., depth values) associated therewith (e.g., each sample having a sample value associated therewith), wherein the sample values have a first bit depth representing a first range (e.g., the source depth range), the apparatus being configured for:

obtaining (e.g. reading or parsing from a data stream or data file) association information, which associates each of the sample values with one (e.g., exactly one) of a plurality of sub-ranges, wherein lengths of the sub-ranges (e.g., length in terms of a number of values of the first range represented by the first bit depth, which fall into the respective sub-range) are smaller than a length of the first range (e.g., such that the sub-ranges are representable by respective second bit depths);

obtaining (e.g., deriving or decoding from a data stream or data file) a transformed representation of the image, the transformed representation comprising a transformed sample value for one of the (e.g., for each of the) samples of the image,

reconstructing the image by deriving the sample value for the one sample based on the transformed sample value for the one sample and based on the sub-range associated with the sample value (e.g., deriving the sample values for the samples based on the transformed sample values and based on the sub-range associated with the (respective) sample values).

An embodiment 50 provides a non-transitory computer-readable storage medium comprising instructions which, when executed by a computer, cause the computer to carry out the method of any one of the embodiments 1 to 47.

An embodiment 51 provides a data stream having encoded thereinto an image, the image comprising a plurality of samples having sample values (e.g., depth values) associated therewith (e.g., each sample having a sample value associated therewith), wherein the sample values have a first bit depth representing a first range (e.g., the source depth range), the image being encoded into the data stream by:

obtaining a plurality of sub-ranges of the first range, wherein lengths of the sub-ranges (e.g., length in terms of a number of values of the first range represented by the first bit depth, which fall into the respective sub-range) are smaller than a length of the first range (e.g., such that the sub-ranges are representable by respective second bit depths);

generating association information, which associates each of the sample values with one (e.g., exactly one) of the sub-ranges,

determining a transformed representation of the image based on the sample values and based on the sub-range associated with each of the sample values, and wherein the transformed representation comprises a transformed sample value for one of the samples of the image, e.g., by assigning, to one of the sample values, a transformed sample value out of a set of transformed sample values of the sub-range associated with the sample value (e.g., assigning, to each of the sample values, a respective transformed sample value out of the respective sub-range associated with the respective sample value), and

encoding the transformed representation and association information, which indicates the association between the sample values and the sub-ranges, into the data stream.

An embodiment 52 provides a digital storage medium (e.g., a non-transitory digital storage medium) having stored thereon a data file (e.g., an ISOBMFF file), the data file having encoded thereinto an image, the image comprising a plurality of samples having sample values (e.g., depth values) associated therewith (e.g., each sample having a sample value associated therewith), wherein the sample values have a first bit depth representing a first range (e.g., the source depth range), the image being encoded into a data stream by:

obtaining a plurality of sub-ranges of the first range, wherein lengths of the sub-ranges (e.g., length in terms of a number of values of the first range represented by the first bit depth, which fall into the respective sub-range) are smaller than a length of the first range (e.g., such that the sub-ranges are representable by respective second bit depths);

generating association information, which associates each of the sample values with one (e.g., exactly one) of the sub-ranges,

determining a transformed representation of the image based on the sample values and based on the sub-range associated with each of the sample values, and wherein the transformed representation comprises a transformed sample value for one of the samples of the image, e.g., by assigning, to one of the sample values, a transformed sample value out of a set of transformed sample values of the sub-range associated with the sample value (e.g., assigning, to each of the sample values, a respective transformed sample value out of the respective sub-range associated with the respective sample value), and

encoding the transformed representation into the data stream and association information, which indicates the association between the sample values and the sub-ranges, into the data file.

It is noted that the data stream of embodiment 52 is a different data stream than that of embodiment 51. In the data stream of embodiment 52 there are no metadata/signallings included. In the data stream of embodiment 52, these metadata/signallings are carried by the data file (while in embodiment 51 they are carried by the data stream.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

## References

[1] Wikipedia, Perpendicular distance, https://en.wikipedia.org/wiki/Perpendicular_distance (accessed 19/07/2024).

[2] ARCore, https: //developers. google. com/ar/develop/j ava/depth/developer-guide (accessed 19/07/2024).

[3] ARCore, ArFrame_acquireDepthImage16Bits, https://developers.google.com/ar/reference/c/group/ar-frame#arframe_acquiredepthimage16bits, (accessed 19/07/2024).

[4] Intel RealSense D400 Series Product Family Datasheet, https://dev.intelrealsense.com/docs/intel-realsense-d400-series-product-family-datasheet (accessed 19/07/2024).

[5] Use Azure Kinect Sensor SDK to record file format, https://learn.microsoft.com/en-us/azure/kinect-dk/record-file-format (accessed 19/07/2024).

[6] Azure Kinect DK coordinate systems, https://learn.microsoft.com/en-us/azure/kinect-dk/coordinate-systems (accessed 19/07/2024).

[7] Azure Kinect DK hardware specifications, https://learn.microsoft.com/en-us/azure/kinect-dk/hardware-specification (accessed 19/07/2024).

[8] Use Azure Kinect Sensor SDK image transformations, https://learn.microsoft.com/en-us/azure/kinect-dk/use-image-transformation (accessed 19/07/2024).

[9] C. Fehn, "A 3D-TV approach using depth-image-based rendering (DIBR)", In Proc. of VIIP, vol. 3, no. 3, 2003, https://citeseerx.ist.psu.edu/document?repid=rep1&type=pdf&doi=748c4af453dac 4f48e8a749263c0796676f47570.

[10] Y. Chen and A. Vetro, "Next-Generation 3D Formats with Depth Map Support," in IEEE MultiMedia, vol. 21, no. 2, pp. 90-94, Apr.-June 2014, doi: 10.1109/MMUL.2014.31.

[11] Depth image compression by colourization for Intel RealSense Depth Cameras, https://dev.intelrealsense.com/docs/depth-image-compression-by-colourization-for-intel-realsense-depth-cameras (accessed 19/07/2024).

[12] Pece, F., Kautz, J., Weyrich, T.: Adapting standard video codecs for depth streaming. In: Proceedings of EGVE-JVRC 2011, pp. 59-66, Aire-la-Ville, Switzerland. Eurographics Association (2011).

[13] J. Fu, D. Miao, W. Yu, S. Wang, Y. Lu and S. Li, "Kinect-Like Depth Data Compression," in IEEE Transactions on Multimedia, vol. 15, no. 6, pp. 1340-1352, Oct. 2013, doi: 10.1109/TMM.2013.2247584.

[14] Oh, K.J., Yea, S., Vetro, A. and Ho, Y.S., 2009. Depth reconstruction filter for depth coding. Electronics letters, 45(6), pp.305-306.

[15] R. Krishnamurthy, Bing-Bing Chai, Hai Tao and S. Sethuraman, "Compression and transmission of depth maps for image-based rendering," Proceedings 2001 International Conference on Image Processing (Cat. No.01CH37205), Thessaloniki, Greece, 2001, pp. 828-831 vol.3, doi: 10.1109/ICIP.2001.958248

[16] Zanuttigh P, Cortelazzo GM. Compression of depth information for 3D rendering. In2009 3DTV Conference: The True Vision-Capture, Transmission and Display of 3D Video 2009 May 4 (pp. 1-4). IEEE.

[17] Morvan, Y. and Farin, D., 2005, June. Novel coding technique for depth images using quadtree decomposition and plane approximation. In Visual Communications and Image Processing 2005 (Vol. 5960, pp. 1187-1194). SPIE.

[18] Wilson, A.D., 2017, October. Fast lossless depth image compression. In Proceedings of the 2017 ACM International Conference on Interactive Surfaces and Spaces (pp. 100-105).

[19] Jun, H. and Bailenson, J., 2020, March. Temporal rvl: a depth stream compression method. In 2020 IEEE conference on virtual reality and 3D user interfaces abstracts and workshops (VRW) (pp. 664-665). IEEE.

[20] Encoding depth and confidence, https://developers.google.com/depthmap-metadata/encoding (accessed 19/07/2024).

[21] R. Du, E. Turner, M. Dzitsiuk, L. Prasso, I. Duarte, J. Dourgarian, J. Afonso, J. Pascoal, J. Gladstone, N. Cruces, S. Izadi, A. Kowdle, K. Tsotsos, and D. Kim. 2020. DepthLab: Real-Time 3D Interaction With Depth Maps for Mobile Augmented Reality. Proceedings of the 33rd Annual ACM Symposium on User Interface Software and Technology, pp. 15. DOI: 10.1145/3379337.3415881.

[22] Looking Glass Portrait - Looking Glass Factory, https://lookingglassfactory.com/portrait#usecases (accessed 19/07/2024).
[23] Hologram 101 - Looking Glass Documentation, https://docs.lookingglassfactory.com/keyconcepts/key-concepts (accessed 19/07/2024).
[24] W. Sun, L. Xu, O. C. Au, S. H. Chui, and C. W. Kwok. "An overview of free view-point depth-image-based rendering (DIBR)." In APSIPA Annual Summit and Conference, pp. 1023-1030, 2010, http://www.apsipa.org/proceedings_2010/pdf/APSIPA197.pdf
[25] ISO/IEC 14496-12 "Information technology - Coding of audio-visual objects - Part 12: ISO base media file format"
[26] ISO/IEC 14496-10 "Information technology - Coding of audio-visual objects - Part 10: Advanced Video Coding (AVC)", https://www.iso.org/standard/83529.html
[27] ISO/IEC 23008-2:2023 "Information technology - High efficiency coding and media delivery in heterogeneous environments - Part 2: High efficiency video coding (HEVC)", https://www.iso.org/standard/85457.html
[28] ISO/IEC 23094-1:2020, "Information technology - General video coding - Part 1: Essential video coding (EVC)", https://www.iso.org/standard/57797.html
[29] ISO/IEC 23090-3:2022 "Information technology - Coded representation of immersive media - Part 3: Versatile video coding (VVC)", https://www.iso.org/standard/83531.html
[30] AV1 Bitstream & Decoding Process Specification, http://aomedia.org/av1/specification/
[31] ISO/IEC 23002-7:2022 "Information technology - MPEG video technologies - Part 7: Versatile supplemental enhancement information messages for coded video bitstreams", https://www.iso.org/standard/83530.html
[32] ISO/IEC 23091-2 "Information technology - Coding-independent code points - Part 2: Video" https://www.iso.org/standard/81546.html
[33] Wikipedia, Chroma subsampling, https://en.wikipedia.org/wiki/Chroma_subsampling (accessed 19/07/2024)
[34] ISO/IEC 14496-15 "Information technology - Coding of audio-visual objects - Part 15: Carriage of network abstraction layer (NAL) unit structured video in the ISO base media file format" https://www.iso.org/standard/83336.html

## Claims

**1.** A method (100) of processing an image, wherein the image comprises a plurality of samples having sample values associated therewith, and wherein the sample values have a first bit depth representing a first range, the method comprising:

obtaining (101) a plurality of sub-ranges of the first range, wherein lengths of the sub-ranges are smaller than a length of the first range;
generating association information, which associates (102) each of the sample values with one of the sub-ranges; and
determining (103) a transformed representation of the image based on the sample values and based on the sub-range associated with each of the sample values, and wherein the transformed representation comprises a transformed sample value for one of the samples of the image.

**2.** The method according to claim 1, further comprising:

encoding the transformed representation to obtain encoded image data, and
providing the encoded image data in a data stream or a data file.

**3.** The method according to any of the preceding claims, further comprising:

selecting one or more of the plurality of sub-ranges as out-of-bound sub-ranges, and
assigning, to each of the sample values, which sample values are associated with one of the out-of-bound sub-ranges, a predetermined transformed sample value.

**4.** A method (200) of reconstructing an image, wherein the image comprises a plurality of samples having sample values associated therewith, and wherein the sample values have a first bit depth representing a first range, the method comprising:

obtaining (201) association information, which associates each of the sample values with one of a plurality of sub-ranges, wherein lengths of the sub-ranges are smaller than a length of the first range;
obtaining (202) a transformed representation of the image, the transformed representation comprising a transformed sample value for one of the samples of the image,
reconstructing (203) the image by deriving the sample value for the one sample based on the transformed sample value for the one sample and based on the sub-range associated with the sample value.

**5.** The method according to claim 4, further comprising:
deriving an indication of the sub-ranges from a data stream or data file.

**6.** The method according to claim 5, wherein the indication of the sub-ranges comprises, for each of the sub-ranges, a type indicator, which indicates whether the sub-range is in-bound or out-of-bound.

**7.** The method according to any of claims 4 to 6, further comprising:

deriving the transformed representation and the association information from a data stream, wherein the association information is signalled in a payload packet of the data stream, which payload packet is interspersed between payload packets signalling encoded image data, or
deriving the transformed representation and the association information from a data file, wherein the association information is signalled in a track of the data file.

**8.** The method according to any of claims 4 to 6, further comprising deriving the transformed representation and the association information from a data stream or data file, wherein the data stream or data file comprises a multi-layered video representation, and
wherein

the transformed representation is signalled in a first layer of the multi-layered video representation and wherein the association information is signalled in a second layer of the multi-layered video representation, or
the transformed representation and the association information are obtained from the data stream or data file using a decoding scheme for composite pictures by decoding the transformed representation as a first component of the composite picture and the association information as a second component of the composite picture.

**9.** The method according to any of the claims 4 to 8, wherein the sub-ranges are non-overlapping and/or wherein the sub-ranges have equal lengths.

**10.** The method according to any of the claims 4 to 9, wherein a concatenation of the sub-ranges equals the first range.

**11.** An apparatus for processing image, wherein the image comprises a plurality of samples having sample values associated therewith, and wherein the sample values have a first bit depth representing a first range, the apparatus being configured for:

obtaining a plurality of sub-ranges of the first range, wherein lengths of the sub-ranges are smaller than a length of the first range,
generating association information, which associates each of the sample values with one of the sub-ranges,
determining a transformed representation of the image based on the sample values and based on the sub-range associated with each of the sample values, and wherein the transformed representation comprises a transformed sample value for one of the samples of the image.

**12.** An apparatus for reconstructing an image, wherein the image comprises a plurality of samples having sample values associated therewith, and wherein the sample values have a first bit depth representing a first range, the apparatus being configured for:

obtaining association information, which associates each of the sample values with one of a plurality of sub-ranges, wherein lengths of the sub-ranges are smaller than a length of the first range;
obtaining a transformed representation of the image, the transformed representation comprising a transformed sample value for one of the samples of the image,
reconstructing the image by deriving the sample value for the one sample based on the transformed sample value for the one sample and based on the sub-range associated with the sample value.

**13.** A non-transitory computer-readable storage medium comprising instructions which, when executed by a computer, cause the computer to carry out the method of any one of the claims 1 to 12.

**14.** A data stream having encoded thereinto an image, wherein the image comprises a plurality of samples having sample values associated therewith, wherein the sample values have a first bit depth representing a first range, the image being encoded into the data stream by:

obtaining a plurality of sub-ranges of the first range, wherein lengths of the sub-ranges are smaller than a length of the first range;
generating association information, which associates each of the sample values with one of the sub-ranges,
determining a transformed representation of the image based on the sample values and based on the sub-range associated with each of the sample values, and wherein the transformed representation comprises a transformed sample value for one of the samples of the image, and
encoding the transformed representation and association information, which indicates the association between the sample values and the sub-ranges, into the data stream.

**15.** A digital storage medium having stored thereon a data file, the data file having encoded thereinto an image, wherein the image comprises a plurality of samples having sample values associated therewith, and wherein the sample values have a first bit depth representing a first range, the image being encoded into a data stream by:

obtaining a plurality of sub-ranges of the first range, wherein lengths of the sub-ranges are smaller than a length of the first range;
generating association information, which associates each of the sample values with one of the sub-ranges,
determining a transformed representation of the image based on the sample values and based on the sub-range associated with each of the sample values, and wherein the transformed representation comprises a transformed sample value for one of the samples of the image, and
encoding the transformed representation into the data stream and association information, which indicates the association between the sample values and the sub-ranges, into the data file.

Y
A
a
principal axis
Z
C
depth camera center
X
depth image

Fig. 1

Depth image

Color image

Fig. 2

Depth camera
z+
y+
RGB camera
x+
z+
y+

Fig. 3

RGB camera
Depth NFOV
Depth WFOV
Depth WFOV
RGB camera
Depth NFOV

Fig. 4

Color Image
Depth Image
Result k4a_transformation_depth_image_to_color_camera()
Result k4a_transformation_color_image_to_depth_camera()

Fig. 5

255
128
0
$Z_{near}$
$Z_{far}$

Fig. 6

2012
2013
2014
2015
MVC plus depth
(MVC+D)
AVC-compatible extension
plus depth (3D-AVC)
Multiview extension
of HEVC (MV-HEVC)
Advanced multiview and 3D extension
of HEVC (3D-HEVC)

Fig. 7

Fig. 8

Depthmap source
Convert into image
(8 or 16 bits)
Compress
(e.g. image/jpeg, image/png)
base64 encode as GDepth::Data property in XMP

Fig. 9

100
processing an image comprising a plurality of samples having sample values associated therewith, wherein the sample values have a first bit depth representing a first range
obtaining a plurality of sub-ranges of the first range, wherein lengths of the sub-ranges are smaller than a length of the first range
101
generating association information which associates each of the sample values with one of the sub-ranges
102
determining a transformed representation of the image based on sample values and based on the sub-range associated with each of the sample values, and wherein the transformed representation comprises a transformed sample value for one of the samples of the image
103

Fig. 10

200
reconstructing an image, the image comprising a plurality of samples having sample values associated therewith, wherein the sample values have a first bit depth representing a first range
obtaining association information, which associates each of the sample values with one of a plurality of sub-ranges, wherein lengths of the sub-ranges are smaller than a length of the first range
201
obtaining a transformed representation of the image, the transformed representation comprising a transformed sample value for one of the samples of the image
202
reconstructing the image by deriving the sample value for the one sample based on the transformed sample value for the one sample and based on the sub-range associated with the sample value
203

Fig. 11

Camera
Local device
Networ
k
Server
Networ
k
Remote
device
Encoding
Storage /
Transmission
Reception
Storage /
Transmission
Reception
Storage /
Decoding

Fig. 12

Camera
Local device
Networ
k
Server
Networ
k
Remote
device
Pre-encoding
Encoding
Storage /
Transmission
Reception
Storage /
Transmission
Reception
Storage /
Decoding
Post-
decoding

Fig. 13

Depthmap source
Pre-process
Compress (e.g., image/jpeg, image/png)
Metadata

Fig. 14

Target depth image, d_hat(x,y)
255
255
255
255
0
0
0
0
Source depth image, d(x,y)
1023
511
255
767
256
512
0
768
Source depth sub-ranges integer mask, M(x,y)
Index=0
Index=1
Index=2
index=3
Reconstructed depth image, d_rec(x,y)
d_rec(x,y) = d_hat(x,y) + min(R(M(x,y)))
d_rec(x,y) = d(x,y)
Source depth sub-ranges, R
R = {[0, 255], [256, 511], [512, 767], [768, 1023]}

Fig. 15

0
250
500
750
1000
1250
1500
1750
2000
0
500
1000
1500

0
250
500
750
1000
1250
1500
1750
2000
0
500
1000
1500

0
250
500
750
1000
1250
1500
1750
2000
0
500
1000
1500

Fig. 16

```
# Source depth image as a numpy array
mat_in = np.asarray(source_depth_image)

# Step 2: Define source depth range, number of source depth sub-ranges, and source depth sub-range length (i.e., each source depth sub-range has the same length)
source_range = 4096
num_source_subranges = 16
source_subrange = source_range/num_source_subranges

# Create target depth image and integer mask for association information between source depth image samples and source depth sub-ranges
mask_out = np.zeros((mat_in.shape))
mat_out = mat_in
```

```
for i in range(1, num_source_subranges):
    idx = (mat_in >= i* source_subrange) & (mat_in < (i+1)* source_subrange)
    # Step 3: Source depth sub-ranges integer mask
    mask_out = np.where(idx, i, mask_out)
    # Step 4: Target depth image
    mat_out = np.where(idx, mat_in - i* source_subrange, mat_out)
```

Fig. 17

```
# Step 4: Reconstruct source depth image from target depth image, source depth sub-
ranges integer mask, and source depth sub-ranges
mat_in_rec = mat_out
for i in range(1, num_source_subranges):
    mat_in_rec = np.where(mask_out == i, mat_out + i* source_subrange, mat_in_rec)
```

Fig. 18

Y'
Cb+Cr
Y'CbCr
4:4:4
4:2:2
4:2:0
4:1:1

Fig. 19

50
51
52
53
54
55
56
57
58
59
60
61
62
63
64
65
Y(x,y)
0
0
1
3
0
1
2
3
1
2
2
3
3
3
3
3
M(x,y)
0
0
1
3
0
1
2
3
1
2
2
3
3
3
3
3
U(x,y)
V(x,y)

YUV 4:4:4

Fig. 20

50
51
52
53
54
55
56
57
58
59
60
61
62
63
64
65
Y(x,y)
0
0
1
3
0
1
2
3
1
2
2
3
3
3
3
3
M(x,y)
U(x,y)
0
0
1
3
0
1
2
3
1
2
2
3
3
3
3
3
V(x,y)

YUV 4:4:4

Fig. 21

50
51
52
53
54
55
56
57
58
59
60
61
62
63
64
65
0
0
1
3
0
1
2
3
1
2
2
3
3
3
3
3
0
0
0
2
0
0
2
2
0
2
2
2
2
2
2
2
0
0
1
1
0
1
0
1
1
0
0
1
1
1
1
1
Y(x,y)
M(x,y)
U(x,y)
V(x,y)

YUV 4:4:4

Fig. 22

50
51
52
53
54
55
56
57
58
59
60
61
62
63
64
65
0
0
1
3
0
1
2
3
1
2
2
3
3
3
3
3
31
31
95
223
31
95
159
223
95
159
159
223
223
223
223
223
Y(x,y)
M(x,y)
U(x,y)
V(x,y)

YUV 4:4:4

Fig. 23

50
51
52
53
54
55
56
57
58
59
60
61
62
63
64
65
Y(x,y)
0
0
1
3
0
1
2
3
1
2
2
3
3
3
3
3
M(x,y)
0
1
0
2
1
2
3
3
U(x,y)
0
3
1
3
2
3
3
3
V(x,y)

YUV 4:2:2

Fig. 24

50
51
52
53
54
55
56
57
58
59
60
61
62
63
64
65
Y(x,y)
0
0
1
3
0
1
2
3
1
2
2
3
3
3
3
3
M(x,y)
0
3
1
3
2
3
3
3
U(x,y)
0
1
0
2
1
2
3
3
V(x,y)

YUV 4:2:2

Fig. 25

50 51 52 53
54 55 56 57
58 59 60 61
62 63 64 65
Y(x,y)

0 0 1 3
0 1 2 3
1 2 2 3
3 3 3 3
M(x,y)
A H
B L
G L
P P
U(x,y)

- -
- -
- -
- -
V(x,y)

YUV 4:2:2

Fig. 26

50
51
52
53
54
55
56
57
58
59
60
61
62
63
64
65
Y(x,y)
0
0
1
3
0
1
2
3
1
2
2
3
3
3
3
3
M(x,y)
7
119
23
183
103
183
247
247
U(x,y)
-
V(x,y)

YUV 4:2:2

Fig. 27

50
51
52
53
54
55
56
57
58
59
60
61
62
63
64
65
Y(x,y)

0
0
1
3
0
1
2
3
1
2
2
3
3
3
3
3
M(x,y)
A
B
G
P
U(x,y)
H
L
L
P
V(x,y)

YUV 4:2:0

Fig. 29

50
51
52
53
54
55
56
57
58
59
60
61
62
63
64
65
Y(x,y)
0
0
1
3
0
1
2
3
1
2
2
3
3
3
3
3
M(x,y)
A
G
H
L
U(x,y)
B
P
L
P
V(x,y)

YUV 4:2:0

Fig. 30

50 51 52 53
54 55 56 57
58 59 60 61
62 63 64 65
Y(x,y)
0 0 1 3
0 1 2 3
1 2 2 3
3 3 3 3
M(x,y)
7 103
119 183
U(x,y)
23 247
183 247
V(x,y)

YUV 4:2:0

Fig. 31

| Y(0,0) | Y(0,1) |
| --- | --- |
| Y(1,0) | Y(1,1) |

U(0,0)

V(0,0)

Fig. 32

| Y(0,0) = 1 | Y(0,1) = 1 |
| --- | --- |
| Y(1,0) = 0 | Y(1,1) = 0 |

U(0,0) = 1

V(0,0) = 0

| Y(0,0) = 0 | Y(0,1) = 0 |
| --- | --- |
| Y(1,0) = 1 | Y(1,1) = 1 |

U(0,0) = 0

V(0,0) = 1

Fig. 33

ISOBMFF File
trak
'hdlr'
handler_type=vide
'hev1'
'tkhd'
track_id=0
trak
'hdlr'
handler_type=meta
'sdse'
'tkhd'
track_id=1
'tref'
'cdsc'
track_IDs=0
mdat
Video sample
(Target depth image samples)
...
mdat
Metadata sample
(Source depth sub-ranges information sample)
Metadata sample
(Source depth sub-ranges information samples)

Fig. 34

ISOBMFF File
trak
'hdlr'
handler_type=vide
'hev1'
'tkhd'
track_id=0
trak
'hdlr'
handler_type=auxv
'hev1'
'tkhd'
track_id=1
'tref'
'sdrt'
track_IDs=0
mdat
Video sample
(Target depth image samples)
Video sample
(Target depth image samples)
...
Video sample
(Target depth image samples)
mdat
Video sample
(Source depth sub-ranges information sample)
Video sample
(Source depth sub-ranges information samples)
...
Video sample
(Source depth sub-ranges information samples)

Fig. 35

ISOBMFF File
trak
'hdlr'
handler_type=vide
'hevl'
'tkhd'
track_id=0
trak
'hdlr'
handler_type=auxv
'hevl'
'sdbx'
'tkhd'
track_id=1
'tref'
'sdrt'
track_IDs=0
mdat
Video sample (Target depth image samples)
Video sample (Target depth image samples)
...
Video sample (Target depth image samples)
mdat
Video sample (Source depth sub-ranges information sample)
Video sample (Source depth sub-ranges information samples)
...
Video sample (Source depth sub-ranges information samples)

Fig. 36

| 0 | 0 | 0 | 13 |
|---|---|---|---|
| 0 | 0 | 13 | 13 |
| 0 | 13 | 13 | 13 |
| 0 | 0 | 13 | 13 |

| 13 | 13 | 13 | 13 |
|---|---|---|---|
| 13 | 13 | 13 | 13 |
| 13 | 13 | 13 | 13 |
| 13 | 13 | 13 | 13 |

Fig. 37

10
11
12
13
41
43
47
50

Fig. 38

20
21
48
23
41'
22
51

Fig. 39

50
51
52
53
54
55
56
57
58
59
60
61
62
63
64
65
Y(x,y)
0
0
1
3
0
1
2
3
1
2
2
3
3
3
3
3
M(x,y)
A
G
H
L
U(x,y)
B
P
L
P
V(x,y)

YUV 4:2:0

Fig. 28

704
702
encoder
.....
.....
decoder
600
700
500

Fig. 40

900
901
computing unit
902
ROM
903
RAM
904
905
I/O interface
906
input unit
907
output unit
908
storage unit
909
communica-tion unit

Fig. 41

# EUROPEAN SEARCH REPORT

Application Number
EP 24 31 5398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRATAPA SRIHARI PSRIHARIV@CS UNC EDU ET AL: "RANDM: Random Access Depth Map Compression Using Range-Partitioning and Global Dictionary", SYMPOSIUM ON INTERACTIVE 3D GRAPHICS AND GAMES, ACMPUB27, NEW YORK, NY, USA, 5 May 2020 (2020-05-05), pages 1-11, XP058475376, DOI: 10.1145/3384382.3384524 ISBN: 978-1-4503-7589-4 * abstract * * section III * | 1-15 | INV. H04N19/597 H04N19/70 H04N19/98 |
| X | MIAO DAN ET AL: "Layered Compression for High-Precision Depth Data", IEEE TRANSACTIONS ON IMAGE PROCESSING, IEEE, USA, vol. 24, no. 12, 1 December 2015 (2015-12-01), pages 5492-5504, XP011586941, ISSN: 1057-7149, DOI: 10.1109/TIP.2015.2481324 [retrieved on 2015-10-13] * the whole document * | 1-15 | TECHNICAL FIELDS SEARCHED (IPC) H04N |
| A | WO 2017/112375 A1 (QUALCOMM INC [US]) 29 June 2017 (2017-06-29) * paragraphs [0056] - [0061] * | 3,6 | |

-/--

The present search report has been drawn up for all claims

1

| Place of search | Date of completion of the search | Examiner |
|---|---|---|
| The Hague | 31 January 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EUROPEAN SEARCH REPORT

Application Number
EP 24 31 5398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Report of the 108th Meeting in Valencia, Spain", 108. MPEG MEETING; 20140331 - 20140404; VALENCIA; (MOTION PICTURE EXPERT GROUP OR ISO/IEC JTC1/SC29/WG11), , no. n14310 13 February 2015 (2015-02-13), XP030271705, Retrieved from the Internet: URL:http://phenix.int-evry.fr/mpeg/doc_end_user/documents/108_Valencia/wg11/w14310-v2-w14310.zip w14310.doc [retrieved on 2015-02-13] * page 91, point 18.1.2 * ----- | 7 | |
| A | THOMAS (XIAOMI) E ET AL: "AHG9: Carriage of depth and alpha maps as HEVC single-layer bitstreams", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0144 25 January 2024 (2024-01-25), XP030314089, Retrieved from the Internet: URL:https://jvet-experts.org/doc_end_user/documents/33_Teleconference/wg11/JVET-AG0144-v3.zip JVET-AG0144-v3.docx [retrieved on 2024-01-25] * abstract * ----- | 8 | TECHNICAL FIELDS SEARCHED (IPC) |
| A | US 2011/122225 A1 (KIM JAE HOON [US] ET AL) 26 May 2011 (2011-05-26) * paragraphs [0027] - [0034] * ----- | 8 | |

The present search report has been drawn up for all claims

1

| Place of search | Date of completion of the search | Examiner |
|---|---|---|
| The Hague | 31 January 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 31 5398

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2025

| Patent document cited in search report | Publication date | Patent family member(s) | Publication date |
|---|---|---|---|
| WO 2017112375 A1 | 29-06-2017 | BR 112018012574 A2 | 04-12-2018 |
| | | CN 108369729 A | 03-08-2018 |
| | | EP 3394827 A1 | 31-10-2018 |
| | | JP 6513887 B2 | 15-05-2019 |
| | | JP 2019501390 A | 17-01-2019 |
| | | KR 20180098260 A | 03-09-2018 |
| | | US 2017178332 A1 | 22-06-2017 |
| | | WO 2017112375 A1 | 29-06-2017 |
| US 2011122225 A1 | 26-05-2011 | CN 102792699 A | 21-11-2012 |
| | | KR 20120085326 A | 31-07-2012 |
| | | US 2011122225 A1 | 26-05-2011 |
| | | WO 2011063397 A1 | 26-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Perpendicular distance. *Wikipedia*, 19 July 2024, https://en.wikipedia.org/wiki/Perpendicular_distance
- *ARCore*, 19 July 2024, https: //developers. google. com/ar/develop/j ava/depth/developer-guide
- ArFrame_acquireDepthImage16Bits. *ARCore*, 19 July 2024, https://developers.google.com/ar/reference/c/group/ar-frame#arframe_acquiredepthimage16bits
- *Intel RealSense D400 Series Product Family Datasheet*, 19 July 2024, https://dev.intelrealsense.com/-docs/intel-realsense-d400-series-product-family-datasheet
- *Use Azure Kinect Sensor SDK to record file format*, 19 July 2024, https://learn.microsoft.com/en-us/azure/-kinect-dk/record-file-format
- *Azure Kinect DK coordinate systems*, 19 July 2024, https://learn.microsoft.com/en-us/azure/kinect-dk/coordinate-systems
- *Azure Kinect DK hardware specifications*, 19 July 2024, https://learn.microsoft.com/en-us/azure/kinect-dk/hardware-specification
- *Use Azure Kinect Sensor SDK image transformations*, 19 July 2024, https://learn.microsoft.com/en-us/azure/kinect-dk/use-image-transformation
- **C. FEHN**. A 3D-TV approach using depth-image-based rendering (DIBR). *Proc. of VIIP*, 2003, vol. 3 (3), https://citeseerx.ist.psu.edu/document?repid=rep1&type=pdf&doi=748c4af453dac 4f48e8a749263c0796676f47570
- **Y. CHEN** ; **A. VETRO**. Next-Generation 3D Formats with Depth Map Support. *IEEE MultiMedia*, April 2014, vol. 21 (2), 90-94
- Adapting standard video codecs for depth streaming. **PECE, F.** ; **KAUTZ, J.** ; **WEYRICH, T.** Proceedings of EGVE-JVRC 2011. Eurographics Association, 2011, 59-66
- **J. FU** ; **D. MIAO** ; **W. YU** ; **S. WANG** ; **Y. LU** ; **S. LI**. Kinect-Like Depth Data Compression. *IEEE Transactions on Multimedia*, October 2013, vol. 15 (6), 1340-1352
- **OH, K.J.** ; **YEA, S.** ; **VETRO, A.** ; **HO, Y.S.** Depth reconstruction filter for depth coding. *Electronics letters*, 2009, vol. 45 (6), 305-306
- **R. KRISHNAMURTHY** ; **BING-BING CHAI** ; **HAI TAO** ; **S. SETHURAMAN**. Compression and transmission of depth maps for image-based rendering. *Proceedings 2001 International Conference on Image Processing (Cat. No.01CH37205), Thessaloniki, Greece*, 2001, vol. 3, 828-831
- Compression of depth information for 3D rendering. **ZANUTTIGH P** ; **CORTELAZZO GM**. 2009 3DTV Conference: The True Vision-Capture, Transmission and Display of 3D Video. IEEE., 04 May 2009, 1-4
- Novel coding technique for depth images using quadtree decomposition and plane approximation. **MORVAN, Y.** ; **FARIN, D.** Visual Communications and Image Processing 2005. SPIE, June 2005, vol. 5960, 1187-1194
- **WILSON, A.D.** Fast lossless depth image compression. *Proceedings of the 2017 ACM International Conference on Interactive Surfaces and Spaces*, October 2017, 100-105
- Temporal rvl: a depth stream compression method. **JUN, H.** ; **BAILENSON, J.** 2020 IEEE conference on virtual reality and 3D user interfaces abstracts and workshops (VRW). IEEE., March 2020, 664-665
- *Encoding depth and confidence*, 19 July 2024, https://developers.google.com/depthmap-metadata/encoding
- **R. DU** ; **E. TURNER** ; **M. DZITSIUK** ; **L. PRASSO** ; **I. DUARTE** ; **J. DOURGARIAN** ; **J. AFONSO** ; **J. PASCOAL** ; **J. GLADSTONE** ; **N. CRUCES**. DepthLab: Real-Time 3D Interaction With Depth Maps for Mobile Augmented Reality. *Proceedings of the 33rd Annual ACM Symposium on User Interface Software and Technology*, 2020, 15
- *Looking Glass Portrait - Looking Glass Factory*, 19 July 2024, https://lookingglassfactory.com/portrait#usecases
- *Hologram 101 - Looking Glass Documentation*, 19 July 2024, https://docs.lookingglassfactory.com/key-concepts/key-concepts
- **W. SUN** ; **L. XU** ; **O. C. AU** ; **S. H. CHUI** ; **C. W. KWOK**. An overview of free view-point depth-image-based rendering (DIBR).. *APSIPA Annual Summit and Conference*, 2010, 1023-1030, http://www.apsipa.org/proceedings_2010/pdf/APSIPA197.pdf
- *AV1 Bitstream & Decoding Process Specification*, http://aomedia.org/av1/specification

- Chroma subsampling. *Wikipedia*, 19 July 2024, https://en.wikipedia.org/wiki/Chroma_subsampling